(19) Europäisches Patentamt
European Patent Office
Office européen des brevets

(11) EP 0 985 673 B1

(12) EUROPEAN PATENT SPECIFICATION

(45) Date of publication and mention of the grant of the patent:
**22.11.2006 Bulletin 2006/47**

(51) Int Cl.:
***C07F 5/06*** *(2006.01)* ***C08F 10/00*** *(2006.01)*
***C08L 23/08*** *(2006.01)* ***C08L 23/14*** *(2006.01)*

(21) Application number: **99117418.6**

(22) Date of filing: **07.09.1999**

(54) **Modified aluminium oxy compound, polymerization catalyst and process for producing olefin polymer and alkenyl aromatic hydrocarbon polymer**

Modifizierte Aluminiumoxyverbindung, Polymerisationskatalysator, und Verfahren zur Herstellung von Olefinpolymeren und von aromatischen Kohlenstoffalkenylpolymeren

Composé oxy-aluminium modifiö, catalyseur de polymèrisation et procédé d ' obtention de polymères d' oléfines et de polymères aromatiques d'hydrocarbures d'alkényles

(84) Designated Contracting States:
**AT BE CH CY DE DK ES FI FR GB GR IE IT LI LU MC NL PT SE**

(30) Priority: **09.09.1998 JP 25528798**

(43) Date of publication of application:
**15.03.2000 Bulletin 2000/11**

(73) Proprietor: **Sumitomo Chemical Company, Limited**
**Tokyo 104-8260 (JP)**

(72) Inventors:
- **Fujita, Masayuki**
  **Ichihara-shi,**
  **Chiba (JP)**
- **Nabika, Masaaki**
  **Ichihara-shi,**
  **Chiba (JP)**
- **Miyatake, Tatsuya**
  **Ichigara-shi,**
  **Chiba (JP)**
- **Watanabe, Tsuyoshi**
  **Ichihara-shi,**
  **Chiba (JP)**
- **Seki, Yoshinori**
  **Ichihara-shi,**
  **Chiba (JP)**
- **Oi, Nobuo**
  **Narashino-shi,**
  **Chiba (JP)**

(74) Representative: **Vossius & Partner**
**Siebertstrasse 4**
**81675 München (DE)**

(56) References cited:

| | |
|---|---|
| **EP-A- 0 269 002** | **EP-A- 0 561 476** |
| **EP-A- 0 726 271** | **EP-A- 0 906 914** |
| **EP-A- 1 081 167** | **WO-A-95/32095** |
| **DE-A- 19 711 304** | **DE-A- 19 917 984** |
| **DE-A- 19 917 985** | **US-A- 5 391 793** |
| **US-A- 5 416 229** | **US-A- 5 648 440** |

- **LINDNER, EKKEHARD ET AL: "Poly (Alumosiloxanes) as Matrixes for the Immobilization of Catalytically Active Ruthenium (II) Complexes" CHEM. MATER., vol. 10, no. 1, 1998, pages 217-225, XP000990977**

Remarks:
The file contains technical information submitted after the application was filed and not included in this specification

EP 0 985 673 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a process for producing a modified aluminum oxy compound, a process for producing a polymerization catalyst containing said modified aluminum oxy compound as a component, and a process for producing a polymer with said catalyst.

Many processes for producing an olefin polymer with a polymerization catalyst using a transition metal compound(for example, a metallocene and non-metallocene compound) and an aluminum oxy compound, are well-known. For example, a process using bis(cyclopentadienyl) zirconium dichloride and methylaluminoxane, is reported in JP58/019309A. However, in order to obtain the olefin polymer at a high yield, it is necessary to add a large amount of the aluminum oxy compound such as 1000 to 10000 moles of aluminum atom per 1 mole of transition metal atom. This has lead to major problems such as a high production cost and the residue of a large amount of aluminum atoms in the olefin polymer causes a bad influence on the properties of the olefin polymer.

In order to solve these problems, many reports concerning the reduction of the amount of aluminum oxy compound used have been made. For example, processes using a transition metal compound and a combination of an aluminum oxy compound and an organoaluminum compound are reported in JP60260602A and JP60130604A. Further, a process using methylaluminoxane and an aluminum oxy compound in which at least one isobutyl group is bonded with an aluminum atom, and a metallocene complex,
is reported in JP63130601A. However, processes do not reach a sufficient solution of the above-mentioned problems.

Further, polymers obtained with these catalysts have a low molecular weight in general, and improvement has been further required for practical use.

A process using an aluminum oxy compound having an electron withdrawing group or an electron withdrawing group-containing group as an olefin polymerization catalyst component is recently reported in JP06329714A. According to this process, a highly active catalyst can be obtained, and an olefin polymer with a relatively high molecular weight can be obtained by polymerizing an olefin using said catalyst. However, the catalyst activity and the molecular weight of the olefin polymer obtained are not always sufficient, and thus provision of an aluminum oxy compound for realizing further improvement of activity and molecular weight of a polymer has been desired in order to produce an industrially useful olefin polymer.

EP-A-0 269 002 relates to fluoroalkoxyaluminium compounds of the formula $R_nAl(OR_f)_{3-n}$, wherein R is a $C_1$-$C_6$ alkyl group, $R_f$ is a $C_1$-$C_6$ fluoroalkyl group and $0 \leq n < 3$ and their use in polymerization processes.

US-A-5,391,793 relates to aryloxyaluminoxanes containing the unit $[-OAl(OR)-]_n$ where R is unsubstituted or substituted aryl, such as phenyl or naphthyl, and their use as Ziegler-Natta and Kaminsky-type olefin polymerization cocatalysts. They can be formed by reaction of a source of water with an organoaluminum compound containing the desired aryloxy moiety or by reaction of preformed aluminoxane with an organic compound, such as a phenol, containing such a moiety.

EP-A-0 726 271 relates to an organoaluminoxy product prepared by a process comprising reacting an organoaluminoxane with an ene-ol compound.

DE-A-197 11 304 relates to an aluminum compound-containing solid catalyst component obtained by bringing a carrier into contact with an organoaluminumoxy compound, followed by bringing this product into contact with a compound having an electron attractive group; a transition metal-containing solid catalyst component obtained by bringing the aluminum compound-containing solid catalyst component into contact with a transition metal compound; a catalyst for olefin polymerization, constituting the aluminum compound-containing solid catalyst component and an organoaluminum compound; and a method for producing an olefin polymer, which incudes polymerizing or copolymerizing an olefin using the catalyst for olefin polymerization.

EP-A-2 081 167 relates to an olefin polymerization catalyst and to a process for producing olefin polymer. The olefin polymerization catalyst is prepared by contacting a specified transition metal compound(A) having a cyclopentadiene type anion skeletons in its molecule with a modified aluminum oxy compound (B) obtained by reacting an aluminum oxy compound (B1) with a compound having a hydroxyl group (B2).

An object of the present invention is to provide a modified aluminum oxy compound that is useful as a component of an olefin polymerization catalyst , which catalyst is capable of producing a high molecular weight olefin polymer with high efficiency, and is prepared by contacting a transition metal compound with the modified aluminum compound.

Further, other objects of the present invention are to provide a highly active olefin polymerization catalyst component using said aluminum oxy compound, a process for producing a high molecular weight olefin polymer with said polymerization catalyst, a process for producing an alkenyl aromatic hydrocarbon polymer with said polymerization catalyst and an alkenyl aromatic hydrocarbon copolymer of high molecular weight.

Namely, the present invention relates to a process for producing a modified aluminum oxy compound, as defined in claims 1 to 6 ; a process for producing a polymerization catalyst according to claims 7 to 9. Further, the present invention relates to a process for producing an olefin polymer which comprises homopolymerizing an olefin or copolymerizing olefins with said polymerization catalyst, and a process for producing an alkenyl aromatic hydrocarbon polymer

which comprises homopolymerizing an alkenyl aromatic hydrocarbon or copolymerizing an alkenyl aromatic hydrocarbon and an olefin with said polymerization catalyst.

Fig. 1 shows an $^{27}$Al-solid NMR spectrum of a sample obtained by drying MMAO3A(toluene solution, manufactured by TOSOH-AKZO Co., Ltd.) used as in Example 1, under reduced pressure. The ratio of H2 to H1 was 0.27 from this spectrum.
Fig. 2 shows an $^{27}$Al-solid NMR spectrum of a sample obtained by drying a reaction product obtained by mixing MMAO3A(toluene solution, manufactured by TOSOH-AKZO Co., Ltd.) and water with stirring as in Example 1, under reduced pressure. The ratio of L2 to L1 was 0.75 from this spectrum.
Fig. 3 shows an $^{27}$Al-solid NMR spectrum of a sample obtained by drying a reaction product obtained by mixing MMAO3A(toluene solution, manufactured by TOSOH-AKZO Co., Ltd.) and water with stirring and then adding pentafluorophenol thereto with stirring as in Example 1, under reduced pressure. The ratio of M2 to M1 was 1.26 from this spectrum.
Fig. 4 shows an $^{27}$Al-solid NMR spectrum of a sample obtained by drying a reaction product obtained by mixing MMAO3A(toluene solution, manufactured by TOSOH-AKZO Co., Ltd.) and pentafluorophenol with stirring as in Example 2, under reduced pressure. The ratio of N2 to N1 was 0.57 from this spectrum.
Fig. 5 shows an $^{27}$Al-solid NMR spectrum of a sample obtained by drying a reaction product obtained by mixing MMAO3A(toluene solution, manufactured by TOSOH-AKZO Co., Ltd.) and pentafluorophenol with stirring and then adding water with stirring as in Example 2, under reduced pressure. The ratio of M2 to M1 was 0.70 from this spectrum.
Fig. 6 shows an $^{27}$Al-solid NMR spectrum of a sample obtained by drying a reaction product obtained by simultaneously mixing MMAO3A(manufactured by TOSOH-AKZO Co., Ltd.), water and pentafluorophenol with stirring as in Example 25, under reduced pressure. The ratio of M2 to M1 was 1.04 from this spectrum. H1, H2, L1, L2, M1, M2, N1 and N2 are as defined below.

The present invention is illustrated in detail below.

(A)Modified aluminum oxy compound

The modified aluminum oxy compound (A) of the present invention is a modified aluminum oxy compound in which an aluminum oxy compound is modified with a compound having a hydroxy group, and in which the ratio [M2/M1] of the intensity (M2) at 30 ppm to the intensity(M1) at 10 ppm of the spectrum in the $^{27}$Al-solid NMR is 0.60 or more. Herein, the solid NMR spectrum means a NMR spectrum obtained by measuring a solid sample at a magic angle spinning using a high speed rotation . In the present invention, the $^{27}$Al-solid NMR spectrum measurement of the modified aluminum oxy compound or an aluminum oxy compound is conducted as follows:
When the modified aluminum oxy compound or aluminum oxy compound obtained is in a solution state dissolved in a solvent, the solvent is removed by a known method such as a reduced-pressure drying, to dry and solidify the modified aluminum oxy compound or aluminum oxy compound. Herein-after, the modified aluminum oxy compound or aluminum oxy compound dried and solidified is sometimes referred to as "solid NMR measurement sample".
In a nitrogen box or a glove box, the solid NMR measurement sample was packed in a rotation cell(,or a spinner or a rotor) for solid NMR measurement in an appropriate amount so that the cell can be stably rotated. A solid NMR spectrum at a magnetic field intensity of 7.0T ($^{1}$H observation magnetic field intensity at 300 MHz) is measured using a solid NMR spectrometer in which the cell is capable of high speed rotating with a nitrogen gas or an inert gas. The sample is measured under a cell rotation speed of 8 kHz or more, preferably 12 to 15 kHz. As the standard of the chemical shift, the peak appeared in high magnetic field side of an active alumina is determined as 7 ppm. The width of the spectrum is set to 400 ppm or more, preferably 600 to 1000 ppm as a chemical shift width of $^{27}$Al, considering that the group of peaks to be measured can be measured. The pulse width is set to smaller than the 90° pulse width used in a solution $^{27}$Al-NMR spectrum. The pulse interval is determined so that the relaxation does not occur.
As a measurement pulse sequences , there is illustrated a single pulse method without decoupling, for example, a pulse sequence is a HPDEC without decoupling. The measurement is usually carried out room at temperature(about 20 to about 25°C). In the case of solid NMR measurement of $^{27}$Al nucleus, shapes of peaks and the chemical shift depend on magnetic field intensity due to an interaction of secondary quadrupole of nucleus.
Due to the reason as above, for comparisons of spectra measured, it is necessary that measurements of $^{27}$Al-solid NMR of various solid NMR samples are carried out at the same magnetic field intensity.
After the measurement, the data are subjected to Fourier transfer to obtain an $^{27}$Al-solid NMR spectrum. In the obtained $^{27}$Al-solid NMR spectrum, the phase and baseline correction thereof are compensated so that the heights of bases of the highest magnetic field peak group and the lowest magnetic field peak group among peak groups appeared from a vicinity of -150 ppm to a vicinity of 150ppm, are mutually made the same height, and the spectrum of a part in which no peak is observed in regions -150 ppm under and 150 ppm over, become parallel to the chemical shift axis

(axis of abscissa) as far as possible. The baseline as a standard is drawn between bases of the highest magnetic field peak group and the lowest magnetic field peak group. A vertical line is drawn at 10 ppm to the chemical shift axis (axis of abscissa), The intensity M1 is defined as a distance between the intersecting point of the vertical line with baseline and the intersecting point of the vertical line with the spectrum. And, when a vertical is drawn at 30 ppm to the chemical shift axis (axis of abscissa), the intensity M2 is defined as a distance between the intersecting point of the vertical line with the baseline and the intersecting point of the vertical line with the spectrum. Further, H1 and H2, L1 and L2, and N1 and N2(these are as defined below) can be determined by the same method as above.

The modified aluminum oxy compound of the present invention has a ratio of M2/M1 calculated from these values above of 0.60 or more, preferably 0.65 or more, most preferably 0.70 to 1.5. The modified aluminum oxy compound of the present invention satisfies the scope of M2/M1 described above, and is one modified with a compound having a hydroxy group. The modified aluminum oxy compound of the present invention is obtained by reacting an aluminum oxy compound (a) having a ratio of an intensity(H2) at 30 ppm to a intensity(H1) at 10 ppm of less than 0.35, water(b) and a compound (c) having a hydroxy group.

The present invention will be described in more detail.

(a) Aluminum oxy compound

As the aluminum oxy compound used as a raw material of the modified aluminum oxy compound of the present invention, there is illustrated an aluminum oxy compound having a ratio of the intensity(H2) at 30 ppm to the intensity (H1) at 10 ppm, in the $^{27}$Al-solid NMR spectrum, of less than 0.35.

As (a) aluminum oxy compound used in the present invention, an aluminum oxy compound soluble in an aromatic hydrocarbon or an aliphatic hydrocarbon which is represented by the general formula (1) or (2) described below, is used.

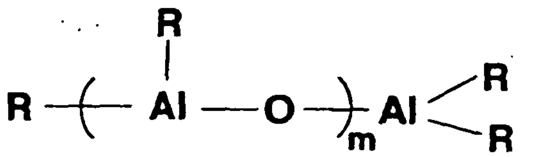

(1)

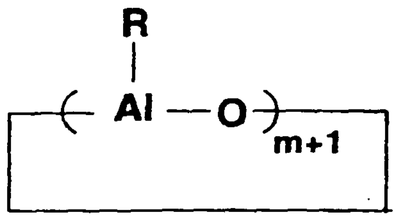

(2)

(wherein each of the R groups respectively indicates a hydrocarbon group having 1 to 20 carbon atoms, which R groups may be the same or different, and m represents a number of 1 to 50.)

The hydrocarbon group in the above-mentioned general formula (1) or (2) includes an alkyl group, alkenyl group, aryl group and aralkyl group having up to 20 carbon atoms, and an alkyl group having 1 to 20 carbon atoms is preferable.

The specific examples thereof include methylaluminoxane, ethylaluminoxane, propylaluminoxane, butylaluminoxane, isobutylaluminoxane, methylethylaluminoxane, methylbutylaluminoxane and methylisobutylaluminoxane, are exemplified. Most of these compounds are commercially available or can be synthesized by well-known methods. Among them, methylisobutyl aluminoxane is preferable in particular, R in the above-mentioned general formula (1) or (2) represents a methyl group or an isobutyl group in respective cases. An aluminum oxy compound in which the existence ratio of a methyl group as R to an isobutyl group as R (methyl group/isobutyl group) is (5 to 95)/(95 to 5) is more preferable, and the ratio is preferably (10 to 90)/(90 to 10) in particular.

These aluminum oxy compounds may be used alone or in combination of 2 or more kinds.

(b) Water

When the modified aluminum oxy compound of the present invention is produced, a water(b) is used. The water(b) is preferably a distilled water or de-ionized water. When water(b) is used in the present invention, it is unknown in detail why the molecular weight of the aluminum oxy compound seems to increase, and the viscosity thereof increases , and as the case may be, the precipitation of a solid, are observed. (c)Compound having hydroxyl group

The compound(c) having a hydroxyl group used in preparation of the modified aluminum oxy compound (A) of the present invention, is a compound having at least one hydroxyl group in its molecule, and is an organic compound having a hydroxyl group. An alcohol compound, a phenol compound or a silanol compound is more preferable. Herein, the alcohol compound preferably includes a compound indicated by the general formula below:

$$CR^1R^2R^3\text{-OH}$$

(wherein each of $R^1$, $R^2$ and $R^3$ independently represents a hydrogen atom or a hydrocarbon group having 1 to 20 carbon atoms, and they may be mutually the same or different.)

The hydrocarbon group in the above-mentioned general formula includes an alkyl group, an aralkyl group and an aryl group, and these groups may be optionally substituted with a halogen atom.

Tertiary alcohols and alcohols substituted with a halogen atom are preferable, and in particular, tert-butyl alcohol, triphenylmethanol, tricyclohexylmethanol or 1,1,1,3,3,3-hexafluoroisopropanol is preferable.

Further, as the phenol compound, non-substituted phenols or substituted phenols can be used. Wherein the substituent includes a halogen atom, an alkyl group, aralkyl group, aryl group, silyl group, alkoxy group, aralkyloxy group, aryloxy group or silyloxy group which may be substituted with a halogen atom.

Specific examples of such phenol compound include 2-substituted phenols such as 2-methylphenol, 2-ethylphenol, 2-n-butylphenol, 2-isobutylphenol, 2-tert-butylphenol, 2-n-propylphenol, 2-isopropylphenol, 2-phenylphenol, 2-fluorophenol, 2-chlorophenol and 2-bromophenol; 3-substituted phenols such as 3-methylphenol, 3-ethylphenol, 3-n-butylphenol, 3-isobutylphenol, 3-tert-butylphenol, 3-n-propylphenol, 3-isopropylphenol, 3-phenylphenol, 3-fluorophenol, 3-chlorophenol and 3-bromophenol; 4-substituted phenols such as 4-methylphenol, 4-ethylphenol, 4-n-butylphenol, 4-isobutylphenol, 4-tert-butylphenol, 4-n-propylphenol, 4-isopropylphenol, 4-phenylphenol, 4-fluorophenol, 4-chlorophenol and 4-bromophenol; 2,6-substituted phenols such as 2,6-dimethylphenol, 2,6-diethylphenol, 2,6-di-n-butylphenol, 2,6-diisobutylphenol, 2,6-di-tert-butylphenol, 2,6-di-n-propylphenol, 2,6-diisopropylphenol, 2,6-diphenylphenol, 2,6-difluorophenol, 2,6-dichlorophenol and 2,6-dibromophenol; 2,6,X-substituted phenols (X is one or more numerals selected from 3, 4 and 5) such as 2,4,6-trimethylphenol, 2,6-di-tert-butyl-4-methylphenol, 2,3,5,6-tetrafluorophenol and pentafluorophenol; like; 2,3-substituted phenols such as 2,3-difluorophenol; 2,4-substituted phenols such as 2,4-difluorophenol; 3,5-substituted phenols such as 3,5-dimethylphenol, 3,5-diethylphenol, 3,5-di-n-butylphenol, 3,5-diisobutylphenol, 3,5-di-tert-butylphenol, 3,5-di-n-propylphenol, 3,5-diisopropylphenol, 3,5-diphenylphenol, 3,5-difluorophenol, 3,5-dichlorophenol and 3,5-dibromophenol; phenols having 2 or more hydroxy groups such as catechol, resorcinol, hydroquinone, bisphenol-A and 2,2-thiobis-6-tert-butyl-4-methylphenol.

As the phenol compound, a phenol having bulky substituents at 2,6-position or a halogenated phenol is preferable, and in particular, pentafluorophenol is preferable.

Further, the silanol is preferably a compound represented by the general formula below:

$$S\ i\ R^4R^5R^6\text{-OH}$$

(wherein each of $R^4$, $R^5$ and $R^6$ dependently represents a hydrogen atom or a hydrocarbon group having 1 to 20 carbon atoms, they may be mutually the same or different.)

The hydrocarbon group in the above-mentioned general formula includes an alkyl group, an aralkyl group and an aryl group, and these groups may be optionally substituted with a halogen atom.

A tertiary silanol or a silanol substituted with a halogen atom is preferred, and triphenylsilanol or tricyclohexylsilanol is more preferred.

As the compound(c) having a hydroxyl group used in the present invention, an alcohol compound or a phenol compound is preferable, and in particular, pentafluorophenol, triphenylmethanol, tricyclohexylmethanol or 1,1,1,3,3,3-hexafluoroisopropanol is preferable.

These compounds having a hydroxyl group may be used alone or in combination of 2 or more kinds.

(d) Preparation of modified aluminum oxy compound (A)

The modified aluminum oxy compound (A) of the present invention is obtained by reacting (a) an aluminum oxy compound having a ratio of the intensity(H2) at 30 ppm in the $^{27}$Al-solid NMR spectrum to the intensity(H1) at 10

ppm in that of less than 0.35, (b) water and (c) an organic compound having a hydroxyl group.

The reaction is preferably carried out in an inert gas atmosphere. The reaction temperature is not specifically limited, but is usually -80°C to 200°C and preferably -50°C to 120°C. The reaction time is usually 1 minute to 12 hours and preferably 2 minutes to 1 hour. Further, in this reaction, a solvent may be used, and these reactants (a), (b) and (c) may be directly reacted without a solvent. The solvent used is not specifically limited, and includes an aliphatic hydrocarbon solvent or an aromatic hydrocarbon solvent. Specific example thereof includes hexane, heptane, benzene, toluene or the like.

The modified aluminum oxy compound of the present invention is preferably obtained by reacting (a) the aluminum oxy compound with (b) water to obtain (a') an aluminum oxy compound having a ratio (L2/L1) of an intensity (L2) at 30 ppm in an $^{27}$Al-solid NMR spectrum to an intensity(L1) at 10 ppm in that of 0.35 or more, and then reacting (a') the resulting aluminum oxy compound with (c) an organic compound having a hydroxyl group, or by reacting (a) the aluminum oxy compound with (c) the organic compound having a hydroxyl group to obtain (a'')an aluminum oxy compound having a ratio(N2/N1) of an intensity(N2) at 30 ppm in a $^{27}$Al-solid NMR spectrum to an intensity (N1) at 10 ppm in that of 0.35 or more, and then reacting (a'') with (b) water. When the (a') the aluminum oxy compound is available, a modified aluminum oxy compound (A) is obtained by reacting the (a') with

(c) a compound having a hydroxyl group.

The ratio, L2/L1 is preferably 0.35 or more and less than 0.90, more preferably 0.35 to 0.85.

And, the ratio of (L2/L1) to (H2/H1) [(L2/L1)/(H2/H1)] is preferably 1.5 or more, more preferably 1.5 or more and less than 9.0. Further, the ratio, N2/N1 is preferably 0.35 or more and less than 0.65, more preferably 0.35 to 0.60.

The molar ratio of respective components used in the reaction is not specifically limited, and the molar ratio of the component (a)(in terms of mol of Al atom) to the component (b) ((a)/(b)) is within the range of 1 / 3 to 1 /0.01, more preferably 1/1 to 1/0.05. Further, the molar ratio of the component (a) (in terms of mol of Al atom) to the component(c) is within the range of 1/3 to 1/0.01, more preferably 1/1 to 1/0.05. The molar ratio of the component (a')(in terms of mol of Al atom) to the component (c) ((a')/(c)) is preferably within the range of 1 / 3 to 1 /0.01, more preferably 1/1 to 1/0.05. Further, the molar ratio of the component (a'')(in terms of mol of Al atom) to the component (b) is preferably within the range of 1/3 to 1/0.01, more preferably 1/1 to 1/0.05.

The modified aluminum oxy compound of the present invention obtained by the preparation method described above or the like can be used as a polymerization catalyst component after purification by isolation such as recrystallization, but the reaction solution containing the modified aluminum oxy compound can be also used as the polymerization catalyst component as it is.

The modified aluminum oxy compound of the present invention is useful as the polymerization catalyst component. Examples of the polymerization catalyst using the modified aluminum oxy compound of the present invention include the polymerization catalyst obtained by contacting (A) the modified aluminum oxy compound and (B) a transition metal compound; the polymerization catalyst obtained by contacting (A) the modified aluminum oxy compound, (B) the transition metal compound and (C) the organoaluminum compound; and the polymerization catalyst obtained by contacting (A) the modified aluminum oxy compound, (B) the transition metal compound, (C) the organoaluminum compound and (D) any one boron compounds (D1) to (D3) described below:

(D1) a boron compound represented by the general formula $BQ^1Q^2Q^3$,
(D2) a boron compound represented by the general formula $G^+(BQ^1Q^2Q^3Q^4)^-$, and
(D3) a boron compound represented by the general formula $(L\text{-}H)^+(BQ^1Q^2Q^3Q^4)^-$

(wherein B represents a boron atom in the trivalent valence state; $Q^1$ to $Q^4$ may be the same or different and represent a halogen atom, a hydrocarbon group, a halogenated hydrocarbon group, a substituted silyl group, an alkoxy group or a di-substituted amino group; $G^+$ represents an inorganic or organic cation; L represents a neutral Lewis base; and $(L\text{-}H)^+$ represents a Brφnsted acid).

The polymerization catalyst of the present invention will be described in more detail below.

(B) Transition metal compound

The transition metal compound used for the olefin polymerization catalyst of the present invention is not specifically limited so far as it is a transition metal compound having an olefin polymerization activity. A transition metal compound having a transition metal atom of the Group IV to X of the Periodic Table of the Elements and Lanthanide Series is preferable. Examples of the transition metal compound include a transition metal compound indicated by the general formula (3) described below and a μ-oxo type transition metal compound obtained by reacting the transition metal compound with water as a dimer thereof.

$$L_a M X_b \qquad (3)$$

(wherein M is a transition metal atom of the Group IV to Group X of the Periodic Table or Lanthanide Series; L is a group having a cyclopentadienyl type anion skeleton or a group containing a hetero-atom, and a plurality of L groups may be optionally linked in direct, or through a group containing a carbon atom, a silicone atom, a nitrogen atom, an oxygen atom, a sulfur atom or a phosphorus atom; X is a halogen atom or a hydrocarbon group having 1 to 20 carbon atoms; a represents a numeral satisfying an equation of $0<a\leqq 8$; b represents a numeral satisfying an equation of $0<b\leqq 8$; and a and b are properly selected so that the transition metal compound become neutral taking into account of the valency of the transition metal M and the valencies of L and X.)

In the general formula (3) representing the transition metal compound, M is a transition metal atom of the Group IV to Group X of the Periodic Table (IUPAC 1985) or Lanthanide Series. Specific examples of the transition metal atom include titanium, zirconium, hafnium, vanadium, niobium, tantalum, chromium, iron, ruthenium, cobalt, rhodium, nickel, palladium, samarium and ytterbium.

In the general formula (3) representing the transition metal compound, L is a group having a cyclopentadienyl type anion skeleton or a group containing a hetero-atom, and L groups may be the same or different. Further, L groups may be optionally linked in direct, or through a group containing a carbon atom, a silicone atom, a nitrogen atom, an oxygen atom, a sulfur atom or a phosphorus atom.

A cyclopentadienyl type anion skeleton in L includes a cyclopentadienyl group, a substituted cyclopentadienyl group, an indenyl group, a substituted indenyl group, a fluorenyl group and a substituted fluorenyl group. Examples of the group having a cyclopentadiene type anion skeleton include an $\eta^5$-(substituted)cyclopentadienyl group, an $\eta^5$-(substituted) indenyl group and an $\eta^5$-(substituted) fluorenyl group. Specific examples include an $\eta^5$-cyclopentadienyl group, an $\eta^5$-methylcyclopentadienyl group, an $\eta^5$-tert-butylcyclopentadienyl group, an $\eta^5$-1,2-dimethylcyclopentadienyl group, an $\eta^5$-1,3-dimethylcyclopentadienyl group, an $\eta^5$-1-tert-butyl-2-methylcyclopentadienyl group, an $\eta^5$-1-tert-butyl-3-methylcyclopentadienyl group, an $\eta^5$-1-methyl-2-isopropylcyclopentadienyl group, an $\eta^5$-1-methyl-3-isopropylcyclopentadienyl group, an $\eta^5$-1,2,3-trimethylcyclopentadienyl group, an $\eta^5$-1,2,4-trimethylcyclopentadienyl group, an $\eta^5$-tetramethylcyclopentadienyl group, an $\eta^5$-pentamethylcyclopentadienyl group, an $\eta^5$-indenyl group, an $\eta^5$-4,5,6,7-tetrahydroindenyl group, an $\eta^5$-2-methylindenyl group, an $\eta^5$-3-methylindenyl group, an $\eta^5$-4-methylindenyl group, an $\eta^5$-5-methylindenyl group, an $\eta^5$-6-methylindenyl group, an $\eta^5$-7-methylindenyl group, an $\eta^5$-2-tert-butylindenyl group, ain $\eta^5$-3-tert-butylindenyl group, an $\eta^5$-4-tert-butylindenyl group, an $\eta^5$-5-tert-butylindenyl group, an $\eta^5$-6-tert-butylindenyl group, an $\eta^5$-7-tert-butylindenyl group, an $\eta^5$-2,3-dimethylindenyl group, an $\eta^5$-4,7-dimethylindenyl group, an $\eta^5$-2,4,7-trimethylindenyl group, an $\eta^5$-2-methyl-4-isopropylindenyl group, an $\eta^5$-4,5-benzindenyl group, an $\eta^5$-2-methyl-4,5-benzindenyl group, an $\eta^5$-4-phenylindenyl group, an $\eta^5$-2-methyl-5-phenylindenyl group, an $\eta^5$-2-methyl-4-phenylindenyl group, ain $\eta^5$-2-methyl-4-naphthylindenyl group, an $\eta^5$-fluorenyl group, an $\eta^5$-2,7-dimethylfluorenyl group, an $\eta^5$-2,7-di-tert-butylfluorenylgroup(herein-after, $\eta^5$ may be omitted for simplifying), and substitution products thereof.

The hetero-atom in the group containing a hetero-atom includes an oxygen atom, a sulfur atom, a nitrogen atom and a phosphorus atom, and examples thereof include an alkoxy group, an aryloxy group, a thioalkoxy group, a thioaryloxy group, an alkylamino group, an arylamino group, an alkylphosphino group, an arylphosphino group, or an aromatic or aliphatic heterocyclic group having an oxygen atom, a sulfur atom, a nitrogen atom and/or a phosphorus atom, a chelating ligand.

Specific examples of the group containing a hetero-atom include a methoxy group, an ethoxy group, a n- or iso-propoxy group, a n-, sec-, iso- or tert-butoxy group, a phenoxy group, a 2-methylphenoxy group, a 2,6-dimethylphenoxy group, a 2,4,6-trimethylphenoxy group, a 2-ethylphenoxy group, a 4-n-propylphenoxy group, a 2-isopropylphenoxy group, a 2,6-diisopropylphenoxy group, a 4-sec-butylphenoxy group, a 4-tert-butylphenoxy group, a 2,6-di-sec-butylphenoxy group, a 4-tert-butyl-4-methylphenoxy group, a 2,6-di-tert-butylphenoxy group, a 4-methoxyphenoxy group, a 2,6-dimethoxyphenoxy group, a 3,5-dimethoxyphenoxy group, a 2-chlorophenoxy group, a 4-nitrosophenoxy group, a 4-nitrophenoxy group, a 2-aminophenoxy group, a 3-aminophenoxy group, a 4-aminothiophenoxy group, a 2,3,6-trichlorophenoxy group, a 2,4,6-trifluorophenoxy group, a thiomethoxy group, a dimethylamino group, a diethylamino group, a di-n- or iso-propylamino group, a diphenylamino group, an isopropylamino group, a tert-butylamino group, a pyrrolyl group, a dimethylphosphino group, a 2-(2-oxy-1-propyl)phenoxy group, catechol, resorcinol, 4-isopropylcatechol, 3-methoxycatechol, a 1,8-dihydroxynahpthyl group, a 1,2-dihydroxynahpthyl group, a 2,2'-biphenyldiol group, a 1,1'-bi-2-naphthol group, a 2,2'-dihydroxy-6,6'-dimethylbiphenyl group, a 4,4',6,6'-tetra-tert-butyl-2,2'-methylenediphenoxy group and a 4,4', 6,6'-tetramethyl-2,2'-isobutylidenediphenoxy group.

Further, the chelating ligand means a ligand having a plural number of coordinating positions, and specific examples include acetylacetonate, diimine, oxazoline, bisoxazoline, terpyridine, acylhydrazone, diethylenetriamine, triethylenetetramine, porphyrin, a crown ether and a cryptate.

The mutual groups having the cyclopentadienyl type anion skeleton, the group having a cyclopentadienyl type

anion skeleton and the group containing a hetero-atom, or the mutual groups containing a hetero-atom may be directly linked, or may be linked through a group containing a carbon atom, a silicone atom, a nitrogen atom, an oxygen atom, a sulfur atom or a phosphorus atom, respectively. Examples of the group include alkylene groups such as an ethylene group and a propylene group, substituted alkylene groups such as a dimethylmethylene group and a diphenylmethylene group, or a silylene group, substituted silylene groups such as a dimethylsilylene group, a diphenylsilylene group and a tetramethyldisilylene group, or hetero-atoms such as a nitrogen atom, an oxygen atom, a sulfur atom and/or a phosphorus atom.

X in the general formula (3) representing the transition metal compound is a halogen atom or a hydrocarbon group having 1 to 20 carbon atoms. Specific examples of X include a fluorine atom, a chlorine atom, a bromine atom, an iodine atom, and specific examples of the hydrocarbon group having 1 to 20 carbon atoms include a methyl group, an ethyl group, a n-propyl group, an isopropyl group, a n-butyl group, a phenyl group and a benzyl group.

Among the transition metal compound, specific examples of the compound in which a transition metal is a titanium atom include
bis(cyclopentadienyl)titanium dichloride,
bis(methylcyclopentadienyl)titanium dichloride,
bis(n-butylcyclopentadienyl)titanium dichloride,
bis(dimethylcyclopentadienyl)titanium dichloride,
bis(ethylmethylcyclopentadienyl)titanium dichloride,
bis(trimethylcyclopentadienyl)titanium dichloride,
bis(tetramethylcyclopentadienyl)titanium dichloride,
bis(pentamethylcyclopentadienyl)titanium dichloride,
bis(indenyl)titanium dichloride, bis(4,5,6,7-tetrahydroindenyl)titanium dichloride,
bis(fluorenyl)titanium dichloride,
cyclopentadienyl(pentamethylcyclopentadienyl) titanium dichloride, cyclopentadienyl(indenyl) titanium dichloride, cyclopentadienyl(fluorenyl) titanium dichloride, indenyl(fluorenyl)titanium dichloride, pentamethylcyclopentadienyl (indenyl)titanium dichloride,
pentamethylcyclopentadienyl(fluorenyl)titanium dichloride, ethylenebis(cyclopentadienyl)titanium dichloride, ethylenebis(2-methylcyclopentadienyl)titanium dichloride,
ethylenebis(3-methylcyclopentadienyl)titanium dichloride, ethylenebis(2-n-butylcyclopentadienyl)titanium dichloride,
ethylenebis(3-n-butylcyclopentadienyl)titanium dichloride, ethylenebis(2,3-dimethylcyclopentadienyl)titanium dichloride,
ethylenebis(2,4-dimethylcyclopentadienyl)titanium dichloride, ethylenebis(2,5-dimethylcyclopentadienyl)titanium dichloride,
ethylenebis(3,4-dimethylcyclopentadienyl)titanium dichloride, ethylenebis(2,3-ethylmethylcyclopentadienyl)titanium dichloride,
ethylenebis(2,4-ethylmethylcyclopentadienyl)titanium dichloride,
ethylenebis(2,5-ethylmethylcyclopentadienyl)titanium dichloride,
ethylenebis(3,5-ethylmethylcyclopentadienyl)titanium dichloride,
ethylenebis(2,3,4-trimethylcyclopentadienyl)titanium dichloride,
ethylenebis(2,3,5-trimethylcyclopentadienyl)titanium dichloride,
ethylenebis(tetramethylcyclopentadienyl) titanium dichloride, ethylenebis(indenyl)titanium dichloride,
ethylenebis(4,5,6,7-tetrahydroindenyl)titanium dichloride, ethylenebis(2-phenylindenyl)titanium dichloride, ethylenebis (2-methylindenyl)titanium dichloride, ethylenebis(2-methyl-4-phenylindenyl)titanium dichloride, ethylenebis(2-methyl-4-naphthylindenyl)titanium dichloride,
ethylenebis(2-methyl-4,5-benzoindenyl)titanium dichloride, ethylenebis(fluorenyl)titanium dichloride, ethylene(cyclopentadienyl) (pentamethylcyclopentadienyl)titanium dichloride, ethylene(cyclopentadienyl)(indenyl)titanium dichloride, ethylene(methylcyclopentadienyl) (indenyl)titanium dichloride, ethylene(n-butylcyclopentadienyl)(indenyl)titanium dichloride,
ethylene(tetramethylcyclopentadienyl) (indenyl)titanium dichloride, ethylene(cyclopentadienyl)(fluorenyl)titanium dichloride, ethylene(methylcyclopentadienyl) (fluorenyl)titanium dichloride, ethylene (pentamethylcyclopentadienyl)(fluorenyl) titanium dichloride, ethylene(n-butylcyclopentadienyl) (fluorenyl)titanium dichloride, ethylene (tetramethylpentadienyl) (fluorenyl)titanium dichloride, ethylene(indenyl)(fluorenyl)titanium dichloride, isopropylidenebis(cyclopentadienyl) titanium dichloride, isopropylidenebis(2-methylcyclopentadienyl)titanium dichloride,
isopropylidenebis(3-methylcyclopentadienyl)titanium dichloride, isopropylidenebis(2-n-butylcyclopentadienyl)titanium dichloride,
isopropylidenebis(3-n-butylcyclopentadienyl)titanium dichloride,
isopropylidenebis(2,3-dimethylcyclopentadienyl)titanium dichloride,
isopropylidenebis(2,4-dimethylcyclopentadienyl)titanium dichloride,

isopropylidenebis(2,5-dimethylcyclopentadienyl)titanium dichloride,
isopropylidenebis(3,4-dimethylcyclopentadienyl)titanium dichloride, isopropylidenebis(2,3-ethylmethylcyclopentadienyl)titanium dichloride,
isopropylidenebis(2,4-ethylmethylcyclopentadienyl)titanium dichloride,
isopropylidenebis(2,5-ethylmethylcyclopentadienyl)titanium dichloride,
isopropylidenebis(3,5-ethylmethylcyclopentadienyl)titanium dichloride,
isopropylidenebis(2,3,4-trimethylcyclopentadienyl)titanium dichloride,
isopropylidenebis(2,3,5-trimethylcyclopentadienyl)titanium dichloride, isopropylidenebis(tetramethylcyclopentadienyl)-titanium dichloride, isopropylidenebis(indenyl) titanium dichloride, isopropylidenebis(4,5,6,7-tetrahydroindenyl)titanium dichloride,
isopropylidenebis(2-phenylindenyl)titanium dichloride, isopropylidenebis(2-methylindenyl)titanium dichloride,
isopropylidenebis(2-methyl-4-phenylindenyl)titanium dichloride, isopropylidenebis(2-methyl-4-naphthylindenyl)titanium dichloride,
isopropylidenebis(2-methyl-4,5-benzoindenyl)titanium dichloride,
isopropylidenebis(fluorenyl)titanium dichloride, isopropylidene(cyclopentadienyl) (tetramethylcyclopentadienyl)titanium dichloride,
isopropylidene(cyclopentadienyl)(indenyl)titanium dichloride, isopropylidene(methylcyclopentadienyl) (indenyl)titanium dichloride, isopropylidene(n-butylcyclopentadienyl)(indenyl)titanium dichloride,
isopropylidene(tetramethylcyclopentadienyl) (indenyl)titanium dichloride, isopropylidene (cyclopentadienyl)(fluorenyl)titanium dichloride, isopropylidene(methylcyclopentadienyl)(fluorenyl)ti tanium dichloride, isopropylidene(n-butylcyclopentadienyl)(fluorenyl)titanium dichloride,
isopropylidene (tetramethylcyclopentadienyl) (fluorenyl)titanium dichloride, isopropylidene (indenyl)(fluorenyl)titanium dichloride,
dimethylsilylenebis(cyclopentadienyl)titanium dichloride, dimethylsilylenebis(2-methylcyclopentadienyl)titanium dichloride,
dimethylsilylenebis(3-methylcyclopentadienyl)titanium dichloride,
dimethylsilylenebis(2-n-butylcyclopentadienyl)titanium dichloride,
dimethylsilylenebis(3-n-butylcyclopentadienyl)titanium dichloride,
dimethylsilylenebis(2,3-dimethylcyclopentadienyl)titanium dichloride,
dimethylsilylenebis(2,4-dimethylcyclopentadienyl)titanium dichloride,
dimethylsilylenebis(2,5-dimethylcyclopentadienyl)titanium dichloride,
dimethylsilylenebis(3,4-dimethylcyclopentadienyl)titanium dichloride,
dimethylsilylenebis(2,3-ethylmethylcyclopentadienyl)titanium dichloride,
dimethylsilylenebis(2,4-ethylmethylcyclopentadienyl)titanium dichloride,
dimethylsilylenebis(2,5-ethylmethylcyclopentadienyl)titanium dichloride,
dimethylsilylenebis(3,5-ethylmethylcyclopentadienyl)titanium dichloride,
dimethylsilylenebis(2,3,4-trimethylcyclopentadienyl)titanium dichloride,
dimethylsilylenebis(2,3,5-trimethylcyclopentadienyl)titanium dichloride, dimethylsilylenebis(tetramethylcyclopentadienyl)-titanium dichloride,
dimethylsilylenebis(indenyl)titanium dichloride,
dimethylsilylenebis(4,5,6,7-tetrahydroindenyl)titanium dichloride,
dimethylsilylenebis(2-methylindenyl)titanium dichloride, dimethylsilylenebis(2-methyl-4-phenylindenyl)titanium dichloride,
dimethylsilylenebis(2-methyl-4-naphthylindenyl)titanium dichloride,
dimethylsilylenebis(2-methyl-4,5-benzoindenyl)titanium dichloride,
dimethylsilylene(cyclopentadienyl)(indenyl)titanium dichloride, dimethylsilylene(methylcyclopentadienyl) (indenyl)titanium dichloride, dimethylsilylene(n-butylcyclopentadienyl)(indenyl)titanium dichloride,
dimethylsilylene(tetramethylcyclopentadienyl) (indenyl)titanium dichloride, dimethylsilylene (cyclopentadienyl)(fluorenyl)titanium dichloride,
dimethylsilylene(methylcyclopentadienyl)(fluorenyl )titanium dichloride, dimethylsilylene(n-butylcyclopentadienyl)(fluorenyl)titanium dichloride,
dimethylsilylene-(tetramethylcyclopentadienyl) (indenyl)titanium dichloride, dimethylsilylene-(indenyl)(fluorenyl)titanium dichloride,
cyclopentadienyltitanium trichloride,
pentamethylcyclopentadienyltitanium trichloride,
cyclopentadienyl(dimethylamido)titanium dichloride,
cyclopentadienyl(phenoxy)titanium dichloride,
cyclopentadienyl(2,6-dimethylphenyl)titanium dichloride, cyclopentadienyl(2,6-diisopropylphenyl)titanium dichloride,

cyclopentadienyl(2,6-di-tert-butylphenyl)titanium dichloride, pentamethylcyclopentadienyl(2,6-dimethylphenyl)titanium dichloride,
pentamethylcyclopentadienyl(2,6-diisopropylphenyl)titanium dichloride,
pentamethylcyclopentadienyl(2,6-di-tert-butylphenyl)titanium dichloride, indenyl(2,6-diisopropylphenyl)titanium dichloride, fluorenyl-(2,6-diisopropylphenyl)titanium dichloride,
methylene(cyclopentadienyl)(3,5-dimethyl-2-phenoxy)titanium dichloride,
methylene(cyclopentadienyl)(3-tert-butyl-2-phenoxy)titanium dichloride,
methylene(cyclopentadienyl)(3-tert-butyl-5-methyl-2-phenoxy)titanium dichloride,
methylene(cyclopentadienyl)(3-phenyl-2-phenoxy)titanium dichloride,
methylene(cyclopentadienyl)(3-tertbutyldimethylsilyl-5-methyl-2-phenoxy)titanium dichloride, methylene(cyclopentadienyl)(3-trimethylsilyl-5-methyl-2-phenoxy)titanium dichloride, methylene(cyclopentadienyl)(3-tert-butyl-5-methoxy-2-phenoxy)titanium dichloride,
methylene(cyclopentadienyl)(3-tert-butyl-5-chloro-2-phenoxy)titanium dichloride,
methylene(methylcyclopentadienyl)(3,5-dimethyl-2-phenoxy)titanium dichloride,
methylene(methylcyclopentadienyl)(3-tert-butyl-2-phenoxy)titanium dichloride,
methylene(methylcyclopentadienyl)(3-tert-butyl-5-methyl-2-phenoxy)titanium dichloride,
methylene(methylcyclopentadienyl)(3-phenyl-2-phenoxy)titanium dichloride,
methylene(methylcyclopentadienyl)(3-tertbutyldimethylsilyl-5-methyl-2-phenoxy)titanium dichloride, methylene(methylcyclopentadienyl)(3-trimethylsilyl-5-methyl-2-phenoxy)titanium dichloride, methylene(methylcyclopentadienyl)(3-tert-butyl-5-methoxy-2-phenoxy)titanium dichloride,
methylene(methylcyclopentadienyl)(3-tert-butyl-5-chloro-2-phenoxy)titanium dichloride,
methylene(tert-butylcyclopentadienyl)(3,5-dimethyl-2-phenoxy)titanium dichloride, methylene(tert-butylcyclopentadienyl)(3-tert-butyl-2-phenoxy)titanium dichloride, methylene(tert-butylcyclopentadienyl)(3-tert-butyl-5-methyl-2-phenoxy)titanium dichloride, methylene(tert-butylcyclopentadienyl)(3-phenyl-2-phenoxy)titanium dichloride, methylene(tert-butylcyclopentadienyl)(3-tert-butyldimethylsilyl-5-methyl-2-phenoxy)titanium dichloride,
methylene(tert-butylcyclopentadienyl)(3-trimethylsilyl-5-methyl-2-phenoxy)titanium dichloride, methylene(tert-butylcyclopentadienyl)(3-tert-butyl-5-methoxy-2-phenoxy)titanium dichloride, methylene(tert-butylcyclopentadienyl)(3-tert-butyl-5-chloro-2-phenoxy)titanium dichloride,
methylene(tetramethylcyclopentadienyl)(3,5-dimethyl-2-phenoxy)titanium dichloride,
methylene(tetramethylcyclopentadienyl)(3-tert-butyl-2-phenoxy)titanium dichloride,
methylene(tetramethylcyclopentadienyl)(3-tert-butyl-5-methyl-2-phenoxy)titanium dichloride,
methylene(tetramethylcyclopentadienyl)(3-phenyl-2-phenoxy)titanium dichloride,
methylene(tetramethylcyclopentadienyl)(3-tertbutyldimethylsilyl-5-methyl-2-phenoxy)titanium dichloride, methylene(tetramethylcyclopentadienyl) (3-trimethylsilyl-5-methyl-2-phenoxy)titanium dichloride, methylene(tetramethylcyclopentadienyl) (3-tert-butyl-5-methoxy-2-phenoxy)titanium dichloride, methylene(tetramethylcyclopentadienyl) (3-tert-butyl-5-chloro-2-phenoxy)titanium dichloride,
methylene(trimethylsilylcyclopentadienyl)(3,5-dimethyl-2-phenoxy)titanium dichloride,
methylene(trimethylsilylcyclopentadienyl)(3-tert-butyl-2-phenoxy)titanium dichloride,
methylene(trimethylsilylcyclopentadienyl)(3-tert-butyl-5-methyl-2-phenoxy)titanium dichloride,
methylene(trimethylsilylcyclopentadienyl)(3-phenyl-2-phenoxy)titanium dichloride,
methylene(trimethylsilylcyclopentadienyl)(3-tertbutyldimethylsilyl-5-methyl-2-phenoxy)titanium dichloride,
methylene(trimethylsilylcyclopentadienyl)(3-trimethylsilyl-5-methyl-2-phenoxy)titanium dichloride,
methylene(trimethylsilylcyclopentadienyl)(3-tert-butyl-5-methoxy-2-phenoxy)titanium dichloride,
methylene(trimethylsilylcyclopentadienyl)(3-tert-butyl-5-chloro-2-phenoxy)titanium dichloride,
methylene(fluorenyl)(3,5-dimethyl-2-phenoxy)titanium dichloride,
methylene(fluorenyl)(3-tert-butyl-2-phenoxy)titanium dichloride,
methylene(fluorenyl)(3-tert-butyl-5-methyl-2-phenoxy)titanium dichloride,
methylene(fluorenyl)(3-phenyl-2-phenoxy)titanium dichloride, methylene(fluorenyl)(3-tertbutyldimethylsilyl-5-methyl-2-phenoxy)titanium dichloride, methylene(fluorenyl)(3-trimethylsilyl-5-methyl-2-phenoxy)titanium dichloride,
methylene(fluorenyl)(3-tert-butyl-5-methoxy-2-phenoxy)titanium dichloride,
methylene(fluorenyl)(3-tert-butyl-5-chloro-2-phenoxy)titanium dichloride,
isopropylidene(cyclopentadienyl)(3,5-dimethyl-2-phenoxy)titanium dichloride,
isopropylidene(cyclopentadienyl)(3-tert-butyl-2-phenoxy)titanium dichloride,
isopropylidene(cyclopentadienyl)(3-tert-butyl-5-methyl-2-phenoxy)titanium dichloride,
isopropylidene(cyclopentadienyl)(3-phenyl-2-phenoxy)titanium dichloride,
isopropylidene(cyclopentadienyl)(3-tertbutyldimethylsilyl-5-methyl-2-phenoxy)titanium dichloride, isopropylidene(cyclopentadienyl)(3-trimethylsilyl-5-methyl-2-phenoxy)titanium dichloride, isopropylidene(cyclopentadienyl)(3-tert-butyl-5-methoxy-2-phenoxy)titanium dichloride,

isopropylidene(cyclopentadienyl)(3-tert-butyl-5-chloro-2-phenoxy)titanium dichloride,
isopropylidene(methylcyclopentadienyl)(3,5-dimethyl-2-phenoxy)titanium dichloride,
isopropylidene(methylcyclopentadienyl)(3-tert-butyl-2-phenoxy)titanium dichloride,
isopropylidene(methylcyclopentadienyl)(3-tert-butyl-5-methyl-2-phenoxy)titanium dichloride,
isopropylidene(methylcyclopentadienyl)(3-phenyl-2-phenoxy)titanium dichloride,
isopropylidene(methylcyclopentadienyl)(3-tertbutyldimethylsilyl-5-methyl-2-phenoxy)titanium dichloride, isopropylidene (methylcyclopentadienyl) (3-trimethylsilyl-5-methyl-2-phenoxy)titanium dichloride, isopropylidene(methylcyclopentadienyl) (3-tert-butyl-5-methoxy-2-phenoxy)titanium dichloride, isopropylidene(methylcyclopentadienyl) (3-tert-butyl-5-chloro-2-phenoxy)titanium dichloride,
isopropylidene(tert-butylcyclopentadienyl)(3,5-dimethyl-2-phenoxy)titanium dichloride,
isopropylidene(tert-butylcyclopentadienyl)(3-tert-butyl-2-phenoxy)titanium dichloride,
isopropylidene(tert-butylcyclopentadienyl)(3-tert-butyl-5-methyl-2-phenoxy)titanium dichloride,
isopropylidene(tert-butylcyclopentadienyl)(3-phenyl-2-phenoxy)titanium dichloride,
isopropylidene(tert-butylcyclopentadienyl)(3-tertbutyldimethylsilyl-5-methyl-2-phenoxy)titanium dichloride, isopropylidene(tert-butylcyclopentadienyl)(3-trimethylsilyl-5-methyl-2-phenoxy)titanium dichloride, isopropylidene(tert-butylcyclopentadienyl)(3-tert-butyl-5-methoxy-2-phenoxy)titanium dichloride, isopropylidene(tert-butylcyclopentadienyl)(3-tert-butyl-5-chloro-2-phenoxy)titanium dichloride,
isopropylidene(tetramethylcyclopentadienyl)(3,5-dimethyl-2-phenoxy)titanium dichloride,
isopropylidene(tetramethylcyclopentadienyl)(3-tert-butyl-2-phenoxy)titanium dichloride,
isopropylidene(tetramethylcyclopentadienyl)(3-tert-butyl-5-methyl-2-phenoxy)titanium dichloride,
isopropylidene(tetramethylcyclopentadienyl)(3-phenyl-2-phenoxy)titanium dichloride,
isopropylidene(tetramethylcyclopentadienyl)(3-tertbutyldimethylsilyl-5-methyl-2-phenoxy)titanium dichloride,
isopropylidene(tetramethylcyclopentadienyl)(3-trimethylsilyl-5-methyl-2-phenoxy)titanium dichloride,
isopropylidene(tetramethylcyclopentadienyl)(3-tert-butyl-5-methoxy-2-phenoxy)titanium dichloride,
isopropylidene(tetramethylcyclopentadienyl)(3-tert-butyl-5-chloro-2-phenoxy)titanium dichloride,
isopropylidene(trimethylsilylcyclopentadienyl)(3,5-dimethyl-2-phenoxy)titanium dichloride,
isopropylidene(trimethylsilylcyclopentadienyl)(3-tert-butyl-2-phenoxy)titanium dichloride,
isopropylidene(trimethylsilylcyclopentadienyl)(3-tert-butyl-5-methyl-2-phenoxy)titanium dichloride,
isopropylidene(trimethylsilylcyclopentadienyl)(3-phenyl-2-phenoxy)titanium dichloride,
isopropylidene(trimethylsilylcyclopentadienyl)(3-tert-butyldimethylsilyl-5-methyl-2-phenoxy)titanium dichloride,
isopropylidene(trimethylsilylcyclopentadienyl)(3-trimethylsilyl-5-methyl-2-phenoxy)titanium dichloride,
isopropylidene(trimethylsilylcyclopentadienyl)(3-tert-butyl-5-methoxy-2-phenoxy)titanium dichloride,
isopropylidene(trimethylsilylcyclopentadienyl)(3-tert-butyl-5-chloro-2-phenoxy)titanium dichloride,
isopropylidene(fluorenyl)(3,5-dimethyl-2-phenoxy)titanium dichloride,
isopropylidene(fluorenyl)(3-tert-butyl-2-phenoxy)titanium dichloride, isopropylidene(fluorenyl)(3-tert-butyl-5-methyl-2-phenoxy)titanium dichloride,
isopropylidene(fluorenyl)(3-phenyl-2-phenoxy)titanium dichloride,
isopropylidene(fluorenyl)(3-tertbutyldimethylsilyl-5-methyl-2-phenoxy)titanium dichloride, isopropylidene(fluorenyl)(3-trimethylsilyl-5-methyl-2-phenoxy)titanium dichloride, isopropylidene(fluorenyl)(3-tert-butyl-5-methoxy-2-phenoxy)titanium dichloride,
isopropylidene(fluorenyl)(3-tert-butyl-5-chloro-2-phenoxy)titanium dichloride,
diphenylmethylene(cyclopentadienyl)(3,5-dimethyl-2-phenoxy)titanium dichloride,
diphenylmethylene(cyclopentadienyl)(3-tert-butyl-2-phenoxy)titanium dichloride,
diphenylmethylene(cyclopentadienyl)(3-tert-butyl-5-methyl-2-phenoxy)titanium dichloride,
diphenylmethylene(cyclopentadienyl)(3-phenyl-2-phenoxy)titanium dichloride,
diphenylmethylene(cyclopentadienyl)(3-tertbutyldimethylsilyl-5-methyl-2-phenoxy)titanium dichloride, diphenylmethylene(cyclopentadienyl)(3-trimethylsilyl-5-methyl-2-phenoxy)titanium dichloride, diphenylmethylene(cyclopentadienyl)(3-tert-butyl-5-methoxy-2-phenoxy)titanium dichloride,
diphenylmethylene(cyclopentadienyl)(3-tert-butyl-5-chloro-2-phenoxy)titanium dichloride,
diphenylmethylene(methylcyclopentadienyl)(3,5-dimethyl-2-phenoxy)titanium dichloride,
diphenylmethylene(methylcyclopentadienyl)(3-tert-butyl-2-phenoxy)titanium dichloride,
diphenylmethylene(methylcyclopentadienyl)(3-tert-butyl-5-methyl-2-phenoxy)titanium dichloride,
diphenylmethylene(methylcyclopentadienyl)(3-phenyl-2-phenoxy)titanium dichloride,
diphenylmethylene(methylcyclopentadienyl)(3-tertbutyldimethylsilyl-5-methyl-2-phenoxy)titanium dichloride,
diphenylmethylene(methylcyclopentadienyl)(3-trimethylsilyl-5-methyl-2-phenoxy)titanium dichloride,
diphenylmethylene(methylcyclopentadienyl)(3-tert-butyl-5-methoxy-2-phenoxy)titanium dichloride,
diphenylmethylene(methylcyclopentadienyl)(3-tert-butyl-5-chloro-2-phenoxy)titanium dichloride,
diphenylmethylene(tert-butylcyclopentadienyl)(3,5-dimethyl-2-phenoxy)titanium dichloride,

diphenylmethylene(tert-butylcyclopentadienyl)(3-tert-butyl-2-phenoxy)titanium dichloride,
diphenylmethylene(tert-butylcyclopentadienyl)(3-tert-butyl-5-methyl-2-phenoxy)titanium dichloride,
diphenylmethylene(tert-butylcyclopentadienyl)(3-phenyl-2-phenoxy)titanium dichloride, diphenylmethylene(tert-butylcyclopentadienyl)(3-tert-butyldimethylsilyl-5-methyl-2-phenoxy)titanium dichloride, diphenylmethylene(tert-butylcyclopentadienyl)(3-trimethylsilyl-5-methyl-2-phenoxy)titanium dichloride,
diphenylmethylene(tert-butylcyclopentadienyl)(3-tert-butyl-5-methoxy-2-phenoxy)titanium dichloride,
diphenylmethylene(tert-butylcyclopentadienyl)(3-tert-butyl-5-chloro-2-phenoxy)titanium dichloride,
diphenylmethylene(tetramethylcyclopentadienyl)(3,5-dimethyl-2-phenoxy)titanium dichloride,
diphenylmethylene(tetramethylcyclopentadienyl)(3-tert-butyl-2-phenoxy)titanium dichloride,
diphenylmethylene(tetramethylcyclopentadienyl)(3-tert-butyl-5-methyl-2-phenoxy)titanium dichloride,
diphenylmethylene(tetramethylcyclopentadienyl)(3-phenyl-2-phenoxy)titanium dichloride,
diphenylmethylene(tetramethylcyclopentadienyl)(3-tert-butyldimethylsilyl-5-methyl-2-phenoxy)titanium dichloride,
diphenylmethylene(tetramethylcyclopentadienyl)(3-trimethylsilyl-5-methyl-2-phenoxy)titanium dichloride,
diphenylmethylene(tetramethylcyclopentadienyl)(3-tert-butyl-5-methoxy-2-phenoxy)titanium dichloride,
diphenylmethylene(tetramethylcyclopentadienyl)(3-tert-butyl-5-chloro-2-phenoxy)titanium dichloride, diphenylmethylene(trimethylsilylcyclopentadienyl)(3, 5-dimethyl-2-phenoxy)titanium dichloride,
diphenylmethylene(trimethylsilylcyclopentadienyl)(3 -tert-butyl-2-phenoxy)titanium dichloride,
diphenylmethylene(trimethylsilylcyclopentadienyl)(3 -tert-butyl-5-methyl-2-phenoxy)titanium dichloride,
diphenylmethylene(trimethylsilylcyclopentadienyl)(3 -phenyl-2-phenoxy)titanium dichloride,
diphenylmethylene(trimethylsilylcyclopentadienyl)(3 -tert-butyldimethylsilyl-5-methyl-2-phenoxy)titanium dichloride,
diphenylmethylene(trimethylsilylcyclopentadienyl)(3 -trimethylsilyl-5-methyl-2-phenoxy)titanium dichloride,
diphenylmethylene(trimethylsilylcyclopentadienyl)(3 -tert-butyl-5-methoxy-2-phenoxy)titanium dichloride,
diphenylmethylene(trimethylsilylcyclopentadienyl)(3 -tert-butyl-5-chloro-2-phenoxy)titanium dichloride,
diphenylmethylene(fluorenyl)(3,5-dimethyl-2-phenoxy)titanium dichloride,
diphenylmethylene(fluorenyl)(3-tert-butyl-2-phenoxy)titanium dichloride,
diphenylmethylene(fluorenyl)(3-tert-butyl-5-methyl-2-phenoxy)titanium dichloride,
diphenylmethylene(fluorenyl)(3-phenyl-2-phenoxy)titanium dichloride,
diphenylmethylene(fluorenyl)(3-tertbutyldimethylsilyl-5-methyl-2-phenoxy)titanium dichloride, diphenylmethylene(fluorenyl)(3-trimethylsilyl-5-methyl-2-phenoxy)titanium dichloride, diphenylmethylene(fluorenyl)(3-tert-butyl-5-methoxy-2-phenoxy)titanium dichloride,
diphenylmethylene(fluorenyl)(3-tert-butyl-5-chloro-2-phenoxy)titanium dichloride,
dimethylsilylene(cyclopentadienyl)(2-phenoxy)titanium dichloride, dimethylsilylene-(cyclopentadienyl)(3-methyl-2-phenoxy)titanium dichloride, dimethylsilylene(cyclopentadienyl)(3,5-dimethyl-2-phenoxy)titanium dichloride,
dimethylsilylene(cyclopentadienyl)(3-tert-butyl-2-phenoxy)titanium dichloride,
dimethylsilylene(cyclopentadienyl)(3-tert-butyl-5-methyl-2-phenoxy)titanium dichloride,
dimethylsilylene(cyclopentadienyl)(3,5-di-tert-outyl-2-phenoxy)titanium dichloride,
dimethylsilylene(cyclopentadienyl)(5-methyl-3-phenyl-2-phenoxy)titanium dichloride,
dimethylsilylene(cyclopentadienyl)(3-tertbutyldimethylsilyl-5-methyl-2-phenoxy)titanium dichloride, dimethylsilylene(cyclopentadienyl)(5-methyl-3-trimethylsilyl-2-phenoxy)titanium dichloride, dimethylsilylene(cyclopentadienyl)(3-tert-butyl-5-methoxy-2-phenoxy)titanium dichloride,
dimethylsilylene(cyclopentadienyl)(3-tert-butyl-5-chloro-2-phenoxy)titanium dichloride,
dimethylsilylene(cyclopentadienyl)(3,5-diamyl-2-phenoxy)titanium dichloride,
dimethylsilylene(methylcyclopentadienyl)(2-phenoxy)titanium dichloride,
dimethylsilylene(methylcyclopentadienyl)(3-methyl-2-phenoxy)titanium dichloride,
dimethylsilylene(methylcyclopentadienyl)(3,5-dimethyl-2-phenoxy)titanium dichloride,
dimethylsilylene(methylcyclopentadienyl)(3-tert-butyl-2-phenoxy)titanium dichloride,
dimethylsilylene(methylcyclopentadienyl)(3-tert-butyl-5-methyl-2-phenoxy)titanium dichloride,
dimethylsilylene(methylcyclopentadienyl)(3,5-di-tert-butyl-2-phenoxy)titanium dichloride,
dimethylsilylene(methylcyclopentadienyl)(5-methyl-3-phenyl-2-phenoxy)titanium dichloride,
dimethylsilylene(methylcyclopentadienyl)(3-tertbutyldimethylsilyl-5-methyl-2-phenoxy)titanium dichloride,
dimethylsilylene(methylcyclopentadienyl)(5-methyl-3-trimethylsilyl-2-phenoxy)titanium dichloride,
dimethylsilylene(methylcyclopentadienyl)(3-tert-butyl-5-methoxy-2-phenoxy)titanium dichloride,
dimethylsilylene(methylcyclopentadienyl)(3-tert-butyl-5-chloro-2-phenoxy)titanium dichloride,
dimethylsilylene(methylcyclopentadienyl)(3,5-diamyl-2-phenoxy)titanium dichloride,
dimethylsilylene(n-butylcyclopentadienyl)(2-phenoxy)titanium dichloride, dimethylsilylene(n-butylcyclopentadienyl)(3-methyl-2-phenoxy)titanium dichloride, dimethylsilylene(n-butylcyclopentadienyl)(3,5-dimethyl-2-phenoxy)titanium dichloride, dimethylsilylene(n-butylcyclopentadienyl)(3-tert-butyl-2-phenoxy)titanium dichloride, dimethylsilylene(n-butylcyclopentadienyl)(3-tert-butyl-5-methyl-2-phenoxy)titanium dichloride, dimethylsilylene(n-butylcyclopentadienyl)(3,5-di-tert-butyl-2-phenoxy)titanium dichloride, dimethylsilylene(n-butylcyclopentadienyl)(5-methyl-3-phenyl-2-phenoxy)titanium dichloride, dimethylsilylene(n-butylcyclopentadienyl)(3-tert-butyldimethylsilyl-5-methyl-2-phenoxy)titanium dichloride,
dimethylsilylene(n-butylcyclopentadienyl)(5-methyl-3-trimethylsilyl-2-phenoxy)titanium dichloride,
dimethylsilylene(n-butylcyclopentadienyl)(3-tert-butyl-5-methoxy-2-phenoxy)titanium dichloride,
dimethylsilylene(n-butylcyclopentadienyl)(3-tert-butyl-5-chloro-2-phenoxy)titanium dichloride,
dimethylsilylene(n-butylcyclopentadienyl)(3,5-diamyl-2-phenoxy)titanium dichloride,
dimethylsilylene(tert-butylcyclopentadienyl)(2-phenoxy)titanium dichloride, dimethylsilylene(tert-butylcyclopentadienyl)(3-methyl-2-phenoxy)titanium dichloride, dimethylsilylene(tert-butylcyclopentadienyl)(3,5-dimethyl-2-phenoxy)titanium dichloride, dimethylsilylene(tert-butylcyclopentadienyl)(3-tert-butyl-2-phenoxy)titanium dichloride, dimethylsilylene(tert-butylcyclopentadienyl)(3-tert-butyl-5-methyl-2-phenoxy)titanium dichloride, dimethylsilylene(tert-butylcyclopentadienyl)(3,5-di-tert-butyl-2-phenoxy)titanium dichloride, dimethylsilylene(tert-butylcyclopentadienyl)(5-methyl-3-phenyl-2-phenoxy)titanium dichloride, dimethylsilylene(tert-butylcyclopentadienyl)(3-tert-butyldimethylsilyl-5-methyl-2-phenoxy)titanium dichloride,
dimethylsilylene(tert-butylcyclopentadienyl)(5-methyl-3-trimethylsilyl-2-phenoxy)titanium dichloride, dimethylsilylene(tert-butylcyclopentadienyl)(3-tert-butyl-5-methoxy-2-phenoxy)titanium dichloride, dimethylsilylene(tert-butylcyclopentadienyl)(3-tert-butyl-5-chloro-2-phenoxy)titanium dichloride, dimethylsilylene(tert-butylcyclopentadienyl)(3,5-diamyl-2-phenoxy)titanium dichloride,
dimethylsilylene(tetramethylcyclopentadienyl)(2-phenoxy)titanium dichloride,
dimethylsilylene(tetramethylcyclopentadienyl)(3-methyl-2-phenoxy)titanium dichloride, dimethylsilylene(tetramethylcyclopentadienyl)(3,5-dimethyl-2-phenoxy)titanium dichloride,
dimethylsilylene(tetramethylcyclopentadienyl)(3-tert-butyl-2-phenoxy)titanium dichloride,
dimethylsilylene(tetramethylcyclopentadienyl)(3-tert-butyl-5-methyl-2-phenoxy)titanium dichloride,
dimethylsilylene(tetramethylcyclopentadienyl)(3,5-di-tert-butyl-2-phenoxy)titanium dichloride,
dimethylsilylene(tetramethylcyclopentadienyl)(5-methyl-3-phenyl-2-phenoxy)titanium dichloride,
dimethylsilylene(tetramethylcyclopentadienyl)(3-tert-butyldimethylsilyl-5-methyl-2-phenoxy)titanium dichloride,
dimethylsilylene(tetramethylcyclopentadienyl)(5-methyl-3-trimethylsilyl-2-phenoxy)titanium dichloride,
dimethylsilylene(tetramethylcyclopentadienyl)(3-tert-butyl-5-methoxy-2-phenoxy)titanium dichloride,
dimethylsilylene(tetramethylcyclopentadienyl)(3-tert-butyl-5-chloro-2-phenoxy)titanium dichloride,
dimethylsilylene(tetramethylcyclopentadienyl)(3,5-diamyl-2-phenoxy)titanium dichloride,
dimethylsilylene(trimethylsilylcyclopentadienyl)(2-phenoxy)titanium dichloride,
dimethylsilylene(trimethylsilylcyclopentadienyl)(3-methyl-2-phenoxy)titanium dichloride,
dimethylsilylene(trimethylsilylcyclopentadienyl)(3, 5-dimethyl-2-phenoxy)titanium dichloride,
dimethylsilylene(trimethylsilylcyclopentadienyl)(3-tert-butyl-2-phenoxy)titanium dichloride,
dimethylsilylene(trimethylsilylcyclopentadienyl)(3-tert-butyl-5-methyl-2-phenoxy)titanium dichloride,
dimethylsilylene(trimethylsilylcyclopentadienyl)(3, 5-di-tert-butyl-2-phenoxy)titanium dichloride,
dimethylsilylene(trimethylsilylcyclopentadienyl)(5-methyl-3-phenyl-2-phenoxy)titanium dichloride,
dimethylsilylene(trimethylsilylcyclopentadienyl)(3-tert-butyldimethylsilyl-5-methyl-2-phenoxy)titanium dichloride,
dimethylsilylene(trimethylsilylcyclopentadienyl)(5-methyl-3-trimethylsilyl-2-phenoxy)titanium dichloride,
dimethylsilylene(trimethylsilylcyclopentadienyl)(3-tert-butyl-5-methoxy-2-phenoxy)titanium dichloride,
dimethylsilylene(trimethylsilylcyclopentadienyl)(3-tert-butyl-5-chloro-2-phenoxy)titanium dichloride,
dimethylsilylene(trimethylsilylcyclopentadienyl)(3, 5-diamyl-2-phenoxy)titanium dichloride,
dimethylsilylene(indenyl)(2-phenoxy)titanium dichloride, dimethylsilylene(indenyl)(3-methyl-2-phenoxy)titanium dichloride,
dimethylsilylene(indenyl)(3,5-dimethyl-2-phenoxy)titanium dichloride,
dimethylsilylene(indenyl)(3-tert-butyl-2-phenoxy)titanium dichloride,
dimethylsilylene(indenyl)(3-tert-butyl-5-methyl-2-phenoxy)titanium dichloride,
dimethylsilylene(indenyl)(3,5-di-tert-butyl-2-phenoxy)titanium dichloride,
dimethylsilylene(indenyl)(5-methyl-3-phenyl-2-phenoxy)titanium dichloride,
dimethylsilylene(indenyl)(3-tertbutyldimethylsilyl-5-methyl-2-phenoxy)titanium dichloride, dimethylsilylene(indenyl)(5-methyl-3-trimethylsilyl-2-phenoxy)titanium dichloride,
dimethylsilylene(indenyl)(3-tert-butyl-5-methoxy-2-phenoxy)titanium dichloride,
dimethylsilylene(indenyl)(3-tert-butyl-5-chloro-2-phenoxy)titanium dichloride,
dimethylsilylene(indenyl)(3,5-diamyl-2-phenoxy)titanium dichloride,
dimethylsilylene(fluorenyl)(2-phenoxy)titanium dichloride, dimethylsilylene(fluorenyl)(3-methyl-2-phenoxy)titanium dichloride,
dimethylsilylene(fluorenyl)(3,5-dimethyl-2-phenoxy)titanium dichloride,
dimethylsilylene(fluorenyl)(3-tert-butyl-2-phenoxy)titanium dichloride,

dimethylsilylene(fluorenyl)(3-tert-butyl-5-methyl-2-phenoxy)titanium dichloride,
dimethylsilylene(fluorenyl)(3,5-di-tert-butyl-2-phenoxy)titanium dichloride,
dimethylsilylene(fluorenyl)(5-methyl-3-phenyl-2-phenoxy)titanium dichloride,
dimethylsilylene(fluorenyl)(3-tertbutyldimethylsilyl-5-methyl-2-phenoxy)titanium dichloride, dimethylsilylene(fluorenyl)(5-methyl-3-trimethylsilyl-2-phenoxy)titanium dichloride,
dimethylsilylene(fluorenyl)(3-tert-butyl-5-methoxy-2-phenoxy)titanium dichloride,
dimethylsilylene(fluorenyl)(3-tert-butyl-5-chloro-2-phenoxy)titanium dichloride,
dimethylsilylene(fluorenyl)(3,5-diamyl-2-phenoxy)titanium dichloride and dimethylsilylene(tetramethylcyclopentadienyl)(1-naphthox-2-yl)titanium dichloride, and compounds wherein (2-phenoxy) of these compounds is replaces with (3-phenyl-2-phenoxy), (3-trimethylsilyl-2-phenoxy) or (3-tertbutyldimethylsilyl-2-phenoxy), compounds wherein dimethylsilylene of these compounds is replaced with diethylsilylene, diphenylsilylene or dimethoxysilylene, compounds wherein dichloride of these compounds is replaced with difluoride, dibromide, diiodide, dimethyl, diethyl, diisopropyl, bis(dimethylamido), bis(diethylamido), dimethoxide, diethoxide, di-n-butoxide or diisopropoxide;
(tert-butylamido)tetramethylcyclopentadienyl-1,2-ethanediyltitanium dichloride, (tert-butylamido)tetramethylcyclopentadienyl-1,2-ethanediyltitanium dimethyl, (tert-butylamido)tetramethylcyclopentadienyl-1,2-ethanediyltitanium dibenzyl,
(methylamido)tetramethylcyclopentadienyl-1,2-ethanediyltitanium dichloride,
(ethylamido)tetramethylcyclopentadienyl-1,2-ethanediyltitanium dichloride, (tert-butylamido)tetramethylcyclopentadienyldimethylsilan etitanium dichloride, (tert-butylamido)tetramethylcyclopentadienyldimethylsilan etitanium dimethyl,
(tert-butylamido)tetramethylcyclopentadienyldimethylsilan e-titanium dibenzyl,
(benzylamido)tetramethylcyclopentadienyldimethylsilanetitanium dichloride,
(phenylphosphido)tetramethylcyclopentadienyldimethy 1-silanetitanium dibenzyl, (tert-butylamido)indenyl-1,2-ethanediyltitanium dichloride,
(tert-butylamido)indenyl-1,2-ethanediyltitanium dimethyl, (tert-butylamido)tetrahydroindenyl-1,2-ethanediyltitanium dichloride, (tert-butylamido)tetrahydroindenyl-1,2-ethanediyltitanium dimethyl, (tert-butylamido)fluorenyl-1,2-ethanediyltitanium dichloride, (tert-butylamido)fluorenyl-1,2-ethanediyltitanium dimethyl,
(tert-butylamido)indenyldimethylsilanetitanium dichloride, (tert-butylamido)indenyldimethylsilanetitanium dimethyl,(tert-butylamido)tetrahydroindenyldimethylsilanetitanium dichloride, (tert-butylamido)tetrahydroindenyldimethylsilanetitanium dimethyl, (tert-butylamido)fluorenyldimethylsilanetitanium dichloride, (tert-butylamido)fluorenyldimethylsilanetitanium dimethyl,
(dimethylaminomethyl)tetramethylcyclopentadienyltitanium(III) dichloride,
(dimethylaminoethyl)tetramethylcyclopentadienyltitanium(III) dichloride,
(dimethylaminopropyl)tetramethylcyclopentadienyltitanium(III) dichloride, (N-pyrrolidinylethyl)tetramethylcyclopentadienyltitanium dichloride, (B-dimethylaminoborabenzene)cyclopentadienylzirconium dichloride, cyclopentadienyl(9-mesitylboraanthracenyl)zirconium dichloride, 2,2'-thiobis[4-methyl-6-(1-methylethyl)phenoxy]titanium dichloride, 2,2'-thiobis[4,6-dimethylphenoxy]titanium dichloride, 2,2'-thiobis(4-methyl-6-tert-butylphenoxy)titanium dichloride, 2,2'-methylenebis(4-methyl-6-tert-butylphenoxy)titanium dichloride, 2,2'-ethylenebis(4-methyl-6-tert-butylphenoxy)titanium dichloride, 2,2'-sulfinylbis(4-methyl-6-tert-butylphenoxy)titanium dichloride, 2,2'-(4,4',6,6'-tetra-tert-butyl-1,1'-biphenoxy)titanium dichloride,
2,2'-thiobis[4-methyl-6-tert-butylphenoxy]titanium diisopropoxide, 2,2'-methylenebis(4-methyl-6-tert-butylphenoxy)titanium diisopropoxide, 2,2'-ethylenebis(4-methyl-6-tert-butylphenoxy)titanium diisopropoxide, 2,2'-sulfinylbis(4-methyl-6-tert-butylphenoxy)titanium diisopropoxide, (di-tert-butyl-1,3-propanediamido)titanium dichloride,
(dicyclohexyl-1,3-propanediamido)titanium dichloride, [bis(trimethylsilyl)-1,3-propanediamido]titanium dichloride, [bis(tert-butyldimethylsilyl)-1,3-propanediamido]titanium dichloride, [bis(2,6-dimethylphenyl)-1,3-propanediamido]titanium dichloride, [bis(2,6-diisopropylphenyl)-1,3-propanediamido]titanium dichloride, [bis(2,6-di-tert-butylphenyl)-1,3-propanediamido]titanium dichloride,
[bis(triisopropylsilyl)naphthalenediamido]titanium dichloride,
[bis(trimethylsilyl)naphthalenediamido]titanium dichloride, [bis(tert-butyldimethylsilyl)naphthalenediamido]titanium dichloride, [bis(tert-butyldimethylsilyl)naphthalenediamido]titanium dibromide, [hydrotris(3,5-dimethylpyrazolyl)borate]titanium trichloride,
[hydrotris(3,5-dimethylpyrazolyl)borate]titanium tribromide, [hydrotris(3,5-dimethylpyrazolyl)borate]titanium triiodide,
[hydrotris(3,5-diethylpyrazolyl)borate]titanium trichloride, [hydrotris(3,5-diethylpyrazolyl)borate]titanium tribromide,
[hydrotris(3,5-diethylpyrazolyl)borate]titanium triiodide, [hydrotris(3,5-di-tert-butylpyrazolyl)borate]titanium trichloride,
[hydrotris(3,5-di-tert-butylpyrazolyl)borate]titanium tribromide, [hydrotris(3,5-di-tert-butylpyrazolyl)borate]titanium triiodide,
[tris(3,5-dimethylpyrazolyl)methyl]titanium trichloride, [tris(3,5-dimethylpyrazolyl)methyl]titanium tribromide,
[tris(3,5-dimethylpyrazolyl)methyl]titanium triiodide, [tris(3,5-diethylpyrazolyl)methyl]titanium trichloride,
[tris(3,5-diethylpyrazolyl)methyl]titanium tribromide, [tris(3,5-diethylpyrazolyl)methyl]titanium triiodide,
[tris(3,5-di-tert-butylpyrazolyl)methyl]titanium trichloride, [tris(3,5-di-tert-butylpyrazolyl)methyl]titanium tribromide,

[tris(3,5-di-tert-butylpyrazolyl)methyl]titanium triiodide, μ-oxobis{isopropylidene(cyclopentadienyl)(2-phenoxy)titanium chloride},
μ-oxobis{isopropylidene(cyclopentadienyl)(2-phenoxy)titanium methoxide},
μ-oxobis{isopropylidene(cyclopentadienyl)(3-tert-butyl-5-methyl-2-phenoxy)titanium chloride},
μ-oxobis{isopropylidene(cyclopentadienyl)(3-tert-butyl-5-methyl-2-phenoxy)titanium methoxide},
μ-oxobis{isopropylidene(methylcyclopentadienyl)(2-phenoxy)titanium chloride}, μ-oxobis{isopropylidene(methylcyclopentadienyl)(2-phenoxy)titanium methoxide}, μ-oxobis{isopropylidene(methylcyclopentadienyl)(3-tert-butyl-5-methyl-2-phenoxy)titanium chloride}, μ -oxobis{isopropylidene(methylcyclopentadienyl)(3-tert-butyl-5-methyl-2-phenoxy) titanium methoxide},
μ-oxobis{isopropylidene (tetramethylcyclopentadienyl)(2-phenoxy)titanium chloride}, μ-oxobis{isopropylidene(tetramethylcyclopentadienyl)( 2-phenoxy)titanium methoxide}, μ-oxobis{isopropylidene(tetramethylcyclopentadienyl)( 3-tert-butyl-5-methyl-2-phenoxy)titanium chloride}, μ-oxobis{isopropylidene (tetramethylcyclopentadienyl)(3-tert-butyl-5-methyl-2-phenoxy)titanium methoxide}, μ-oxobis{dimethylsilylene(cyclopentadienyl)(2-phenoxy)titanium chloride}, μ-oxobis{dimethylsilylene(cyclopentadienyl)(2-phenoxy)titanium methoxide}, μ-oxobis{dimethylsilylene(cyclopentadienyl)(3-tert-butyl-5-methyl-2-phenoxy)titanium chloride},
μ-oxobis{dimethylsilylene(cyclopentadienyl)(3-tert-butyl-5-methyl-2-phenoxy)titanium methoxide}, μ-oxobis{dimethylsilylene(methylcyclopentadienyl)(2-phenoxy)titanium chloride}, μ-oxobis{dimethylsilylene(methylcyclopentadienyl)(2-phenoxy)titanium methoxide}, μ-oxobis{dimethylsilylene(methylcyclopentadienyl)(3-tert-butyl-5-methyl-2-phenoxy)titanium chloride}, μ -oxobis{dimethylsilylene(methylcyclopentadienyl)(3-tert-butyl-5-methyl-2-phenoxy)titanium methoxide}, μ -oxobis{dimethylsilylene (tetramethylcyclopentadienyl)(2-phenoxy)titanium chloride}, μ-oxobis{dimethylsilylene (tetramethylcyclopentadienyl)(2-phenoxy)titanium methoxide}, μ-oxobis{dimethylsilylene(tetramethylcyclopentadienyl )(3-tert-butyl-5-methyl-2-phenoxy)titanium chloride}, μ-oxobis{dimethylsilylene (tetramethylcyclopentadienyl)(3-tert-butyl-5-methyl-2-phenoxy)titanium methoxide} di-μ-oxobis[isopropylidene(cyclopentadienyl)(2-phenoxy)titanium], di-μ-oxobis[isopropylidene(cyclopentadienyl)(3-tert-butyl-5-methyl-2-phenoxy)titanium], di-μ-oxobis[isopropylidene(methylcyclopentadienyl)(2-phenoxy)titanium], di-μ-oxobis[isopropylidene(methylcyclopentadienyl)(3-tert-butyl-5-methyl-2-phenoxy)titanium],
di-μ-oxobis[isopropylidene (tetramethylcyclopentadienyl)(2-phenoxy)titanium],
di-μ-oxobis[isopropylidene (tetramethylcyclopentadienyl)(3-tert-butyl-5-methyl-2-phenoxy)titanium], di-μ-oxobis[dimethylsilylene(cyclopentadienyl)(2-phenoxy)titanium], di-μ-oxobis[dimethylsilylene(cyclopentadienyl)(3-tert-butyl-5-methyl-2-phenoxy)titanium], di-μ-oxobis[dimethylsilylene(methylcyclopentadienyl)(2-phenoxy)titanium], di-μ-oxobis[dimethylsilylene(methylcyclopentadienyl)(3-tert-butyl-5-methyl-2-phenoxy)titanium], di-μ-oxobis[dimethylsilylene(tetramethylcyclopentadienyl )(2-phenoxy)titanium] and di-μ-oxobis[dimethylsilylene(tetramethylcyclopentadienyl )(3-tert-butyl-5-methyl-2-phenoxy)titanium].

Further, compounds wherein a titanium atom is replaced with a zirconium atom or a hafnium atom can be similarly exemplified in the above-mentioned titanium compounds. Among the transition metal compounds, specific examples of a compound in which a transition metal atom is a vanadium atom include vanadium acetylacetonate, vanadium tetrachloride and vanadium oxy trichloride.

Among the transition metal compounds, specific examples of a compound in which a transition metal atom is a samarium atom include bis(pentamethylcyclopentadienyl)samarium methyltetrahydrofuran.

Among the transition metal compounds, specific examples of a compound in which a transition metal atom is an ytterbium atom include bis(pentamethylcyclopentadienyl)ytterbium methyltetrahydrofuran.

Among the transition metal compounds, specific examples of a compound in which a transition metal atom is a nickel atom include 2,2'-methylenebis[(4R)-4-phenyl-5,5'-dimethyloxazoline]nickel dichloride, 2,2'-methylenebis[(4R)-4-phenyl-5,5'-dimethyloxazoline]nickel dibromide, 2,2'-methylenebis[(4R)-4-phenyl-5,5'-diethyloxazoline]nickel dichloride, 2,2'-methylenebis[(4R)-4-phenyl-5,5'-diethyloxazoline]nickel dibromide, 2,2'-methylenebis[(4R)-4-phenyl-5,5'-di-n-propyloxazoline]nickel dichloride, 2,2'-methylenebis[(4R)-4-phenyl-5,5'-di-n-propyloxazoline]nickel dibromide, 2,2'-methylenebis[(4R)-4-phenyl-5,5'-diisopropyloxazoline]nickel dichloride, 2,2'-methylenebis[(4R)-4-phenyl-5,5'-diisopropyloxazoline]nickel dibromide, 2,2'-methylenebis[(4R)-4-phenyl-5,5'-dicyclohexyloxazoline]nickel dichloride, 2,2'-methylenebis[(4R)-4-phenyl-5,5'-dicyclohexyloxazoline]nickel dibromide, 2,2'-methylenebis[(4R)-4-phenyl-5,5'-dimethoxyoxazoline]nickel dichloride, 2,2'-methylenebis[(4R)-4-phenyl-5,5'-dimethoxyoxazoline]nickel dibromide, 2,2'-methylenebis[(4R)-4-phenyl-5,5'-diethoxyoxazoline]nickel dichloride, 2,2'-methylenebis[(4R)-4-phenyl-5,5'-diethoxyoxazoline] nickel dibromide, 2,2'-methylenebis[(4R)-4-phenyl-5,5'-diphenyloxazoline]nickel dichloride, 2,2'-methylenebis[(4R)-4-phenyl-5,5'-diphenyloxazoline]nickel dibromide, methylenebis[(4R)-4-methyl-5,5'-di-(2-methylphenyl)oxazoline]nickel dibromide, methylenebis[(4R)-4-methyl-5,5'-di-(3-methylphenyl)oxazoline]nickel dibromide, methylenebis[(4R)-4-methyl-5,5'-di-(4-methylphenyl)oxazoline]nickel dibromide, methylenebis[(4R)-4-methyl-5,5'-di-(2-methoxyphenyl)oxazoline]nickel dibromide, methylenebis[(4R)-4-methyl-5,5'-di-(3-methoxyphenyl)oxazoline]nickel dibromide, methylenebis[(4R)-4-methyl-5,5'-di-(4-methoxyphenyl)oxazoline]nickel dibromide, methylenebis[spiro{(4R)-4-methyloxazoline-5,1'-cyclobutane}]nickel dibromide, methylenebis[spiro{(4R)-4-methyloxazoline-5,1'-cyclopentane}]nickel dibromide,

methylenebis[spiro{(4R)-4-methyloxazoline-5,1'-cyclohexane}]nickel dibromide, methylenebis[spiro{(4R)-4-methyloxazoline-5,1'-cycloheptane}]nickel dibromide, 2,2'-methylenebis[(4R)-4-isopropyl-5,5-dimethyloxazoline]nickel dibromide, 2,2'-methylenebis[(4R)-4-isopropyl-5,5-diethyloxazoline]nickel dibromide, 2,2'-methylenebis[(4R)-4-isopropyl-5,5-di-n-propyloxazoline]nickel dibromide, methylenebis[(4R)-4-isopropyl-5,5-diisopropyloxazoline]nickel dibromide, 2,2'-methylenebis[(4R)-4-isopropyl-5,5-dicyclohexyloxazoline]nickel dibromide, 2,2'-methylenebis[(4R)-4-isopropyl-5,5-diphenyloxazoline]nickel dibromide, 2,2'-methylenebis[(4R)-4-isopropyl-5,5-di-(2-methylphenyl)oxazoline]nickel dibromide, 2,2'-methylenebis[(4R)-4-isopropyl-5,5-di-(3-methylphenyl)oxazoline]nickel dibromide, 2,2'-methylenebis[(4R)-4-isopropyl-5,5-di-(4-methylphenyl)oxazoline]nickel dibromide, 2,2'-methylenebis[(4R)-4-isopropyl-5,5-di-(2-methoxyphenyl)oxazoline]nickel dibromide, 2,2'-methylenebis[(4R)-4-isopropyl-5,5-di-(3-methoxyphenyl)oxazoline]nickel dibromide, 2,2'-methylenebis[(4R)-4-isopropyl-5,5-di-(4-methoxyphenyl)oxazoline]nickel dibromide, 2,2'-methylenebis [spiro{(4R)-4-isopropyloxazoline-5,1'-cyclobutane}]nickel dibromide, 2,2'-methylenebis[spiro{(4R)-4-isopropyloxazoline-5,1'-cyclopentane}]nickel dibromide, 2,2'-methylenebis[spiro{(4R)-4-isopropyloxazoline-5,1'-cyclohexane}]nickel dibromide, 2,2'-methylenebis[spiro{(4R)-4-isopropyloxazoline-5,1'-cycloheptane}]nickel dibromide, 2,2'-methylenebis[(4R)-4-isobutyl-5,5-dimethyloxazoline]nickel dibromide, 2,2'-methylenebis[(4R)-4-isobutyl-5,5-diethyloxazoline]nickel dibromide, 2,2'-methylenebis[(4R)-4-isobutyl-5,5-di-n-propyloxazoline]nickel dibromide, 2,2'-methylenebis[(4R)-4-isobutyl-5,5-diisopropyloxazoline]nickel dibromide, 2,2'-methylenebis[(4R)-4-isobutyl-5,5-dicyclohexyloxazoline]nickel dibromide, 2,2'-methylenebis[(4R)-4-isobutyl-5,5-diphenyloxazoline]nickel dibromide, 2,2'-methylenebis[(4R)-4-isobutyl-5,5-di-(2-methylphenyl)oxazoline]nickel dibromide, 2,2'-methylenebis[(4R)-4-isobutyl-5,5-di-(3-methylphenyl)oxazoline]nickel dibromide, 2,2'-methylenebis[(4R)-4-isobutyl-5,5-di-(4-methylphenyl)oxazoline]nickel dibromide, 2,2'-methylenebis[(4R)-4-isobutyl-5,5-di-(2-methoxyphenyl)oxazoline]nickel dibromide, 2,2'-methylenebis[(4R)-4-isobutyl-5,5-di-(3-methoxyphenyl)oxazoline]nickel dibromide, 2,2'-methylenebis[(4R)-4-isobutyl-5,5-di-(4-methoxyphenyl)oxazoline]nickel dibromide, 2,2'-methylenebis[spiro{(4R)-4-isobutyloxazoline-5,1'-cyclobutane}]nickel dibromide, 2,2'-methylenebis[spiro{(4R)-4-isobutyloxazoline-5,1'-cyclopentane}]nickel dibromide, 2,2'-methylenebis[spiro{(4R)-4-isobutyloxazoline-5,1'-cyclohexane}]nickel dibromide, 2,2'-methylenebis[spiro{(4R)-4-isobutyloxazoline-5,1'-cycloheptanel}]nickel dibromide, 2,2'-methylenebis[(4R)-4-tert-butyl-5,5-dimethyloxazoline]nickel dibromide, 2,2'-methylenebis[(4R)-4-tert-butyl-5,5-diethyloxazoline]nickel dibromide, 2,2'-methylenebis[(4R)-4-tert-butyl-5,5-di-n-propyloxazoline]nickel dibromide, 2,2'-methylenebis[(4R)-4-tert-butyl-5,5-diisopropyloxazoline]nickel dibromide, 2,2'-methylenebis[(4R)-4-tert-butyl-5,5-diphenyloxazoline]nickel dibromide, 2,2'-methylenebis[(4R)-4-tert-butyl-5,5-dicyclohexyloxazoline]nickel dibromide, 2,2'-methylenebis[(4R)-4-tert-butyl-5,5-di-(2-methylphenyl)oxazoline]nickel dibromide, 2,2'-methylenebis[(4R)-4-tert-butyl-5,5-di-(3-methylphenyl)oxazoline]nickel dibromide, 2,2'-methylenebis[(4R)-4-tert-butyl-5,5-di-(4-methylphenyl)oxazoline]nickel dibromide, 2,2'-methylenebis[(4R)-4-tert-butyl-5,5-di-(2-methoxyphenyl)oxazoline]nickel dibromide, 2,2'-methylenebis[(4R)-4-tert-butyl-5,5-di-(3-methoxyphenyl)oxazoline]nickel dibromide, 2,2'-methylenebis[(4R)-4-tert-butyl-5,5-di-(4-methoxyphenyl)oxazoline]nickel dibromide, 2,2'-methylenebis[spiro{(4R)-4-tert-butyloxazoline-5,1'-cyclobutane}]nickel dibromide, 2,2'-methylenebis[spiro{(4R)-4-tert-butyloxazoline-5,1'-cyclopentane}]nickel dibromide, 2,2'-methylenebis[spiro{(4R)-4-tert-butyloxazoline-5,1'-cyclohexane}]nickel dibromide, 2,2'-methylenebis [spiro{(4R)-4-tert-butyloxazoline-5,1'-cycloheptane}]nickel dibromide, 2,2'-methylenebis[(4R)-4-phenyl-5,5-dimethyloxazoline]nickel dibromide, 2,2'-methylenebis[(4R)-4-phenyl-5,5-diethyloxazoline]nickel dibromide, 2,2'-methylenebis[(4R)-4-phenyl-5,5-di-n-propyloxazoline]nickel dibromide, 2,2'-methylenebis[(4R)-4-phenyl-5,5-diisopropyloxazoline] nickel dibromide, 2,2'-methylenebis[(4R)-4-phenyl-5,5-dicyclohexyloxazoline]nickel dibromide, 2,2'-methylenebis[(4R)-4-phenyl-5,5-diphenyl)oxazoline]nickel dibromide, 2,2'-methylenebis[(4R)-4-phenyl-5,5-di-(2-methylphenyl)oxazoline] nickel dibromide, 2,2'-methylenebis[(4R)-4-phenyl-5,5-di-(3-methylphenyl)oxazoline]nickel dibromide, 2,2'-methylenebis[(4R)-4-phenyl-5,5-di-(4-methylphenyl)oxazoline]nickel dibromide, 2,2'-methylenebis[(4R)-4-phenyl-5,5-di-(2-methoxyphenyl)oxazoline]nickel dibromide, 2,2'-methylenebis[(4R)-4-phenyl-5,5-di-(3-methoxyphenyl)oxazoline]nickel dibromide, 2,2'-methylenebis[(4R)-4-phenyl-5,5-di-(4-methoxyphenyl)oxazoline]nickel dibromide, methylenebis[spiro{(4R)-4-phenyloxazoline-5,1'-cyclobutane}]nickel dibromide, 2,2'-methylenebis[spiro{(4R)-4-phenyloxazoline-5,1'-cyclopentane}]nickel dibromide, 2,2'-methylenebis[spiro{(4R)-4-phenyloxazoline-5,1'-cyclohexane}]nickel dibromide, 2,2'-methylenebis[spiro{(4R)-4-phenyloxazoline-5,1'-cycloheptane}]nickel dibromide, 2,2'-methylenebis[(4R)-4-benzyl-5,5-dimethyloxazoline]nickel dibromide, 2,2'-methylenebis[(4R)-4-benzyl-5,5-diethyloxazoline]nickel dibromide, 2,2'-methylenebis[(4R)-4-benzyl-5,5-di-n-propyloxazoline]nickel dibromide, 2,2'-methylenebis[(4R)-4-benzyl-5,5-diisopropyloxazoline]nickel dibromide, 2,2'-methylenebis[(4R)-4-benzyl-5,5-dicyclohexyloxazoline]nickel dibromide, 2,2'-methylenebis[(4R)-4-benzyl-5,5-diphenyl)oxazoline]nickel dibromide, 2,2'-methylenebis[(4R)-4-benzyl-5,5-di-(2-methylphenyl)oxazoline]nickel dibromide, 2,2'-methylenebis[(4R)-4-benzyl-5,5-di-(3-methylphenyl)oxazoline]nickel dibromide, 2,2'-methylenebis[(4R)-4-benzyl-5,5-di-(4-methylphenyl)oxazoline]nickel dibromide, 2,2'-methylenebis[(4R)-4-benzyl-5,5-di-(2-methoxyphenyl)oxazoline]nickel dibromide, 2,2'-methylenebis[(4R)-4-benzyl-5,5-di-(3-methoxyphenyl)oxazoline]nickel dibromide, 2,2'-methylenebis[(4R)-4-benzyl-5,5-di-(4-methoxyphenyl)oxazoline]nickel dibromide, 2,2'-methylenebis [spiro{(4R)-4-benzyloxazoline-5,1'-cyclobutane}]nickel dibromide, 2,2'-methylenebis[spirol(4R)-4-benzyloxazoline-5,1'-cyclopentane}]nickel dibromide, 2,2'-methylenebis[spiro{(4R)-4-benzyloxazoline-5,1'-cyclohexane}]nickel dibromide, 2,2'-methylenebis[spiro{(4R)-4-benzyloxazoline-5,1'-cycloheptane}]nickel dibromide, and compounds in which (4R) in

each of the above-mentioned compounds corresponds to (4S). Further, examples of the meso type isomer include compounds in which (4R) of two skeletons in each of the compounds which are mentioned above as the optically active substances of bisoxazolines were changed to (4R) of one oxazoline skeleton and (4S) of another oxazoline skeleton, and [hydrotris(3,5-dimethylpyrazolyl)borate]nickel chloride, [hydrotris(3,5-dimethylpyrazolyl)borate]nickel bromide, [hydrotris(3,5-dimethylpyrazolyl)borate]nickel iodide, [hydrotris(3,5-dimethylpyrazolyl)borate]nickel methyl, [hydrotris(3,5-dimethylpyrazolyl)borate]nickel ethyl, [hydrotris(3,5-dimethylpyrazolyl)borate]nickel allyl, [hydrotris(3,5-dimethylpyrazolyl)borate]nickel methallyl, [hydrotris(3,5-diethylpyrazolyl)borate]nickel chloride, [hydrotris(3,5-diethylpyrazolyl)borate] nickel bromide, [hydrotris(3,5-diethylpyrazolyl)borate]nickel iodide, [hydrotris(3,5-diethylpyrazolyl)borate]nickelmethyl, [hydrotris(3,5-diethylpyrazolyl)borate]nickel ethyl, [hydrotris(3,5-diethylpyrazolyl)borate]nickel allyl, [hydrotris(3,5-diethylpyrazolyl)borate]nickel methallyl, [hydrotris(3,5-di-tert-butylpyrazolyl)borate]nickel chloride, [hydrotris(3,5-di-tert-butylpyrazolyl)borate]nickel bromide, [hydrotris(3,5-di-tert-butylpyrazolyl)borate]nickel iodide, [hydrotris(3,5-di-tert-butylpyrazolyl)borate]nickel methyl, [hydrotris(3,5-di-tert-butylpyrazolyl)borate]nickel ethyl, [hydrotris(3,5-di-tert-butylpyrazolyl)borate]nickel allyl, [hydrotris(3,5-di-tert-butylpyrazolyl)borate]nickel methallyl, compounds indicated by the structural formula described below:

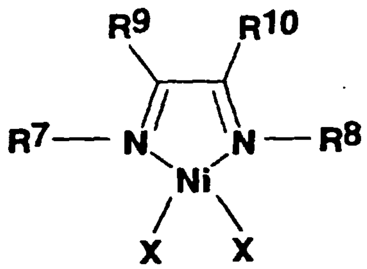

(wherein each of $R^7$ and $R^8$ is a 2,6-diisopropylphenyl group, and X, $R^9$ and $R^{10}$ are any one of the combination of the substituents represented in Table 1 described below.) $R^9$ and $R^{10}$ may be one bi-valent group (e.g. a acenaphthyl group) in one united body.

Table 1

| | | |
|---|---|---|
| $R^9$=$R^{10}$=H<br>X= F | $R^9$=$R^{10}$=methyl<br>X= F | Acenaphthyl by $R^9$ & $R^{10}$<br>X= F |
| $R^9$=$R^{10}$=H<br>X= Cl | $R^9$=$R^{10}$=methyl<br>X= Cl | Acenaphthyl by $R^9$ & $R^{10}$<br>X= Cl |
| $R^9$=$R^{10}$=H<br>X= I | $R^9$=$R^{10}$=methyl<br>X= I | Acenaphthyl by $R^9$ & $R^{10}$<br>X= I |
| $R^9$=$R^{10}$=H<br>X= Methyl | $R^9$=$R^{10}$=methyl<br>X= methyl | Acenaphthyl by $R^9$ & $R^{10}$<br>X= methyl |
| $R^9$=$R^{10}$=H<br>X= Ethyl | $R^9$=$R^{10}$=methyl<br>X= ethyl | Acenaphthyl by $R^9$ & $R^{10}$<br>X= ethyl |
| $R^9$=$R^{10}$=H<br>X= n-propyl | $R^9$=$R^{10}$=methyl<br>X= n-propyl | Acenaphthyl by $R^9$ & $R^{10}$<br>X= n-propyl |
| $R^9$=$R^{10}$=H<br>X= isopropyl | $R^9$=$R^{10}$=methyl<br>X= isopropyl | Acenaphthyl by $R^9$ & $R^{10}$<br>X= isopropyl |
| $R^9$=$R^{10}$=H<br>X= n-butyl | $R^9$=$R^{10}$=methyl<br>X= n-butyl | Acenaphthyl by $R^9$ & $R^{10}$<br>X= n-butyl |
| $R^9$=$R^{10}$=H<br>X= phenyl | $R^9$=$R^{10}$=methyl<br>X= phenyl | Acenaphthyl by $R^9$ & $R^{10}$<br>X= phenyl |
| $R^9$=$R^{10}$=H<br>X= benzyl | $R^9$=$R^{10}$=methyl<br>X= benzyl | Acenaphthyl by $R^9$ & $R^{10}$<br>X= benzyl |

Further, compounds wherein a nickel atom is replaced with a palladium atom, a cobalt atom, a rhodium atom or a ruthenium atom can be similarly exemplified in the above-mentioned nickel compounds.

Among the transition metal compounds, specific examples of a compound in which a transition metal atom is an iron atom include 2,6-bis-[1-(2,6-dimethylphenylimino)ethyl]pyridineiron dichloride, 2,6-bis-[1-(2,6-diisopropylphenylimino)ethyl] pyridineiron dichloride, 2,6-bis-[1-(2-tert-butylphenylimino)ethyl]pyridineiron dichloride, [hydrotris(3,5-dimethylpyrazolyl)borate]iron chloride, [hydrotris(3,5-dimethylpyrazolyl) borate]iron bromide, [hydrotris(3,5-dimethylpyrazolyl)borate]iron iodide, [hydrotris(3,5-dimethylpyrazolyl)borate]iron methyl, [hydrotris(3,5-dimethylpyrazolyl)borate] iron ethyl, [hydrotris(3,5-dimethylpyrazolyl)borate]iron allyl, [hydrotris(3,5-dimethylpyrazolyl)borate]iron methallyl, [hydrotris(3,5-diethylpyrazolyl) borate]iron chloride, [hydrotris(3,5-diethylpyrazolyl)borate]iron bromide, [hydrotris(3,5-diethylpyrazolyl)borate]iron iodide, [hydrotris(3,5-diethylpyrazolyl)borate]iron methyl, [hydrotris(3,5-diethylpyrazolyl)borate]iron ethyl, [hydrotris(3,5-diethylpyrazolyl)borate]iron allyl, [hydrotris(3,5-diethylpyrazolyl)borate]iron methallyl, [hydrotris(3,5-di-tert-butylpyrazolyl)borate]iron chloride, [hydrotris(3,5-di-tert-butylpyrazolyl)borate]iron bromide, [hydrotris (3,5-di-tert-butylpyrazolyl)borate]iron iodide, [hydrotris(3,5-di-tert-butylpyrazolyl)borate]iron methyl, [hydrotris(3,5-di-tert-butylpyrazolyl)borate]iron ethyl, [hydrotris(3,5-di-tert-butylpyrazolyl)borate]iron allyl and [hydrotris(3,5-di-tert-butylpyrazolyl)borate]iron methallyl.

Further, compounds wherein an iron atom is replaced with a cobalt atom or a nickel atom can be similarly exemplified in the above-mentioned iron compounds.

These transition metal compounds may be used alone, or in combination of 2 or more kinds of the compounds.

(C) Organoaluminum compound

As the organoaluminum compound of the component(C) used in the olefin polymerization catalyst of the present invention, well-known organoaluminum compounds can be used. An organoaluminum compound indicated by the general formula (4) is preferable.

$$R_c\,A\,1\,Y_{3-c} \qquad (4)$$

(wherein R represents a hydrocarbon group having 1 to 8 carbon atoms, Y represents a hydrogen atom and/or a halogen atom, and c represents a number satisfying an equation of $0 < c \leqq 3$.)

R in the general formula (4) representing the organoaluminum compound is preferably an alkyl, and specific examples include a methyl group, an ethyl group, a n-propyl group, a n-butyl group, an isobutyl group, a n-hexyl group, a 2-methylhexyl group and a n-octyl group and a methyl group, an ethyl group, a n-butyl group, an isobutyl group and a n-hexyl group are preferable. When Y is a halogen atom, specific examples include a fluorine atom, a chlorine atom, a bromine atom and an iodine atom, and a chlorine atom is preferable.

Specific examples of the organoaluminum compound represented by the above-mentioned general formula (4) include trialkylaluminums such as trimethylaluminum, triethylaluminum, tri-n-propylaluminum, tri-n-butylaluminum, triisobutylaluminum, tri-n-hexylaluminum and tri-n-octylaluminum; dialkylaluminum chlorides such as dimethylaluminum chloride, di-n-butylaluminum chloride, diisobutylaluminum chloride and di-n-hexylaluminum chloride; alkylaluminum dichlorides such as methylaluminum dichloride, ethylaluminum dichloride, n-propylaluminum dichloride, n-butylaluminum dichloride, isobutylaluminum dichloride and n-hexylaluminum dichloride; and dialkylaluminum hydrides such as dimethylaluminum hydride, diethylaluminum hydride, di-n-propylaluminum hydride, di-n-butylaluminum hydride, diisobutylaluminum hydride and di-n-hexylaluminum hydride.

Among these, trialkylaluminums are preferable and trimethylaluminum, triethylaluminum, tri-n-butylaluminum, triisobutylaluminum or tri-n-hexylaluminum is more preferable.

These organoaluminum compounds may be used alone or in combination of 2 or more kinds.

(D) Boron compound

As the boron compound (D) in the present invention, there can be used any one of (D1) a boron compound represented by the general formula $BQ^1Q^2Q^3$, (D2) a boron compound represented by the general formula $G^+(BQ^1Q^2Q^3Q^4)^-$ and (D3) a boron compound represented by the general formula $(L\text{-}H)^+(BQ^1Q^2Q^3Q^4)^-$.

In the boron compound (D1) represented by the general formula $BQ^1Q^2Q^3$, B represents a boron atom in the trivalent valence state; $Q^1$ to $Q^3$ may be the same or different and represent a halogen atom, a hydrocarbon group, a halogenated hydrocarbon group, a substituted silyl group, an alkoxy group or a di-substituted amino group. Each of $Q^1$ to $Q^3$ is preferably a halogen atom, a hydrocarbon group having 1 to 20 carbon atoms, a halogenated hydrocarbon group having 1 to 20 carbon atoms, a substituted silyl group having 1 to 20 carbon atoms, an alkoxy group having 1 to 20 carbon atoms or an amino group having 2 to 20 carbon atoms, more preferably a hydrocarbon group having 1 to 20 carbon atoms or a halogenated hydrocarbon group having 1 to 20 carbon atoms.

Specific examples of the compound (D1) include tris(pentafluorophenyl)borane, tris(2,3,5,6-tetrafluorophenyl) borane, tris(2,3,4,5-tetrafluorophenyl)borane, tris(3,4,5-trifluorophenyl)borane, tris(2,3,4-trifluorophenyl) borane and phenylbis(pentafluorophenyl) borane, most preferably tris(pentafluorophenyl) borane.

In the boron compound (D2) represented by the general formula $G^+(BQ^1Q^2Q^3Q^4)^-$, $G^+$ represents an inorganic or organic cation; B represents a boron atom in the trivalent valence state; and $Q^1$ to $Q^4$ are as defined in $Q^1$ to $Q^3$.

Specific examples of $G^+$ as an inorganic cation in the compound represented by the general formula $G^+$ $(BQ^1Q^2Q^3Q^4)^-$ include ferrocenium cation, alkylsubstituted ferrocenium cation and silver cation Examples of the $G^+$ as an organic cation include triphenylmethyl cation. $G^+$ is preferably a carbenium cation, particularly a triphenylmethyl cation. Examples of $(BQ^1Q^2Q^3Q^4)^-$ include tetrakis(pentafluorophenyl)borate, tetrakis(2,3,5,6-tetrafluorophenyl)borate, tetrakis(2,3,4,5-tetrafluorophenyl)borate, tetrakis(3,4,5-trifluorophenyl)borate, tetrakis(2,3,4-trifluorophenyl)borate, phenyltris(pentafluorophenyl)borate and tetrakis (3,5-bistrifluoromethylphenyl)borate.

Specific combinations of them include ferroceniumtetrakis(pentafluorophenyl)borate, 1,1'-dimethylferroceniumtetrakis(pentafluorophenyl)borat e, silvertetrakis(pentafluorophenyl)borate, triphenylmethyltetrakis(pentafluorophenyl)borate and triphenylmethyltetrakis(3,5-bistrifluoromethylphenyl)borate, most preferably triphenylmethyltetrakis (pentafluorophenyl)borate.

In the boron compound (D3) represented by the formula $(L\text{-}H)^+(BQ^1Q^2Q^3Q^4)^-$, L represents a neutral Lewis base; $(L\text{-}H)^+$ represents a Brϕnsted acid; B represents a boron atom in the trivalent valence state; and $Q^1$ to $Q^4$ are as defined in $Q^1$ to $Q^3$.

Specific examples of $(L\text{-}H)^+$ as a Brϕnsted acid in the compound represented by the formula $(L\text{-}H)^+$ $(BQ^1Q^2Q^3Q^4)^-$ include trialkyl-substituted ammoniums, N,N-dialkylaniliniums, dialkylammoniums and triarylphosphoniums, and examples of $(BQ^1Q^2Q^3Q^4)^-$include those as defined above.

Specific combination of them include triethylammoniumtetrakis(pentafluorophenyl)borate, tripropylammoniumtetrakis(pentafluorophenyl)borate, tri(n-butyl)ammoniumtetrakis(pentafluorophenyl) borate, tri(n-butyl)ammoniumtetrakis(3,5-bistrifluoromethylphenyl)borate, N,N-dimethylaniliniumtetrakis(pentafluorophenyl)borate, N,N-diethylaniliniumtetrakis(pentafluorophenyl) borate, N,N-2,4,6-pentamethylaniliniumtetrakis (pentafluorophenyl)borate, N,N-dimethylaniliniumtetrakis(3,5-bistrifluoromethylphenyl)borate, diisopropylammoniumtetrakis (pentafluorophenyl) borate, dicyclohexylammoniumtetrakis (pentafluorophenyl)borate, triphenylphosphoniumtetrakis(pentafluorophenyl) borate, tri (methylphenyl)phosphoniumtetrakis (pentafluorophenyl)borate, tri(dimethylphenyl) phosphoniumtetrakis(pentafluorophenyl)borate, etc., most preferably tri(n-butyl) ammoniumtetrakis (pentafluorophenyl)borate or N,N-dimethylanilinumtetrakis(pentafluorophenyl) borate.

The amount ratio (molar ratio) of respective catalyst components used in the present invention is not specifically limited. The molar ratio of the modified aluminum oxy compound of component(A) to the transition metal compound of component (B) [(A)/(B)] is preferably in the range of 1/1 to 10000/1, and more preferably 1/1 to 5000/1.

When the organoaluminum compound of component (C) is used, the molar ratio of (B) to (C)[(B)/(C)] is preferably in the range of 1/0.1 to 1/10000, more preferably 1/1 to 1/5000 and most preferably 1/1 to 1/1000.

When the boron compound of component (D) is used, the molar ratio of (B) to (D)[(B)/(D)] is preferably in the range of 1/0.01 to 1/100, more preferably 1/0.5 to 1/10.

A method of supplying respective catalyst components into a polymerization reactor is not specifically limited. The modified aluminum oxy compound (A), the transition metal compound (B), if necessary, further, the organoaluminum compound (C), if necessary, moreover, the boron compound(D) may be charged after previously contacted, and may be separately charged in the reactor. After arbitrally contains two components among these, the remaining component (s) may be contacted.

When the respective components are used in a solution, each of the concentrations of the modified aluminum oxy compound(A) and the organoaluminum compound (C) is usually 0.0001 to 100 mol/L in terms of Al atom, and preferably 0.01 to 10mol/L, respectively. The concentration of the transition metal compound (B) is usually 0.0001 to 100 mmol/L in terms of the transition metal atom, and preferably 0.01 to 50mmol/L. The concentration of the boron compound (D) is usually 0.001 to 500 mmol/L in terms of the boron atom, and preferably 0.01 to 250mmol/L.

The method of supplying each of the catalyst components in a reactor is not specifically limited. There is illustrated a method of supplying each of the components in a solid condition, a method of charging each of the components as a solution in which it is dissolved in a hydrocarbon solvent or in a slurry state in which it is suspended.

The polymerization process is not specifically limited, and includes a solvent polymerization using an aliphatic hydrocarbon such as butane, pentane, hexane, heptane or octane; an aromatic hydrocarbon such as toluene; or a halogenated hydrocarbon such as methylene dichloride, as a solvent, or a slurry polymerization, a bulk polymerization which is carried out in a liquid monomer, a gas phase polymerization in which polymerization is conducted in a gaseous monomer or a high-pressure process in which polymerization is conducted in a supercritical fluid condition of a monomer under high temperature and high pressure. As the polymerization process, both of a batch-wise polymerization and a continuous polymerization are possible.

The polymerization temperature is usually -50°C to 300°C and preferably -20°C to 250°C. The polymerization

pressure is usually 0.1 to 300Mpa, preferably 0.1 to 200MPa, and more preferably 0.1 to 100MPa. In general, the polymerization time is appropriately determined according to the kind of a desired polymer and a reaction apparatus, and 1 minute to 20 hours can be adopted. The polymerization catalyst of the present invention can be applied to polymerization of olefins. As monomers which can be applied, olefins and diolefins having 2 to 20 carbon atoms can be used, and ethylene and α-olefins having 3 to 20 carbon atoms are preferable. Two or more monomers can also be used, simultaneously. These specific examples include ethylene, propylene, 1-butene, 1-pentene, 4-methyl-1-pentene, 5-methyl-1-hexene, 1-hexene, 1-heptene, 1-octene, 1-nonene, 1-decene, vinylcyclohexane, norbornene, 1,3-butadiene, 1,4-heptadiene, 1,5-hexadiene, 1,7-octadiene and 5-ethylidene-2-norbornene.

The present invention can be applied to the homopolymerization or copolymerization of these olefins. Specific examples of the monomers constituting a copolymer include ethylene-α-olefin having 3 to 20 carbon atoms such as ethylene-propylene, ethylene-1-butene and ethylene-1-hexene, said α-olefins such as propylene-1-butene, but the present invention should not be limited thereto. As the olefin polymer, copolymers of ethylene with an α-olefin (so-called LLDPE, namely linear low density polyethylene) are preferably adopted. And, homopolymers of an α-olefin are preferably adopted, among them, a homopolymer of 1-butene is particularly adopted. α-olefin homopolymers of ultra high molecular weight can be obtained by using the polymerization catalyst of the invention.

Further, the polymerization catalyst of the present invention can be also applied to homopolymerization of an alkenyl aromatic hydrocarbon or to copolymerization of at least one alkenyl aromatic hydrocarbon and at least one olefin.

Alkenyl aromatic hydrocarbon polymers of high molecular weight, particularly copolymers of at least one alkenyl aromatic hydrocarbon and at least one olefin, having a number average molecular weight of 700,000 or more and a molecular weight distribution in terms of a ratio [Mw/Mn] of weight average molecular weight(Mw) to number average molecular weight(Mn) of 1.85 to 2.5, can be produced with a high activity by using the polymerization catalyst of the present invention. Further, as the copolymers, those having a number average molecular weight of 750,000 or more can be also produced.

Specific examples of the alkenyl aromatic hydrocarbon include alkyl styrenes such as p-methylstyrene, m-methylstyrene, o-methylstyrene, p-ethylstyrene, m-ethylstyrene, o-ethylstyrene, 2,4-dimethylstyrene, 2,5-dimethylstyrene, 3,4-dimethyl styrene, 3,5-dimethyl styrene, 3-methyl-5-ethylstyrene, p-tert-butylstyrene and p-sec-butylstyrene and the like, alkenyl benzenes such as styrene, 2-phenylpropylene and 2-phenylbutene, bisalkenyl benzenes such as divinylbenzene, vinylnaphthalenes such as 1-vinylnaphthalene.

And, styrene, p-methylstyrene, m-methylstyrene, o-methylstyrene, p-tert-butylstyrene, 2-phenylpropylene, divinylbenzene and 1-vinylnaphthalene are preferred, and, among these, styrene is particularly preferred. As olefins, the olefins as described above are used.

A chain transfer agent such as hydrogen can also be added to adjust the molecular weight of the polymer.

The present invention is illustrated in detail according to Examples and Comparative Examples below, but not limited thereto.

Properties of the olefin polymers in Examples were measured according to methods described below.

(1) Intrinsic viscosity [η]:

It was measured in tetralin solution at 135°C using an Ubbelohde viscometer.(Unit: dl/g)

(2) Molecular weight distribution (Mw/Mn):

It was measured under the conditions described below according to gel permeation chromatography (GPC). Molecular weight distribution was represented by a ratio of weight average molecular weight(Mw) to number average molecular weight(Mn)(Mw/Mn). Further, the calibration curve was made using a standard polystyrene. Measuring conditions of Examples and Comparative

Examples as follows:

(2-1)

(in Examples 1-22 and 25 and Comparative Examples 1-8) Measurement machine: 150C type, manufactured by Milipore Waters Co.
Column: TSK gel GMH6-HT
Measurement temperature: 145°C
Solvent: ortho-dichlorobenzene
Sample concentration: 10mg/10ml(when the molecular weight is particularly high, the measurement was carried out at a lowered concentration.)

(2-2)

(in Examples 23-24 and Comparative Examples 9-10) Measurement machine: 800 Series, manufactured by JASCO Co.
Column: Shodex A806M
Measurement temperature: 45°C
Solvent: tetrahydrofuran
Sample concentration: 0.5 mg/ml

(3) Melting point of polymer

(in Examples 11-18 and 20-21 and Comparative Examples 5-8)
It was measured under the conditions below using a differential scanning calorimeter (DSC) (SSC-5000 series thermal analysis system manufactured by Seiko Instruments Inc.).
Heating: 40°C to 150°C (10°C/minute), retention for 5 minutes
Cooling: 150°C to 10°C (5°C/minute), retention for 10 minutes
Measurement: 10°C to 160°C
(heating at 5°C/minute)

(4)Glass transition temperature and melting point (in Examples 23-24 and Comparative Example 9-10)

It was measured under the conditions below using a differential scanning calorimeter (DSC) (DSC-5200 manufactured by Seiko Instruments Inc.).
Heating: 20°C to 200°C (20°C/minute), retention for 10 minutes
Cooling: 200°C to -50°C (20°C/minute), retention for 10 minutes
Measurement: -50°C to 300°C
(heating at 20°C/minute)

(5)α-olefin unit content of copolymer

It was determined from the characteristic absorptions of ethylene and α-olefin and indicated in terms of the number of short branches per 1000 carbon atoms (SCB) in the copolymer.

(6)$^{27}$Al-solid NMR spectrum

NMR spectrometer having a super conductive magnet of 7.0T ($^{1}$H observation frequency of 300 MHz)(ASX-300(WB) manufactured by Bruker Ltd.) was used, and a measuring probe having a rotation cell diameter of 4 mm was used.
Nitrogen gas was used as a gas for rotating the cell, and the measurement was carried out after the inner atmosphere of a housing of the measuring probe was thoroughly replaced with nitrogen. Modified aluminum oxy compounds and aluminum oxy compounds samples were prepared by drying the solution thereof under reduced pressure to remove the solvent thereby to dry and solidify the solution. In a nitrogen box, the solid NMR measurement sample was packed in a rotation cell of a diameter of 4 mm for solid NMR measurement in a predetermined amount so that the cell could be stably rotated. The rotation speed of the cell was adjusted between 12 to 14kHz, and the measurement was carried out in the room being adjusted at 20°C(the measuring temperature was about 15 to about 20°C). As a measurement pulse series, there was used a pulse series in which a de-coupler is off in the HPDEC method. The pulse width was set to 0.5 μ seconds which was narrower than 90° pulse width used in a solution $^{27}$Al-NMR spectrum. The pulse interval was set to 2 seconds. The width of the spectrum was set to 800 ppm as a width of the chemical shift of $^{27}$Al. As the standard of the chemical shift, the peak appeared at higher magnetic field side was determined as 7 ppm using an active alumina of LC column packing. After completion of the measurement, the obtained data are subjected to Fourier transfer to obtain an $^{27}$Al-solid NMR spectrum. In the obtained $^{27}$Al-solid NMR spectrum, the phase and baseline correction thereof were compensated so that the heights of bases of the highest magnetic field peak group and the lowest magnetic field peak group among peak groups appeared from a vicinity of -150 ppm to a vicinity of 150ppm, mutually became the same height, and the spectrum of a part in which no peak is observed in regions -150 ppm under and 150 ppm over, became parallel to the chemical shift axis (axis of abscissa) as far as possible. The baseline as a standard was drawn between bases of the highest magnetic field peak group and the lowest magnetic field peak group so that it became parallel to the chemical shift axis (axis of abscissa) as far as possible. A vertical line was drawn at 10 ppm to the chemical shift axis (axis of abscissa), and the distance(length) between the intersecting point of the vertical line with baseline and the intersecting point of the vertical line with the spectrum was measured. And, when a vertical was drawn

at 30 ppm to the chemical shift axis(axis of abscissa), the distance between the intersecting point of the vertical line with the baseline and the intersecting point of the vertical line with the spectrum was measured.

Reference Example 1

[Synthesis example of Dimethylsilylene(tetramethylcyclopentadienyl)(3-tert-butyl-5-methyl-2-phenoxy)titanium dimethoxide <compound 1>]

Methanol of 0.131 g(4.1 mmol) was dissolved with 10ml of anhydrous diethylether in a Schlenk tube, and then a diethyl ether solution of methyl lithium (3.9ml, 4.1mmol) having a concentration of 1.05mol/L was added thereto dropwise at -78°C. The resulting reaction solution was heated to 20°C, the formation of lithium methoxide was confirmed by the completion of a releasing of a gas, and then was cooled to -78°C again. An anhydrous dimethyl ether suspension (20 ml) of 0.919 g(2.0 mmol) of dimethylsilylene(tetramethylcyclopentadienyl)(3-tert-butyl-5-methyl-2-phenoxy)titanium dichloride prepared previously in another Schlenk tube was transferred into the reaction solution above, thereafter the resulting reaction mixture was heated gradually to room temperature. After the thus obtained reaction solution was concentrated, 20 ml of toluene was added thereto, and then the insoluble matter was removed by filtration. The filtrate was concentrated to obtain dimethylsilylene (tetramethylcyclopentadienyl)(3-tert-butyl-5-methyl-2-phenoxy)titanium dimethoxide as a yellow crystal(yield 0.86g, 95%). $^1$H-NMR(270MHz,$C_6D_6$) $\delta$ 7.26(m, 2H), 4.13(s, 6H), 2.33(s, 3H), 1.97 (s, 6H), 1.89(s, 6H), 1.59(s, 9H), 0.55(s, 6H)

Example 1

A 100ml stainless autoclave was replaced with argon, 2.5mmol(in terms of Al atom) of MMAO3A (toluene solution having an Al concentration of 5.9% by weight, hereinafter, may be abbreviated as "MMAO" ) manufactured by TOSOH-AKZO Co., Ltd. of a toluene solution and 0.5mmol of water were charged therein, and the mixture was stirred for 10 minutes. Further, 0.5mmol of pentafluorophenol(toluene solution: 2mol/l) was added, and the resultant was stirred for 10 minutes. In addition, the ratio H2/H1 of the MMAO3A was 0.27 as shown in Fig.1, the ratio L2/L1 of the dried reaction product of the MMAO3A and water was 0.75 as shown in Fig. 2, and the ratio M2/M1 of the dried modified aluminum oxy compound was 1.26 as shown in Fig.3.

On the other hand, in an egg-plant type flask of a volume of 25ml in which the atmosphere was replaced with argon, 1ml of purified toluene and 0.5 $\mu$ mol of 2,2'-thiobis(4-methyl-6-tert-butylphenoxy)titanium dichloride were mixed with stirring, and then the solution was charged into the fore-mentioned autoclave using a syringe.

After the resulting catalyst solution was stirred at room temperature for 10 minutes, 30g of 1-butene was charged and polymerization was carried out at 40°C for 15 minutes. After completion of the reaction, the unreacted 1-butene was purged out, the contents of the autoclave were charged into about 10-fold acidic methanol, and the precipitated polymer was separated by filtration and then dried for about 2 hours at 80°C. As a result, 0.17g of poly(1-butene) was obtained. Polymerization activity (gram of polymer per 1 mol of Ti per 1 hour) was $1.34\times10^6$ g/mol-Ti hr. The [$\eta$] of the poly(1-butene) was 10.9 dl/g and Mw/Mn was 2.0.

Example 2

A 100ml stainless autoclave was replaced with argon, 5mmol of MMAO of a toluene solution and 1mmol of pentafluorophenol(toluene solution: 2mol/l) were added, and the mixture was stirred for 10 minutes. Further, 1mmol of water was added, and the mixture was stirred for 10 minutes.
In addition, the ratio H2/H1 of the MMAO3A was 0.27 as shown in Fig.1, the ratio N2/N1 of the dried reaction product of the MMAO3A and pentafluorophenol was 0.57 as shown in Fig. 4, and the ratio M2/M1 of the dried modified aluminum oxy compound was 0.70 as shown in Fig. 5.

On the other hand, in an egg-plant type flask of a volume of 25ml in which the atmosphere was replaced with argon, 5ml of purified toluene and 2.5 $\mu$ mol of 2,2'-thiobis(4-methyl-6-tert-butylphenoxy)titanium dichloride were mixed with stirring, and then the solution was charged into the fore-mentioned autoclave using a syringe.

After the resulting catalyst solution was stirred at room temperature for 10 minutes, 30g of 1-butene was charged and polymerization was carried out at 40°C for 15 minutes. After completion of the reaction, the unreacted 1-butene was purged out, the content of the autoclave was charged into about 10-fold acidic methanol, and the precipitated polymer was separated by filtration and then dried at 80°C for about 2 hours. As a result, 0.61 g of poly(1-butene) was obtained. Polymerization activity was $9.80\times10^5$ g/mol-Ti · hr. The [$\eta$] of the poly(1-butene) was 10.2dl/g and Mw/Mn was 2.0.

Comparative Example 1

A 100ml stainless autoclave was replaced with argon, 5mmol of MMAO of a toluene solution was added thereto. On the other hand, in an egg-plant type flask of a volume of 25ml in which the atmosphere was replaced with argon, 5ml of purified toluene and 2.5 μ mol of 2,2'-thiobis(4-methyl-6-tert-butylphenoxy)titanium dichloride were mixed with stirring, and then the solution was charged into the fore-mentioned autoclave using a syringe. After the resulting catalyst solution was stirred at room temperature for 10 minutes, 30g of 1-butene was charged and polymerization was carried out at 40°C for 15 minutes. After completion of the reaction, the 1-butene that was unreacted was purged out, the content of the autoclave was charged into about 10-fold acidic methanol, and the precipitated polymer was separated by filtration and then dried at 80°C for about 2 hours. As a result, 0.024 g of poly(1-butene) was obtained. Polymerization activity was $3.80 \times 10^4$ g/mol-Ti · hr. The [η] of the poly(1-butene) was 0.53dl/g.

Comparative Example 2

A 100ml stainless autoclave was replaced with argon, 2.5mmol of MMAO of a toluene solution and 0.5mmol of water were added thereto, and the mixture was stirred for 10minutes.

On the other hand, in an egg-plant type flask of a volume of 25ml in which the atmosphere was replaced with argon, 1ml of purified toluene and 0.5 μ mol of 2,2'-thiobis(4-methyl-6-tert-butylphenoxy)titanium dichloride were mixed with stirring, and then the solution was charged into the fore-mentioned autoclave using a syringe. After the resulting catalyst solution was stirred at room temperature for 10 minutes, 30g of 1-butene was charged and polymerization was carried out at 40°C for 15 minutes. After completion of the reaction, the unreacted 1-butene was purged out, the content of the autoclave was charged into about 10-fold acidic methanol, and the precipitated polymer was separated by filtration and then dried at 80°C for about 2 hours. As a result, 0.055 g of poly(1-butene) was obtained. Polymerization activity was $4.37 \times 10^5$g/mol-Ti · hr. The [η] of the poly(1-butene) was 5.90 dl/g.

Comparative Example 3

A 100ml stainless autoclave was replaced with argon, 5mmol of MMAO of a toluene solution and 1mmol of pentafluorophenol(toluene solution: 2mol/l) were added thereto, and the mixture was stirred for 10 minutes.

On the other hand, in an egg-plant type flask of a volume of 25ml in which the atmosphere was replaced with argon, 5ml of purified toluene and 2.5 μ mol of 2,2'-thiobis(4-methyl-6-tert-butylphenoxy)titanium dichloride were mixed with stirring, and then the solution was charged into the fore-mentioned autoclave using a syringe. After the resulting catalyst solution was stirred at room temperature for 10 minutes, 30g of 1-butene was charged and polymerization was carried out at 40°C for 15 minutes. After completion of the reaction, the unreacted 1-butene was purged out, the content of the autoclave was charged into about 10-fold acidic methanol, and the polymer precipitated was separated by filtration to be dried at 80°C for about 2 hours. As a result, 0.23 g of poly(1-butene) was obtained. Polymerization activity was $3.65 \times 10^5$ g/mol-Ti · hr. The [η] of the poly(1-butene) was 5.16 dl/g.

Example 3

Example 1 was repeated except that 0.3mmol of triphenyl methanol in place of pentafluorophenol was used. As a result, 0.14 g of poly(1-butene) was obtained. Polymerization activity was $1.11 \times 10^6$ g/mol-Ti · hr. The [η] of the poly(1-butene) was 6.0 dl/g, and Mw/Mn was 1.9.

Example 4

Example 1 was repeated except that 0.25mmol of tricyclohexylmethanol in place of pentafluorophenol was used. As a result, 0.16 g of poly(1-butene) was obtained. Polymerization activity was $1.23 \times 10^6$ g/mol-Ti - hr. The [η] of the poly(1-butene) was 7.7 dl/g.

Example 5

Example 1 was repeated except that 0.5mmol of 1,1,1,3,3,3-hexafluoroisopropanol in place of pentafluorophenol was used. As a result, 0.13 g of poly(1-butene) was obtained. Polymerization activity was $1.00 \times 10^6$ g/mol-Ti · hr.

Example 6

A 100ml stainless autoclave was replaced with argon, 5mmol of MMAO of a toluene solution and 1mmol of

water were added, and the mixture was stirred for 10 minutes. Further, 1mmol of pentafluorophenol ( toluene solution: 2mol/l) was added, and the mixture was stirred for 10 minutes.

On the other hand, in an egg-plant type flask of a volume of 25ml in which the atmosphere was replaced with argon, 5ml of purified toluene and 2.5 μ mol of (tert-butylamido) (tetramethylcyclopentadienyldimethylsilane)titanium dichloride were mixed with stirring, and then the solution was charged into the fore-mentioned autoclave using a syringe. After the resulting catalyst solution was stirred at room temperature for 10 minutes, 30g of 1-butene was charged and polymerization was carried out at 40°C for 15 minutes. After completion of the reaction, the unreacted 1-butene was purged out, the content of the autoclave was charged into about 10-fold acidic methanol, and the precipitated polymer was separated by filtration and then dried at 80°C for about 2 hours. As a result, 0.18 g of poly(1-butene) was obtained. Polymerization activity was $2.80 \times 10^5$g/mol-Ti · hr. The [η] of the poly(1-butene) was 1.31 dl/g.

Comparative Example 4

A 100ml stainless autoclave was replaced with argon, 10mmol of MMAO of a toluene solution was added thereto.

On the other hand, in an egg-plant type flask of a volume of 25ml in which the atmosphere was replaced with argon, 5ml of purified toluene and 10 μ mol of (tert-butylamido) (tetramethylcyclopentadienyldimethylsilane)titanium dichloride were mixed with stirring, and then the solution was charged into the fore-mentioned autoclave using a syringe. After the catalyst solution was mixed by stirring at room temperature for 10 minutes, 30g of 1-butene was charged and polymerization was carried out at 40°C for 60 minutes. After completion of the reaction, the unreacted 1-butene was purged out, the content of the autoclave was charged into about 10-fold acidic methanol, and the precipitated polymer was separated by filtration and then dried at 80°C for about 2 hours. As a result, 0.02 g of poly(1-butene) was obtained. Polymerization activity was $2.04 \times 10^3$ g/mol-Ti · hr. The [η] of the poly(1-butene) was 0.50 dl/g.

Example 7

Example 6 was repeated except that isopropylidene(cyclopentadienyl)(3-tert-butyl-5-methyl-2-phenoxy)titanium dichloride in place of (tert-butylamido) (tetramethylcyclopentadienyldimethylsilane)titanium dichloride was used. As a result, 0.60 g of poly(1-butene) was obtained. Polymerization activity was $2.39 \times 10^5$g/mol-Ti · hr.

Example 8

Example 6 was repeated except that pentamethylcyclopentadienyltitanium trichloride in place of (tert-butylamido) (tetramethylcyclopentadienyldimethylsilane)titanium dichloride was used and polymerization time was 30 minutes. As a result, 1.07g of poly(1-butene) and was obtained. Polymerization activity was $8.58 \times 10^5$g/mol-Ti · hr.

Example 9

A 1 liter stainless autoclave was replaced with argon, and 200g of 1-butene was charged, 5mmol of MMAO of a toluene solution and 1mmol of water were added, and the mixture was stirred for 10 minutes. Further, 1mmol of pentafluorophenol(toluene solution: 2mol/l) was added, and the mixture was stirred for 10 minutes.

On the other hand, in an egg-plant type flask of an inner volume of 25ml in which the atmosphere was replaced with argon, 5ml of purified toluene and 2.5 μ mol of(pentamethylcyclopentadienyl)(2,6-diisopropylphenoxy)titanium dichloride were mixed with stirring, and then the solution was charged into the fore-mentioned autoclave using a syringe. Polymerization was carried out at 40°C for 60 minutes. After completion of the reaction, the unreacted 1-butene was purged out, the content of the autoclave was charged into about 10-fold acidic methanol, and the precipitated polymer was separated by filtration and then dried at 80°C for about 2 hours. As a result, 42.2g of poly(1-butene) was obtained. Polymerization activity was $1.69 \times 10^7$ g/mol-Ti · hr. The [η] of the poly(1-butene) was 0.97 dl/g and Mw/Mn was 1.8.

Example 10

Example 9 was repeated except that the polymerization temperature was 5°C. As a result, 36.2g of poly(1-butene) was obtained. Polymerization activity was $1.45 \times 10^7$g/mol-Ti · hr. The [η] of the poly(1-butene) was 3.2 dl/g and Mw/Mn was 1.8.

Example 11

A 0.4 liter stainless autoclave was replaced with argon, 198ml of toluene as a solvent and 2ml of hexene-1 as an α-olefin were charged and the temperature of the autoclave was raised to 60°C. After raising the temperature, ethylene

was fed while controlling the pressure at 0.6MPa. After stabilization of the inside of system, 2mmol of MMAO of a toluene solution and 0.4mmol of water were added, and the mixture was mixed by stirring for 10 minutes. Further, 0.4mmol of pentafluorophenol(toluene solution: 2mol/l) was added, and the mixture was mixed by stirring for 10 minutes. On the other hand, 1ml of 1mmol/L toluene solution of dimethylsilylene(tetramethylcyclopentadienyl)(3-tert-butyl-5-methyl-2-phenoxy)titanium dichloride was charged into the fore-mentioned autoclave using a syringe, and polymerization was carried out for 60 minutes. The unreacted monomer was purged out, the content of the autoclave was charged into about 10-fold acidic methanol, and the precipitated polymer was separated by filtration and then dried at 80°C for about 2 hours. As a result of the polymerization, 5.93g of ethylene-1-hexene copolymer having an [η] of 4.45 dl/g and a melting point of 68.4°C was obtained. Polymerization activity was $5.93\times10^6$g/mol-Ti·hr.

Comparative Example 5

A 0.4 liter stainless autoclave was replaced with argon, 198ml of toluene as a solvent and 2ml of 1-hexene as an α-olefin were charged and the temperature of the autoclave was heated to 60°C. After the heating, ethylene was fed while adjusting the pressure at 0.6MPa. After the system was stabilized, 2mmol of MMAO of a toluene solution and 1ml of 1mmol/L toluene solution of dimethylsilylene(tetramethylcyclopentadienyl)(3-tert-butyl-5-methyl-2-phenoxy)titanium dichloride were charged into the fore-mentioned autoclave using a syringe and polymerization was carried out for 60 minutes. The monomer unreacted was purged out, the content of the autoclave was charged into about 10-fold acidic methanol, and the precipitated polymer was separated by filtration and then dried at 80°C for about 2 hours. As a result of the polymerization, 2.16g of ethylene-1-hexene copolymer having an [η] of 1.21 dl/g and melting points of 75.6°C and 89.5°C was obtained. Polymerization activity was $2.16\times10^6$ g/mol-Ti · hr.

Comparative Example 6

A 0.4 liter stainless autoclave was replaced with argon, 198ml of toluene as a solvent and 2ml of 1-hexene as an α-olefin were charged and the temperature of the autoclave was heated to 60°C. After the heating, ethylene was fed while adjusting the pressure at 0. 6MPa. After the system was stabilized, 2mmol of MMAO of a toluene solution and 0.4mmol of water were added, and the mixture was stirred for 10minutes.

On the other hand, 1ml of 1mmol/L toluene solution of dimethylsilylene(tetramethylcyclopentadienyl)(3-tert-butyl-5-methyl-2-phenoxy)titanium dichloride was charged into the fore-mentioned autoclave using a syringe and polymerization was carried out for 60 minutes. The unreacted monomer was purged out, the content of the autoclave was charged into about 10-fold acidic methanol, and the precipitated polymer was separated by filtration and then dried at 80°C for about 2 hours. As a result of the polymerization, 0.84g of ethylene-1-hexene copolymer having an [η] of 1.54 dl/g and a melting point of 91.5°C was obtained. Polymerization activity was $8.40\times10^5$ g/mol-Ti · hr.

Example 12

Example 11 was repeated except that 2 μ mol of biscyclopentadienyltitanium dichloride in place of dimethylsilylene(tetramethylcyclopentadienyl)(3-tert-butyl-5-methyl-2-phenoxy)titanium dichloride was used. As a result of the polymerization, 9.62g of ethylene-1-hexene copolymer having an [η] of 2.00 dl/g and a melting point of 119°C was obtained. Polymerization activity was $4.81\times10^6$ g/mol-Ti · hr.

Example 13

Example 11 was repeated except that 2 μ mol of (pentamethylcyclopentadienyl)(2,6-diisopropylphenoxy)titanium dichloride in place of dimethylsilylene(tetramethylcyclopentadienyl)(3-tert-butyl-5-methyl-2-phenoxy)titanium dichloride was used. As a result of the polymerization, 12.17g of ethylene-1-hexene copolymer having an [η] of 2.78 dl/g and melting points of 51°C and 113.8°C was obtained. Polymerization activity was $6.09\times10^6$ g/mol-Ti · hr.

Example 14

Example 11 was repeated except that 2 μ mol of dimethylsilylenebisindenylhafnium dichloride in place of dimethylsilylene(tetramethylcyclopentadienyl)(3-tert-butyl-5-methyl-2-phenoxy)titanium dichloride was used. As a result of the polymerization, 11.61g of ethylene-1-hexene copolymer having an [η] of 2.25 dl/g and melting points of 71°C and 112°C was obtained. Polymerization activity was $5.81\times10^6$ g/mol-Hf · hr.

Example 15

Example 11 was repeated except that 5 μ mol of hydrotris(3,5-dimethylpyrazolylborate)titanium trichloride in place of dimethylsilylene(tetramethylcyclopentadienyl)(3-tert-butyl-5-methyl-2-phenoxy)titanium dichloride, 10mmol of MMAO, 2mmol of water and 2mmol of pentafluorophenol(toluene solution: 2mol/l) were used and polymerization temperature was 80°C. As a result of the polymerization, 2.61g of ethylene-1-hexene copolymer having an [η] of 1.42 dl/g and a melting point of 110.7°C was obtained. Polymerization activity was $5.22 \times 10^3$ g/mol-Ti·hr.

Example 16

Example 15 was repeated except that hydrotris(3,5-dimethylpyrazolylborate)zirconium trichloride in place of hydrotris(3,5-dimethylpyrazolylborate)titanium trichloride was used. As a result of the polymerization, 9.62g of ethylene-1-hexene copolymer having an [η] of 1.51 dl/g and a melting point of 123.5°C and 112°C was obtained. Polymerization activity was $1.92 \times 10^6$ g/mol-Zr · hr.

Example 17

A dropping funnel was set on a 100ml four-necked flask, the flask was replaced with nitrogen and then, a thermometer was set. 10ml of heptane as a solvent, and 20mmol of MMAO3A (manufactured by TOSOH-AKZO Co., Ltd.; heptane solution having an Al concentration of 7.0% by weight) were charged in the flask and the mixture was stirred. To the dropping funnel, 144 μ l (8mmol) of water deaerated with nitrogen and 10ml, of toluene were charged and slowly added dropwise into the flask. After completion of the dropwise addition, the dropping funnel was rinsed with 5ml of toluene and the mixture was stirred at 25 to 30°C for 30 minutes. Then, 4ml (toluene solution: 2mol/l) of pentafluorophenol and 10ml of toluene were charged to the dropping funnel, and slowly added dropwise into the flask. After completion of the dropwise addition, the dropping funnel was rinsed with 5ml of toluene and the mixture was stirred at 25 to 30°C for 1 hour. The reaction solution was concentrated under vacuum to remove the solvent and obtain a white solid (compound A).

A 0.4 liter autoclave reactor equipped with a stirrer was replaced with argon, then 185ml of cyclohexane as a solvent and 15ml of 1-hexene as an α -olefin were charged, and the reactor was heated to 180°C. After the heating, ethylene was fed while adjusting the pressure at 2.5MPa. After the system was stabilized, 50.6mg (equivalent to 0.41mmol in terms of Al atom) of the above-mentioned compound A and 0.5ml (namely, 0.5 μ mol of dimethylsilylene(tetramethylcyclopentadienyl)(3-tert-butyl-5-methyl-2-phenoxy)titanium dimethoxide (compound 1) and 25 μ mol of triisobutylaluminum) of a heptane solution (the concentration of compound 1 is 1 μ mol/ml and the concentration of triisobutylaluminum is 50 μ mol/ml, and a molar ratio of Al atom to Ti atom was adjusted at 50) in which the compound 1 and triisobutylaluminum are mixed, were charged thereto. Polymerization was carried out for 2 minutes. As a result of the polymerization, 1.38g of ethylene-1-hexene copolymer having an [η] of 2.12 dl/g and melting points of 79.5°C and 83.1°C was obtained. Polymerization activity per 1 mol of Ti atom was $2.7 \times 10^6$ g/mol-Ti per 2 minutes ($8.1 \times 10^7$ g/mol-Ti·hr).

Example 18

A dropping funnel was set on a 200ml four-necked flask, the flask was replaced with nitrogen and then, a thermometer was set. 12ml of heptane as a solvent and 20mmol of MMAO3A (manufactured by TOSOH-AKZO Co., Ltd.; heptane solution having an Al concentration of 7.0% by weight) were charged to the flask and the mixture was stirred. To the dropping funnel, 72 μ l (4mmol) of water deaerated with nitrogen and 5ml of toluene were charged and slowly added dropwise into the flask. After completion of the dropwise addition, the dropping funnel was washed with 5ml of toluene and the mixture was stirred at 25 to 30°C for 30 minutes. Then, 8ml (toluene solution: 2mol/l) of pentafluorophenol was charged to the dropping funnel and added dropwise thereto at 25 to 30°C, and the mixture was stirred at 25 to 30°C for 1 hour. A white slurry was obtained. (Al concentration: 0.5mol/L) (compound B)

A 0.4 liter autoclave reactor equipped with a stirrer was replaced with argon, then 185ml of cyclohexane as a solvent and 15ml of 1-hexene as an α -olefin were charged, and the reactor was heated to 180°C. After the heating, ethylene was fed while adjusting the pressure at 2.5MPa. After the system was stabilized, 2ml(equivalent to 1mmol, in terms of Al atom) of the above-mentioned compound B and 0.5ml (namely, 0.5 μ mol of dimethylsilylene(tetramethylcyclopentadienyl)(3-tert-butyl-5-methyl-2-phenoxy)titanium dimethoxide (compound 1) and 25 μ mol of triisobutylaluminum) of a heptane solution (the concentration of compound 1 is 1 μ mol/ml and the concentration of triisobutylaluminum is 50 μ mol/ml, and a molar ratio of Al atom to Ti atom was adjusted at 50) in which the compound 1 and triisobutylaluminum were mixed, were charged thereto. Polymerization was carried out for 2 minutes. As a result of the polymerization, 3.65g of ethylene-1-hexene copolymer having an [η] of 1.59 and melting points of 73.3°C and 84.9°C was obtained. Polymerization activity per 1 mol of Ti atom was $7.3 \times 10^6$ g/mol-Ti per 2 minutes ($2.19 \times 10^8$ g/mol-Ti - hr).

Example 19

A 1 liter stainless autoclave was replaced with argon, 200ml of toluene was charged and the temperature of the autoclave was heated to 60°C. After the heating, ethylene was fed while adjusting the pressure at 0.6MPa. After the system was stabilized, 5mmol of MMAO of a toluene solution and 1mmol of water were added, and the mixture was stirred for 10 minutes. Further, 1mmol of pentafluorophenol(toluene solution: 2mol/l) was added, and the mixture was stirred for 10 minutes.

On the other hand, 5ml of 0.5mmol/L toluene solution of 2,6-bis-[1-(2,6-diisopropylphenylimino)ethyl] pyridineiron dichloride was charged into the fore-mentioned autoclave using a syringe, and polymerization was carried out for 60 minutes. The monomer unreacted was purged out, the content of the autoclave was charged into about 10-fold acidic methanol, and the precipitated polymer was separated by filtration and then dried at 80°C for about 2 hours. As a result of the polymerization, 2.40g of polyethylene having an [η] of 1.57 dl/g was obtained. Polymerization activity 9.62 $\times 10^5$ g/mol-Fe · hr.

Example 20

A dropping funnel was set on a 200ml four-necked flask, the flask was replaced with nitrogen and then, a thermometer was set. 10ml of heptane as a solvent and 20 ml of MMAO3A (manufactured by TOSOH-AKZO Co., Ltd.; heptane solution having an Al concentration of 7.0% by weight) were charged to the flask and the mixture was stirred. To the dropping funnel, 144 μ l (8mmol) of water deaerated with nitrogen and 10ml of toluene were charged and slowly added dropwise into the flask. After completion of the dropwise addition, the dropping funnel was washed with 5ml of toluene and the mixture was stirred at 25 to 30°C for 30 minutes. Then, 4ml (toluene solution: 2mol/l) of pentafluorophenol and 10 ml of toluene were charged to the dropping funnel and added dropwise to the flask at 25 to 30°C, After completion of the dropwise addition, the dropping funnel was washed with 5ml of toluene and the mixture was stirred at 25 to 30°C for 1 hour. The reaction solution was concentrated under reduced pressure to obtain a white solid(compound C).

A 0.4 liter autoclave reactor equipped with a stirrer was replaced with argon, then 185ml of cyclohexane as a solvent and 15ml of 1-hexene as an α -olefin were charged, and the reactor was heated to 180°C. After the heating, ethylene was fed while adjusting the pressure at 2.5MPa. After the system was stabilized, 48.9 mg(equivalent to 0.40mmol, in terms of Al atom) of the above-mentioned compound C, 0.5ml of a mixed heptane solution of dimethylsilylene (tetramethylcyclopentadienyl)(3-tert-butyl-5-methyl-2-phenoxy)titanium dimethoxide (compound 1) and 25 μ mol of triisobutylaluminum (the concentration of compound 1 is 1 μ mol/ml, the concentration of triisobutylaluminum is 50 μ mol/ml, and the molar ratio of Al atom to Ti atom was adjusted at 50)(namely, the compound 1 is 0.5 μ mol, and triisobutylaluminum is 25 μ mol), and 1.5ml of a heptane slurry of N,N'-dimethylanilinium (tetrakispentafluorophenyl) borate(compound 2) (concentration; 1 μ mol/ml) were charged thereto. Polymerization was carried out for 2 minutes. As a result of the polymerization, 6.5g of ethylene-1-hexene copolymer having an [η] of 1.06dl/g, SCB of 35.3, Mw of 63400, Mw/Mn of 3.4 and melting points of 75.2°C and 83.4°C was obtained. Polymerization activity per 1 mol of Ti atom was $1.3\times10^7$ g/mol-Ti per 2 minutes ($3.9\times 10^8$ g/mol-Ti·hr).

Example 21

A 0.4 liter stainless autoclave was replaced with argon, 185ml of cyclohexane as a solvent and 15ml of 1-hexene as an α-olefin were charged and the reactor was heated to 180°C. After the heating, ethylene was fed while adjusting the pressure at 2.5MPa. After the system was stabilized, 0.1mmol of triisobutyl aluminum, 0.2ml(0.1mmol in terms of Al atom) of the slurry of compound B prepared in Example 18 and 0.5 ml of a heptane mixed solution of compound 1 and triisobutyl aluminum (concentration of compound 1; 1 μ mol/ml, concentration of triisobutyl aluminum; 50 μ mol/ml, molar ratio of Al atom to Ti atom (Al/Ti); 50)(namely 0.5 μ mol of compound 1 and 25 μ mol of triisobutyl aluminum), 1.5 ml of a heptane slurry of the compound 2 (concentration; 1 μ mol/ml) were added into the autoclave. Polymerization was carried out for 2 minutes.

As a result of the polymerization, 3.07g of ethylene-1-hexene copolymer having an [η] of 1.11 dl/g, SCB of 30.4, Mw of 52100, Mw/Mn of 2.4, and melting points of 80.8°C and 92.7°C was obtained. Polymerization activity per 1 mol of Ti atom was $6.1 \times 10^6$ g/mol-Ti per 2 minutes($1.83 \times 10^8$ g/mol-Ti-hour).

Example 22

A dropping funnel was set on a 100ml four-necked flask, the flask was replaced with nitrogen and then, a thermometer was set. As a solvent, 8ml of heptane as a solvent and 10mmol of MMAO3A (manufactured by TOSO · AKZO Co., Ltd.; 2 mol/l) were charged in the flask and the mixture was stirred. To the dropping funnel, 72 μ l (4mmol) of water deaerated with nitrogen and 5ml of toluene were charged and slowly added dropwise into the flask. After

completion of the dropwise addition, the dropping funnel was rinsed with 5ml of toluene and the mixture was stirred at 25 to 30°C for 30 minutes. Then, 2ml (toluene solution: 2mol/l) of pentafluorophenol and 10ml of toluene were charged to the dropping funnel, and slowly added dropwise at 25 to 30°C into the flask. After completion of the dropwise addition, the mixture was stirred at 25 to 30°C for 2 hours. A white slurry (concentration:0.67 mol/l in terms of Al atom) (Compound D) was obtained.

A 0.4 liter autoclave reactor equipped with a stirrer was replaced with argon, then 140ml of cyclohexane as a solvent and 60ml of 1-hexene as an α -olefin were charged, and the reactor was heated to 180°C. After the heating, ethylene was fed while adjusting the pressure at 2.5MPa. After the system was stabilized, 1.5 ml of slurry of the compound D (equivalent to 1mmol in terms of Al atom), 1 ml of a toluene solution of bis(n-butyl cyclopentadienyl)zirconium dichloride (concentration; 1 μ mol/ml) and 3 ml of a heptane slurry of the compound 2 (concentration; 1 μ mol/ml) were added into the reactor. Polymerization was carried out for 2 minutes. As a result of polymerization, 5.7g of an ethylene-1-hexene copolymer was obtained. Polymerization activity per 1 mol of Zr atom was 5.7 $\times 10^6$ g/mol-Zr per 2 minutes($1.71 \times 10^8$ g/mol-Zr/hour).

Comparative Example 7

A 0.4 liter stainless autoclave was replaced with argon, 185ml of cyclohexane as a solvent and 15ml of 1-hexene as an α-olefin were charged and the autoclave was heated to 180°C. After the heating, ethylene was fed while adjusting the pressure at 2.5MPa. After the system was stabilized, 0.2 mmol of triisobutylaluminum, 0.5ml of a heptane mixed solution of the compound 1 and triisobutylaluminum ( concentration of the compound 1; 1 μ mol/ml, concentration of triisobutylaluminum; 50 μ mol/ml) (namely, 0.5 μ mol of compound 1 and 25 μ mol of triisobutylaluminum) were added thereinto, and subsequently 1.5 ml of a heptane slurry of the compound 2 (slurry concentration of 1 μ mol/ml) was added. Polymerization was carried out for 2 minutes. As a result of the polymerization, 2.33g of ethylene-1-hexene copolymer having an [η] of 1.04 dl/g and SCB of 31.7, Mw of 56500, Mw/Mn of 1.9 and melting points of 78.3°C and 89.9°C was obtained. Polymerization activity per 1 mol of Ti atom was $4.7 \times 10^6$ g/mol-Ti per 2 minutes($1.41 \times 10^3$ g/mol-Ti·hour).

Comparative Example 8

A dropping funnel was set on a 200ml four-necked flask, the flask was replaced with nitrogen and then, a thermometer was set. 10 ml of heptaneas a solvent and 20mmol of MMAO3A (manufactured by TOSOH-AKZO Co., Ltd.; 2 mol/l) were charged in the flask and the mixture was stirred. To the dropping funnel, 360 μl (20 mmol) of water deaerated with nitrogen and 5ml of toluene were charged and slowly added dropwise into the flask. After completion of the dropwise addition, the dropping funnel was rinsed with 5ml of toluene and the mixture was stirred at 25 to 30°C for 30 minutes. The reaction solution was concentrated under reduced pressure to remove the solvent and obtain a white solid (Compound E).

A 0.4 liter autoclave reactor equipped with a stirrer was replaced with argon, then 185ml of cyclohexane as a solvent and 15ml of 1-hexene as an α -olefin were charged, and the reactor was heated to 180°C. After the heating, ethylene was fed while adjusting the pressure at 2.5MPa. After the system was stabilized, 27.6 mg of the compound E (equivalent to 0.43mmol in terms of Al atom), 0.5ml of a heptane mixed solution of the compound 1 and triisobutylaluminum (concentration of the compound; 1 μ mol/ml, concentration of triisobutylaluminum; 50 μ mol/ml, molar ratio of Al atom to Ti atom; 50) (namely, 0.5 μ mol of compound 1 and 25 μ mol of triisobutylaluminum) and 1.5ml of a heptane slurry of the compound 2 (concentration; 1 μ mol/ml) were added thereinto. Polymerization was carried out for 2 minutes. As a result of the polymerization, 2.45g of ethylene-1-hexene copolymer having an [η] of 0.97 dl/g and SCB of 34.5 and melting points of 76.6°C and 83.8°C was obtained. Polymerization activity per 1 mol of Ti atom was $4.9 \times 10^6$ g/mol-Ti per 2 minutes ($1.47 \times 10^8$ g/mol-Ti/hour).

Example 23

A 0.4 liter autoclave reactor equipped with a stirrer was replaced with argon, 27ml of styrene and 83ml of a purified toluene were charged, and then 0. 8MPa of ethylene was charged therein. Further, 4.4 ml of a toluene solution of MMAO3A and 14 μ l of water were mixed in a 50 ml flask replaced with argon and then stirred for 10 minutes, thereafter, 0.8 ml of a toluene solution of pentafluorophenol(toluene solution: 2 mol/l) was added, and stirred for 10 minutes. The mixture was charged into fore-mentioned autoclave, subsequently 3.2 mg of isopropylidenebis(indenyl)zirconium dichloride dissolved in 6.4 ml of toluene, was charged into the fore-mentioned autoclave and polymerization was carried out at 60°C for 1 hour. Thereafter, thus obtained reaction solution was poured in a mixture of 5 ml of hydrochloric acid (12N) and 1000 ml of methanol and then the resulting precipitate was filtered to obtain a white solid. The solid was washed with methanol and then was dried under reduced pressure to obtain 25.24g of a polymer. This polymer had a Mn of 65,000, Mw/Mn of 2.2, glass transition temperature of 21°C and melting point of 95°C. Comparative Example 9

Example 23 was repeated except that 4.4 ml of the toluene solution of MMAO was charged without mixing with water and pentafluorophenol, to obtain 25.13g of a polymer. This polymer had a Mn of 58,000, Mw/Mn of 2.2, glass transition temperature of 20°C and melting point of 98°C.

Example 24

Example 23 was repeated except that 14 μ l of water was changed to 29 μ l of water, 3.2 mg of isopropylidenebis (indenyl)zirconium dichloride dissolved in 6.4 ml of a purified toluene was changed to 2.9 mg of (tert-butylamide) (tetramethylcyclopentadienyldimethylsilane)titanium dichloride dissolved in 5.8 ml of toluene, to obtain 11.36 g of a polymer. This polymer had a Mn of 798,000, Mw/Mn of 2.0, glass transition temperature of -6°C and melting point of 78°C. This polymer was shaped by preheating the polymer at 180°C for 3 minutes, hot-pressing the pre-heated polymer at a temperature of 180°C under a pressure of 30 to 50 kg/cm$^2$ for 3 minutes. A pressed sheet having a size of 50 mm$\times$ 50 mm$\times$ 0.3 mm had a excellent tensile strength.

Comparative Example 10

Example 24 was repeated except that 4.4 ml of the toluene solution of MMAO was charged without mixing with water and pentafluorophenol, to obtain 13.04g of a polymer. This polymer had a Mn of 67,000, Mw/Mn of 2.2, glass transition temperature of -6°C and melting point of 79°C.

Example 25

A 100 ml stainless autoclave was replaced with argon, 20mmol (in terms of Al atom) MMAO3A of a toluene solution, 11 mmol of water and 4 mmol of pentafluorophenol(toluene solution: 2 mol/l) were simultaneously added and the resulting mixture was stirred for 10 minutes.
In addition, the ratio H2/H1 of the MMAO3A was 0.27 as shown in Fig.1, the ratio M2/M1 of the dried modified aluminum oxy compound was 1.04 as shown in Fig.6.

On the other hand, in an egg-plant type flask of a volume of 25ml in which the atmosphere was replaced with argon, 5 ml of purified toluene and 2.5 μ mol of 2,2'-thiobis(4-methyl-6-tert-butylphenoxy)titanium dichloride were mixed with stirring, and then the resulting solution was charged into the autoclave using a syringe. After the resulting catalyst solution was stirred at room temperature for 10 minutes, 30 g of 1-butene was charged and polymerization was carried out at 40°C for 15 minutes. After completion of the reaction, the unreacted 1-butene was purged out, the content of the autoclave was charged into about 10-fold acidic methanol, the resulting precipitated polymer was separated by filtration and then dried for at 80°C for about 2 hours. As a result, 0.66 g of poly(1-butene) was obtained. Polymerization activity was 1.04 $\times$ 10$^6$ g/mol-Ti/hr. The [η] of poly(1-butene) was 9.21 dl/g.

According to the processes of the present invention, there is provided a modified aluminum oxy compound useful as a component of a polymerization catalyst capable of producing a high molecular weight olefin polymer with a high efficiency, a polymerization catalyst obtained by using the modified aluminum oxy compound, and a process for producing an olefin polymer or an alkenyl aromatic hydrocarbon polymer with the polymerization catalyst, and a copolymer of an alkenyl aromatic hydrocarbon and an olefin.

**Claims**

**1.** A process for producing a modified aluminum oxy compound, which comprises the step of reacting:

- an aluminum oxy compound (a) represented by the following formula (1) or (2),

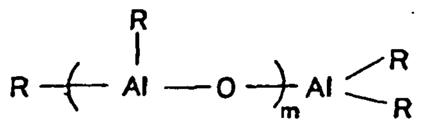

(1)

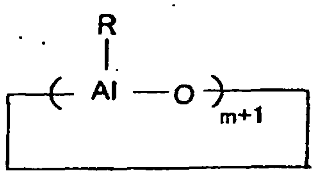

(2)

wherein R is a hydrocarbon group having 1 to 20 carbon atoms; R groups are the same as or different from one another; and m is a number of 1 to 50, which is soluble in an aromatic hydrocarbon or an aliphatic hydrocarbon, and which has a ratio of an intensity at 30 ppm (H2) to an intensity at 10 ppm (H1), H2/H1, in an $^{27}$Al-solid NMR spectrum of less than 0.35;

- water (b) : and
- an organic compound (c) having a hydroxy group,

wherein the molar ratio of the aluminum oxy compound (a) to water (b), (a)/(b), is 1/3 to 1/0.01: and the molar ratio of the aluminum oxy compound (a) to the organic compound (c), (a)/(c), is 1/3 to 1/0.01.

**2.** A process for producing a modified aluminum oxy compound, which comprises the step of reacting:

- an aluminum oxy compound (a'); and
- an organic compound (c) having a hydroxy group,

wherein the aluminum oxy compound (a') has a ratio of an intensity at 30 ppm (L2) to an intensity at 10 ppm (L1), L2/L1, in an $^{27}$Al-solid NMR spectrum of not less than 0.35, and is produced by reacting:

- an aluminum oxy compound (a) represented by the following formula (1) or (2),

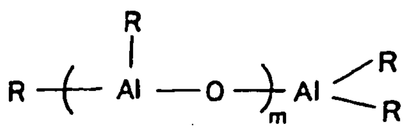

(1)

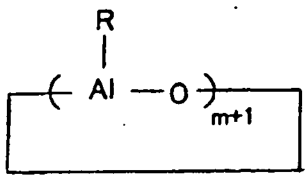

(2)

wherein R is a hydrocarbon group having 1 to 20 carbon atoms; R groups are the same as or different from one another; and m is a number of 1 to 50, which is soluble in an aromatic hydrocarbon or an aliphatic hydrocarbon, and which has a ratio of an intensity at 30 ppm (H2) to an intensity at 10 ppm (H1), H2/H1, in an $^{27}$Al-solid NMR spectrum of less than 0.35; and

- water (b),

wherein the molar ratio of the aluminum oxy compound (a) to water (b), (a)/(b), is 1/3 to 1/0.01; and the molar ratio of the aluminum oxy compound (a) to the organic compound (c), (a)/(c), is 1/3 to 1/0.01.

**3.** The process according to claim 2, wherein the ratio L2/L1, is not less than 0.35 and less than 0.90.

**4.** A process for producing a modified aluminum oxy compound, which comprises the step of reacting:

- an aluminum oxy compounds (a''); and
- water (b),

wherein the aluminum oxy compound (a'') has a ratio of an intensity at 30 ppm (N2) to an intensity at 10 ppm (N1), N2/N1, in an $^{27}$Al-solid NMR spectrum of not less than 0.35, and is produced by reacting:

- an aluminum oxy compound (a) represented by the following formula (1) or (2),

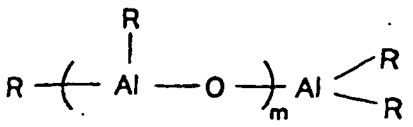

(1)

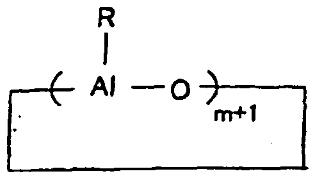

(2)

wherein R is a hydrocarbon group having 1 to 20 carbon atoms; R groups are the same as or different from one another; and m is a number of 1 to 50, which is soluble in an aromatic hydrocarbon or an aliphatic hydrocarbon, and which has a ratio of an intensity at 30 ppm (H2) to an intensity at 10 ppm (H1), H2/H1, in an $^{27}$Al-solid NMR spectrum of less than 0.35; and

- an organic compound(c) having a hydroxy group,

wherein the molar ratio of the aluminum oxy compound (a) to water (b), (a)/(b), is 1/3 to 1/0.01; and the molar ratio of the aluminum oxy compound (a) to the organic compound (c), (a)/(c), is 1/3 to 1/0.01.

**5.** The process according to claim 4, wherein the ratio, N2/N1, is not less than 0.35 and less than 0.65.

**6.** The process according to any one of claims 1 to 5, wherein the organic compound (c) having a hydroxy group is an alcohol compound, phenol compound or silanol compound.

**7.** A process for producing a polymerization catalyst, which comprises the step of contacting:

(A) a modified aluminum oxy compound produced according to the process of any one of claims 1 to 5; with
(B) a transition metal compound.

**8.** A process for producing a polymerization catalyst, which comprises the step of contacting:

(A) a modified aluminum oxy compound produced according to the process of any one of claims 1 to 5;
(B) a transition metal compound; and
(C) an organoaluminum compound.

**9.** A process for producing a polymerization catalyst, which comprises the step of contacting:

(A) a modified aluminum oxy compound produced according to the process of any one of claims 1 to 5;
(B) a transition metal compound;
(C) an organoaluminum compound; and
(D) any one of:

(D1) boron compound represented by the general formula $BQ^1Q^2Q^3$;
(D2) a boron compound represented by the general formula $G^+(BQ^1Q^2Q^3Q^4)^-$; and

(D3) a boron compound represented by the general formula $(L\text{-}H)^+(BQ^1Q^2Q^3Q^4)^-$,

wherein B is a boron atom in the trivalent valence state; $Q^1$ to $Q^4$ are the same as or different from one another, and each thereof is a halogen atom, a hydrocarbon group, a halogenated hydrocarbon group, a substituted silyl group, an alkoxy group or a di-substituted amino group; $G^+$ is an inorganic or organic cation; and $(L\text{-}H)^+$is Brϕnsted acid.

**10.** A process for producing an olefin polymer, which comprises the step of homopolymerizing an olefin, or copolymerizing olefins with a polymerization catalyst produced according to the process of any one of claims 7 to 9.

**11.** The process according to claim 10, wherein the olefin polymer is a copolymer of ethylene and α-olefin having 3 to 20 carbon atoms.

**12.** The process according to claim 10, wherein the olefin polymer is a homopolymer of 1-butene.

**13.** A process for producing an alkenyl aromatic hydrocarbon polymer, which comprises the step of homopolymerizing an alkenyl aromatic hydrocarbon, or copolymerizing an alkenyl aromatic hydrocarbon and an olefin with a polymerization catalyst produced according to the process of any one of claims 7 to 9.

**Patentansprüche**

**1.** Verfahren zur Herstellung einer modifizierten Aluminiumoxyverbindung, umfassend den Schritt des Umsetzens

- einer Aluminiumoxyverbindung (a) der folgenden Formel (1) oder (2),

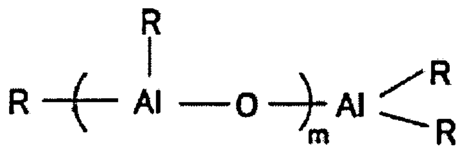

(1)

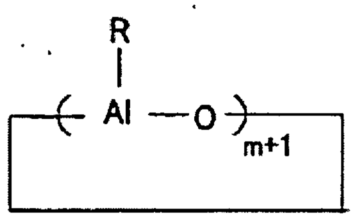

(2)

wobei R ein Kohlenwasserstoffrest mit 1 bis 20 Kohlensstoffatomen ist; die Reste R gleich oder voneinander verschieden sind; und m eine Zahl von 1 bis 50 ist, welche in einem aromatischen Kohlenwasserstoff oder einem aliphatischen Kohlenwasserstoff löslich ist und welche ein Verhältnis einer Intensität bei 30 ppm (H2) zu einer Intensität bei 10 ppm (H1), H2/H1, in einem $^{27}$Al-Feststoff-NMR-Spektrum von weniger als 0,35 aufweist;

- von Wasser (b); und
- einer organischen Verbindung (c) mit einer Hydroxygruppe,

wobei das Molverhältnis der Aluminiumoxyverbindung (a) zu Wasser (b), (a)/(b), 1/3 bis 1/0,01 beträgt; und das Molverhältnis der Aluminiumoxyverbindung (a) zur organischen Verbindung (c), (a)/(c), 1/3 bis 1/0,01 beträgt.

**2.** Verfahren zur Herstellung einer modifizierten Aluminiumoxyverbindung, umfassend den Schritt des Umsetzens

- einer Aluminiumoxyverbindung (a'); und
- einer organischen Verbindung (c) mit einer Hydroxygruppe,

wobei die Aluminiumoxyverbindung (a') ein Verhältnis einer Intensität bei 30 ppm (L2) zu einer Intensität bei 10 ppm (L1), L2/L1, in einem $^{27}$Al-Feststoff-NMR-Spektrum von nicht weniger als 0,35 aufweist, und durch Umsetzen

- einer Aluminiumoxyverbindung (a) der folgenden Formel (1) oder (2),

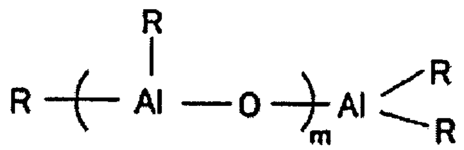

(1)

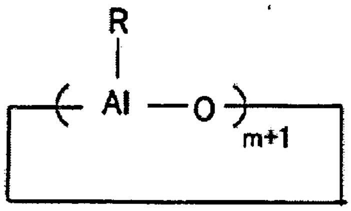

(2)

wobei R ein Kohlenwasserstoffrest mit 1 bis 20 Kohlenstoffatomen ist; die Reste R gleich oder voneinander verschieden sind; und m eine Zahl von 1 bis 50 ist, welche in einem aromatischen Kohlenwasserstoff oder einem aliphatischen Kohlenwasserstoff löslich ist und welche ein Verhältnis einer Intensität bei 30 ppm (H2) zu einer Intensität bei 10 ppm (H1), H2/H1, in einem $^{27}$Al-Feststoff-NMR-Spektrum von weniger als 0,35 aufweist; und

- von Wasser (b),

hergestellt wird,
wobei das Molverhältnis der Aluminiumoxyverbindung (a) zu Wasser (b), (a)/(b), 1/3 bis 1/0,01 beträgt; und das Molverhältnis der Aluminiumoxyverbindung (a) zur organischen Verbindung (c), (a)/(c), 1/3 bis 1/0,01 beträgt.

**3.** Verfahren gemäß Anspruch 2, wobei das Verhältnis L2/L1 nicht weniger als 0,35 und weniger als 0,90 beträgt.

**4.** Verfahren zur Herstellung einer modifizierten Aluminiumoxyverbindung, umfassend den Schritt des Umsetzens

- einer Aluminiumoxyverbindung (a"); und
- von Wasser (b),

wobei die Aluminiumoxyverbindung (a") ein Verhältnis einer Intensität bei 30 ppm (N2) zu einer Intensität bei 10 ppm (N1), N2/N1, in einem $^{27}$Al-Feststoff-NMR-Spektrum von nicht weniger als 0,35 aufweist, und durch Umsetzen

- einer Aluminiumoxyverbindung (a) der folgenden Formel (1) oder (2),

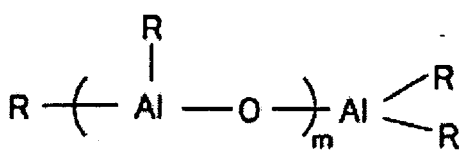

(1)

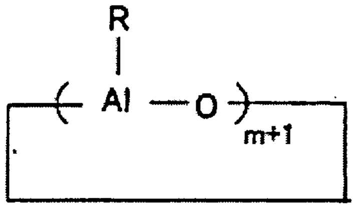

(2)

wobei R ein Kohlenwasserstoffrest mit 1 bis 20 Kohlensstoffatomen ist; die Reste R gleich oder voneinander verschieden sind; und m eine Zahl von 1 bis 50 ist, welche in einem aromatischen Kohlenwasserstoff oder einem aliphatischen Kohlenwasserstoff löslich ist und welche ein Verhältnis einer Intensität bei 30 ppm (H2) zu einer Intensität bei 10 ppm (H1), H2/H1, in einem $^{27}$Al-Feststoff-NMR-Spektrum von weniger als 0,35 aufweist; und

- einer organischen Verbindung (c) mit einer Hydroxygruppe

hergestellt wird,
wobei das Molverhältnis der Aluminiumoxyverbindung (a) zu Wasser (b), (a)/(b), 1/3 bis 1/0,01 beträgt; und das Molverhältnis der Aluminiumoxyverbindung (a) zur organischen Verbindung (c), (a)/(c), 1/3 bis 1/0,01 beträgt.

**5.** Verfahren gemäß Anspruch 4, wobei das Verhältnis N2/N1 nicht weniger als 0,35 und weniger als 0,65 beträgt.

**6.** Verfahren gemäß einem der Ansprüche 1 bis 5, wobei die organische Verbindung (c) mit einer Hydroxygruppe eine Alkoholverbindung, Phenolverbindung oder Silanolverbindung ist.

**7.** Verfahren zur Herstellung eines Polymerisationskatalysators, umfassend den Schritt des Kontaktierens

(A) einer modifizierten Aluminiumoxyverbindung, hergestellt nach dem Verfahren gemäß einem der Ansprüche 1 bis 5; mit
(B) einer Übergangsmetallverbindung.

**8.** Verfahren zur Herstellung eines Polymerisationskatalysators, umfassend den Schritt des Kontaktierens

(A) einer modifizierten Aluminiumoxyverbindung, hergestellt nach dem Verfahren gemäß einem der Ansprüche 1 bis 5;
(B) einer Übergangsmetallverbindung; und
(C) einer Organoaluminiumverbindung.

**9.** Verfahren zur Herstellung eines Polymerisationskatalysators, umfassend den Schritt des Kontaktierens

(A) einer modifizierten Aluminiumoxyverbindung, hergestellt nach dem Verfahren gemäß einem der Ansprüche 1 bis 5;
(B) einer Übergangsmetallverbindung;
(C) einer Organoaluminiumverbindung; und
(D) einer Verbindung aus:

(D1) einer Borverbindung der allgemeinen Formel $BQ^1Q^2Q^3$;
(D2) einer Borverbindung der allgemeinen Formel $G^+(BQ^1Q^2Q^3Q^4)^-$; und
(D3) einer Borverbindung der allgemeinen Formel $(L-H)^+(BQ^1Q^2Q^3Q^4)^-$,

wobei B ein Boratom im dreiwertigen Wertigkeitszustand ist; $Q^1$ bis $Q^4$ gleich oder voneinander verschieden sind und jeweils ein Halogenatom, ein Kohlenwasserstoffrest, ein halogenierter Kohlenwasserstoffrest, ein substituierter Silylrest, ein Alkoxyrest oder eine disubstituierte Aminogruppe sind; $G^+$ ein anorganisches oder organisches Kation ist; und $(L-H)^+$ eine Brønstedsäure ist.

**10.** Verfahren zur Herstellung eines Olefinpolymers, umfassend den Schritt des Homopolymerisierens eines Olefins oder des Copolymerisierens von Olefinen mit einem Polymerisationskatalysator, hergestellt nach dem Verfahren

gemäß einem der Ansprüche 7 bis 9.

**11.** Verfahren gemäß Anspruch 10, wobei das Olefinpolymer ein Copolymer von Ethylen und einem α-Olefin mit 3 bis 20 Kohlenstoffatomen ist.

**12.** Verfahren gemäß Anspruch 10, wobei das Olefinpolymer ein Homopolymer von 1-Buten ist.

**13.** Verfahren zur Herstellung eines alkenylaromatischen Kohlenwasserstoffpolymers, umfassend den Schritt des Homopolymerisierens eines alkenylaromatischen Kohlenwasserstoffs oder des Copolymerisierens eines alkenylaromatischen Kohlenwasserstoffs und eines Olefins mit einem Polymerisationskatalysator, hergestellt nach dem Verfahren gemäß einem der Ansprüche 7 bis 9.

**Revendications**

**1.** Procédé de production d'un composé oxy-aluminium modifié, qui comprend l'étape de faire réagir :

- un composé oxy-aluminium (a), représenté par la formule suivante (1) ou (2).

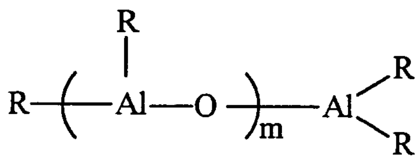

(1)

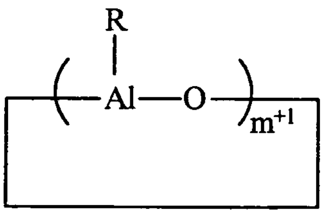

(2)

où R est un groupe hydrocarboné ayant de 1 à 20 atomes de carbone ; les groupes R sont identiques ou différents l'un de l'autre ; et m est un nombre de 1 à 50, qui est soluble dans un hydrocarbure aromatique ou un hydrocarbure aliphatique, et qui a un rapport d'une intensité à 30 ppm (H2) sur une intensité à 10 ppm (H1), H2/H1, dans un spectre RMN $^{27}$Al-solide inférieur à 0,35 ;
- de l'eau (b) ; et
- un composé organique (c) ayant un groupe hydroxyle, où le rapport molaire du composé oxy-aluminium (a) sur l'eau (b), (a)/(b), est de 1/3 à 1/0,01 ; et le rapport molaire du composé oxy-aluminium (a) sur le composé organique (c), (a)/(c), est de 1/3 à 1/0,01.

**2.** Procédé de production d'un composé oxy-aluminium modifié, qui comprend l'étape de faire réagir :

- un composé oxy-aluminium (a') ; et
- un composé organique (c) ayant un groupe hydroxyle, où le composé oxy-aluminium (a') a un rapport d'une intensité à 30 ppm (L2) sur une intensité à 10 ppm (L1), L2/L1, dans un spectre RMN $^{27}$Al-solide inférieur à 0,35, et est produit en faisant réagir :
- un composé oxy-aluminium (a), représenté par la formule suivante (1) ou (2),

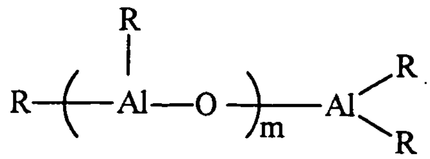

(1)

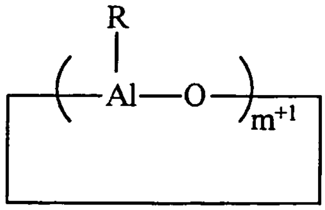

(2)

où R est un groupe hydrocarboné ayant de 1 à 20 atomes de carbone ; les groupes R sont identiques ou différents l'un de l'autre ; et m est un nombre de 1 à 50, qui est soluble dans un hydrocarbure aromatique ou un hydrocarbure aliphatique, et qui a rapport d'une intensité à 30 ppm (H2) sur une intensité à 10 ppm (H1), H2/H1, dans un spectre RMN $^{27}$Al-solide inférieur à 0,35;

- de l'eau (b) ;

où le rapport molaire du composé oxy-aluminium (a) sur l'eau (b), (a)/(b), est de 1/3 à 1/0,01 ; et le rapport molaire du composé oxy-aluminium (a) sur le composé organique (c), (a)/(c), est de 1/3 à 1/0,01.

**3.** Procédé selon la revendication 2, dans lequel le rapport, L2/L1, n'est pas inférieur à 0,35 et est inférieur à 0,90.

**4.** Procédé de production d'un composé oxy-aluminium modifié, qui comprend l'étape de faire réagir :

- un composé oxy-aluminium (a"); et
- de l'eau (b) ;

où le composé oxy-aluminium (a") a un rapport d'une intensité à 30 ppm (N2) sur une intensité à 10 ppm (N1), N2/N1, dans un spectre RMN $^{27}$Al-solide qui n'est pas inférieur à 0,35, et est produit en faisant réagir :

- un composé oxy-aluminium (a), représenté par la formule suivante (1) ou (2),

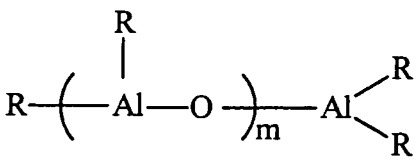

(1)

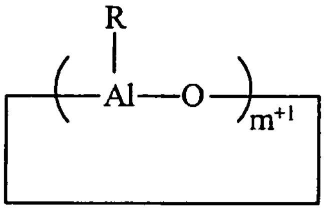

(2) ,

où R est un groupe hydrocarboné ayant de 1 à 20 atomes de carbone ; les groupes R sont identiques ou différents l'un de l'autre ; et m est un nombre de 1 à 50, qui est soluble dans un hydrocarbure aromatique ou un hydrocarbure aliphatique, et qui a rapport d'une intensité à 30 ppm (H2) sur une intensité à 10 ppm (H1), H2/H1, dans un spectre RMN $^{27}$Al-solide inférieur à 0,35 ; et

- un composé organique (c) ayant un groupe hydroxyle, où le rapport molaire du composé oxy-aluminium (a) sur l'eau (b), (a)/(b), est de 1/3 à 1/0,01 ; et le rapport molaire du composé oxy-aluminium (a) sur le composé organique (c), (a)/(c), est de 1/3 à 1/0,01.

**5.** Procédé selon la revendication 4, dans lequel le rapport, N2/N1, n'est pas inférieur à 0,35 et est inférieur à 0,65.

**6.** Procédé selon l'une quelconque des revendications 1 à 5, dans lequel le composé organique (c) qui a un groupe hydroxyle est un composé alcool un composé phénol ou un composé silanol.

**7.** Procédé de production d'un catalyseur de polymérisation qui comprend l'étape de mise en contact :

(A) d'un composé oxy-aluminium modifié produit selon le procédé de l'une quelconque des revendications 1 à 5 ; avec
(B) un composé d'un métal de transition.

**8.** Procédé de production d'un catalyseur de polymérisation qui comprend l'étape de mise en contact :

(A) d'un composé oxy-aluminium modifié produit selon le procédé de l'une quelconque des revendications 1 à 5 ; avec
(B) un composé d'un métal de transition ; et
(C) un composé organique de l'aluminium.

**9.** Procédé de production d'un catalyseur de polymérisation qui comprend l'étape de mise en contact :

(A) d'un composé oxy-aluminium modifié produit selon le procédé de l'une quelconque des revendications 1 à 5 ; avec
(B) un composé d'un métal de transition ;
(C) un composé organique de l'aluminium; et
(D) n'importe lequel de :

(D1) un composé du bore, représenté par la formule générale $BQ^1Q^2Q^3$
(D2) un composé du bore, représenté par la formule générale $G^+(BQ^1Q^2Q^3Q^4)^-$; et
(D3) un composé du bore, représenté par la formule générale $(L\text{-}H)^+(BQ^1Q^2Q^3Q^4)^-$

dans lesquels B est un atome de bore à l'état de valence trivalent ; $Q^1$ à $Q^4$ sont identiques ou différents les uns des autres, et chacun de ceux-ci est un atome d'halogène, un groupe hydrocarboné, un groupe hydrocarboné halogéné, un groupe silyle substitué, un groupe alcoxy, ou un groupe amino di-substitué ; $G^+$ est un cation inorganique ou organique ; et $(L\text{-}H)^+$ est un acide de BrΦnsted.

**10.** Procédé de production d'un polymère d'oléfine, qui comprend l'étape d'homopolymérisation d'une oléfine, ou de copolymérisation d'oléfines avec un catalyseur de polymérisation produit selon le procédé d'une quelconque des revendications 7 à 9.

**11.** Procédé selon la revendication 10, dans lequel le polymère d'oléfine est un copolymère d'éthylène et d'une $\alpha$-oléfine ayant de 3 à 20 atomes de carbone.

**12.** Procédé selon la revendication 10, dans lequel le polymère d'oléfine est un homopolymère de 1-butène.

**13.** Procédé de production d'un polymère d'un hydrocarbure aromatique alcényle, qui comprend l'étape d'homopolymérisation d'un hydrocarbure aromatique alcényle ou de copolymérisation d'un hydrocarbure aromatique alcényle et d'une oléfine avec un catalyseur de polymérisation produit selon le procédé d'une quelconque des revendications 7 à 9.

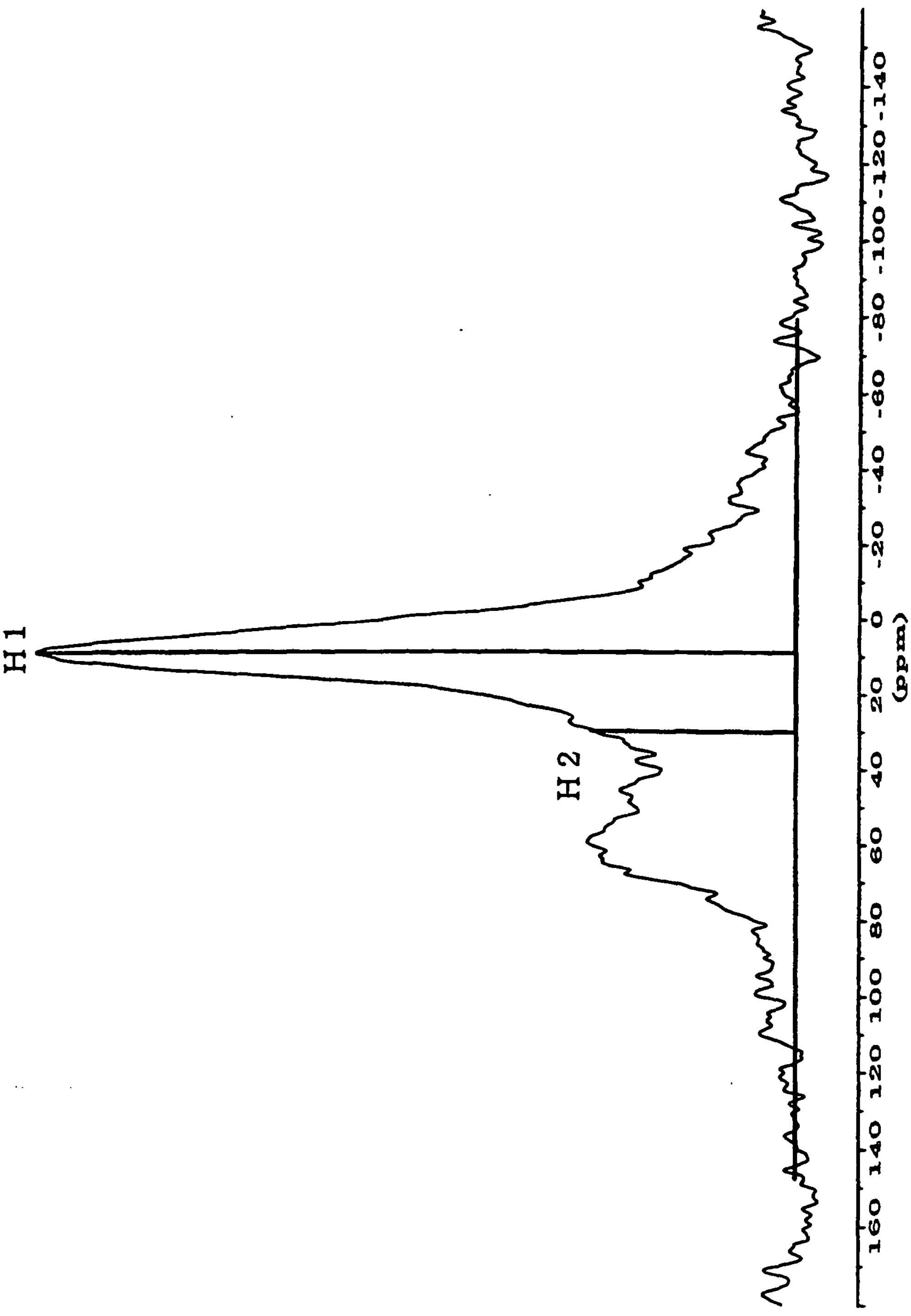


Fig. 1

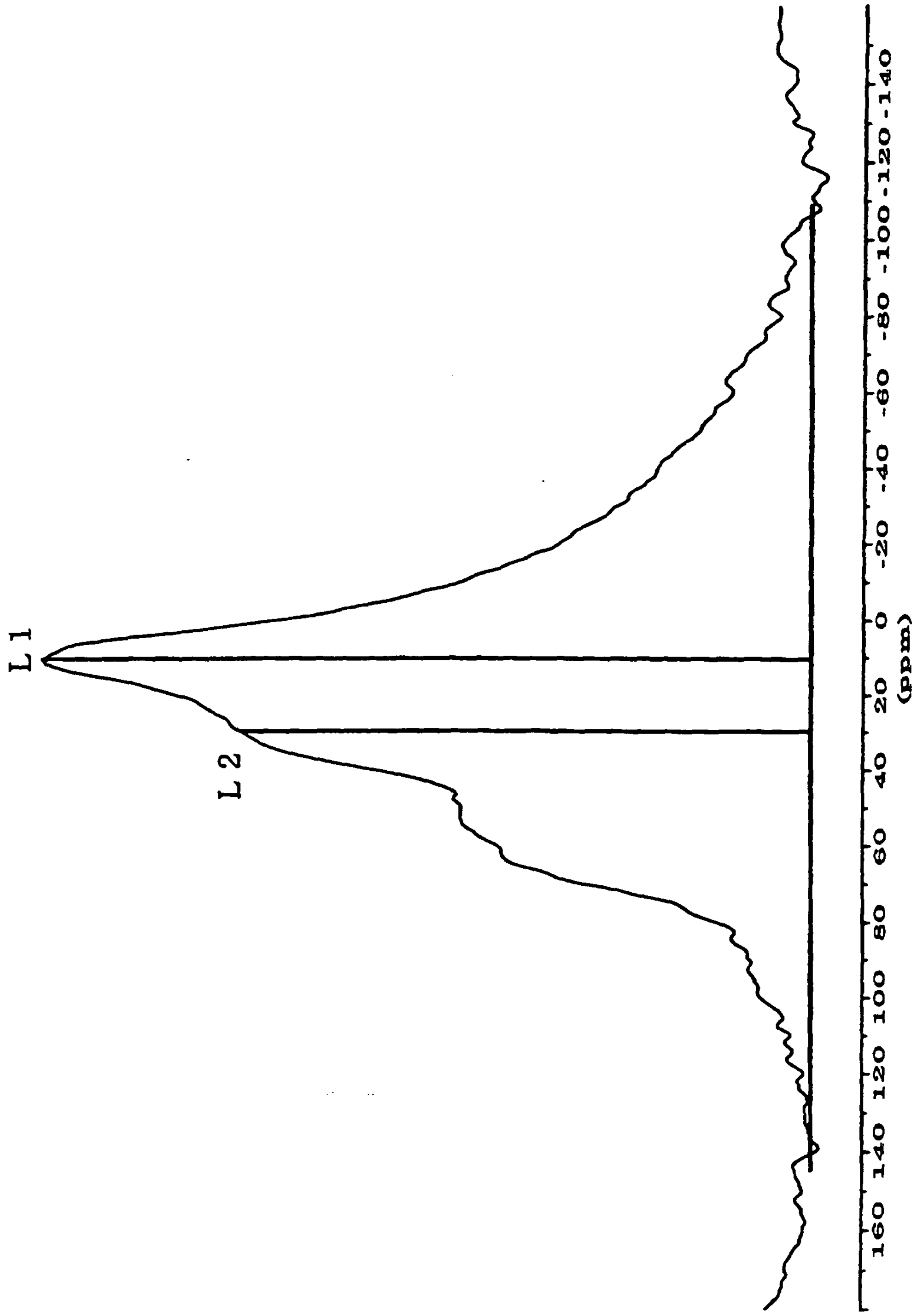


Fig. 2

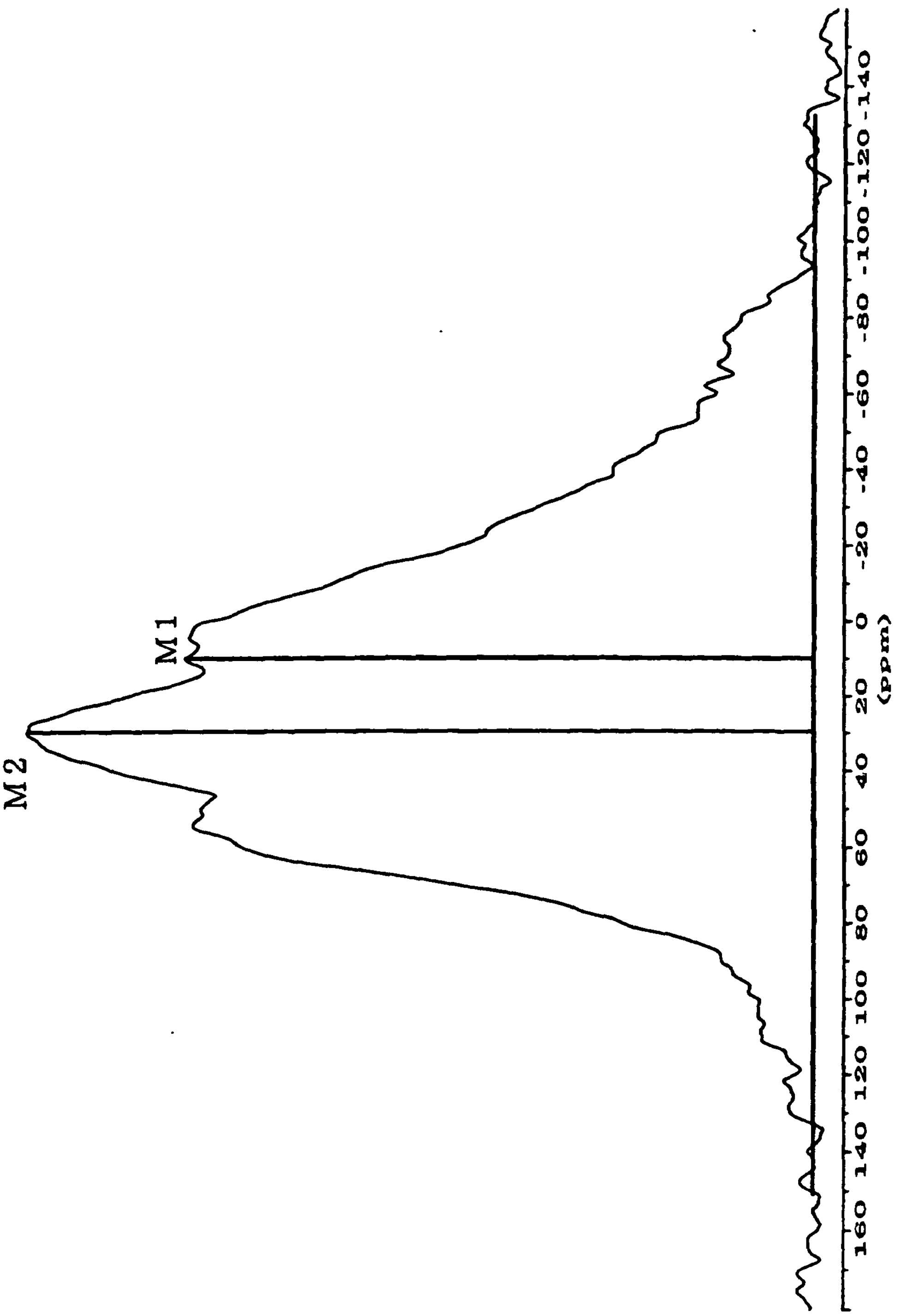


Fig. 3

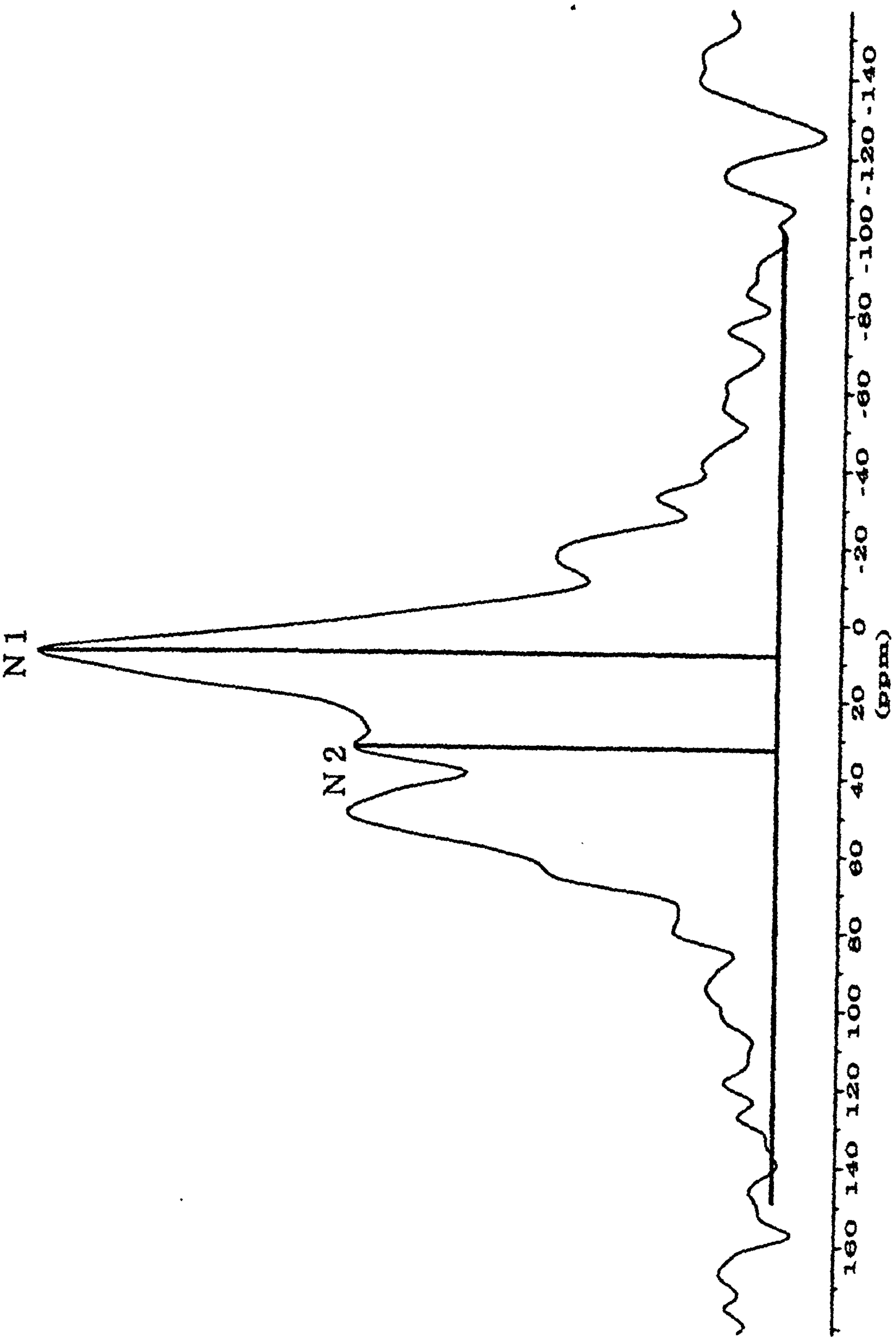


Fig. 4

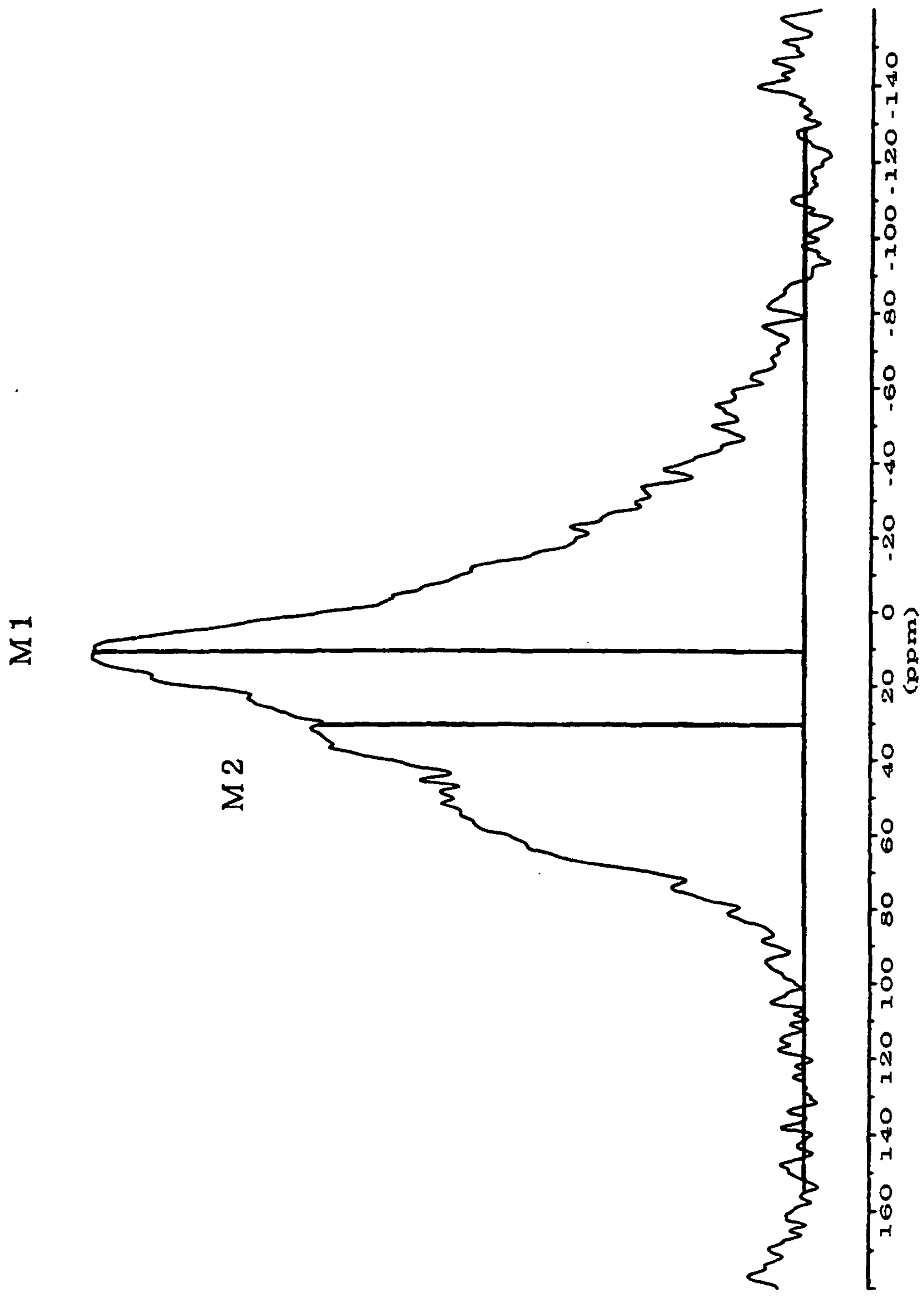


Fig. 5

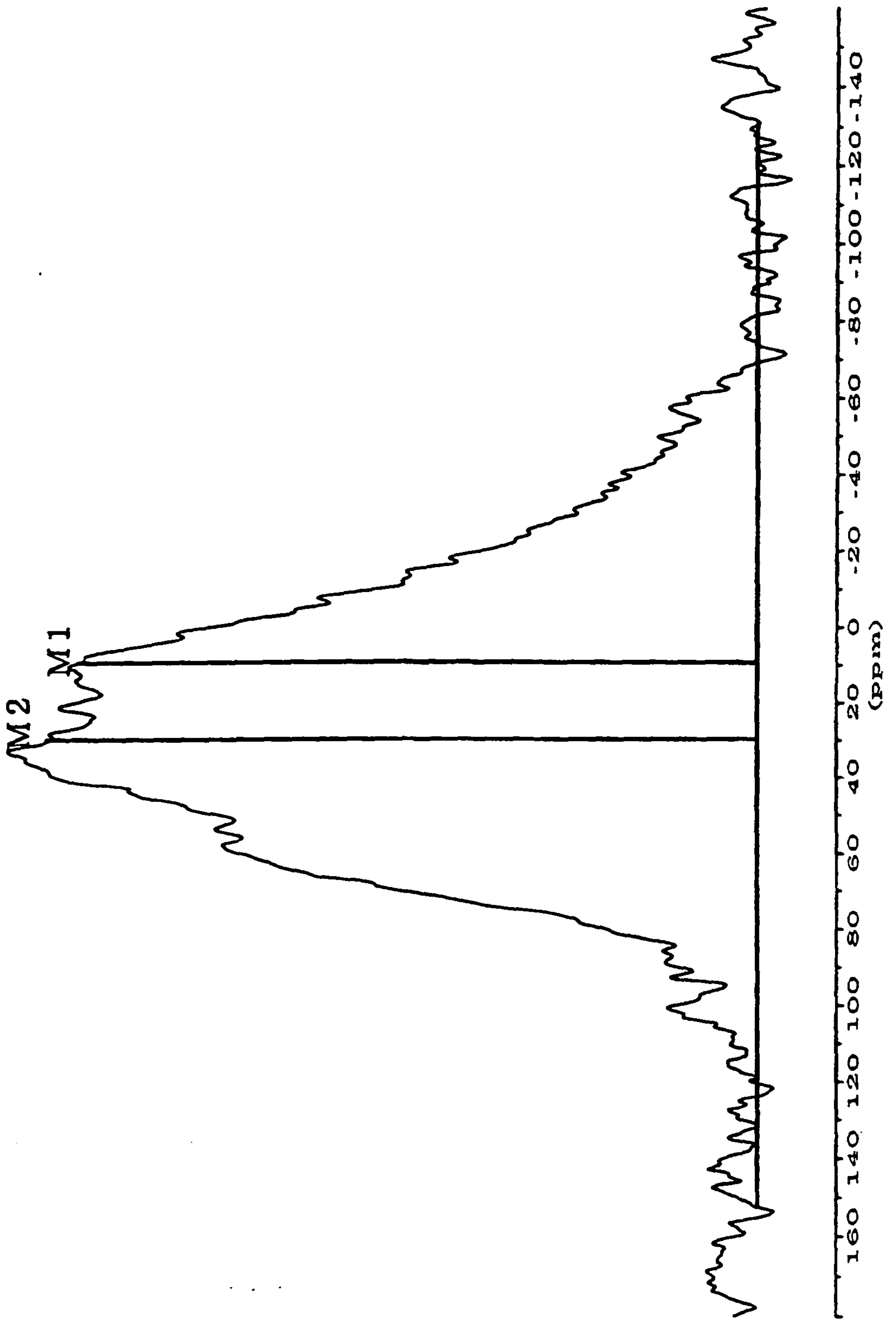


Fig. 6